# EUROPEAN PATENT APPLICATION

(11) **EP 4 202 791 A1**
(43) Date of publication of application: **28.06.2023**
(21) Application number: 21868338.1
(22) Date of filing: 06.08.2021
(51) Int. Cl.: G06N 5/04

(54) **COOPERATIVE REASONING METHOD AND COMMUNICATION APPARATUS**

(30) Priority: 21.09.2020 CN 202010998618
(71) Applicant: Huawei Technologies Co., Ltd., Shenzhen, Guangdong 518129 (CN)
(72) Inventor: YANG, Shuigen, Shenzhen, Guangdong 518129 (CN); ZHOU, Yu, Shenzhen, Guangdong 518129 (CN); JIN, Yinghao, Shenzhen, Guangdong 518129 (CN); QIN, Dongrun, Shenzhen, Guangdong 518129 (CN)
(74) Representative: MERH-IP Matias Erny Reichl Hoffmann Patentanwälte PartG mbB
(86) International application number: PCT/CN2021/111351
(87) International publication number: WO 2022/057510

(57) **Abstract**

A collaborative inference method and a communication apparatus are provided, and relate to the field of communication technologies, to reduce a delay in obtaining a target inference result by a terminal device. The method includes: The terminal device determines a first inference result based on a first machine learning ML submodel, where the first ML submodel is a part of an ML model. The terminal device sends the first inference result. Then, the terminal device receives a target inference result, where the target inference result is an inference result that is of the ML model and that is determined based on the first inference result.

## Description

This application claims priority to Chinese Patent Application No. 202010998618.7, filed with the China National Intellectual Property Administration on September 21, 2020 and entitled "COLLABORATIVE INFERENCE METHOD AND COMMUNICATION APPARATUS", which is incorporated herein by reference in its entirety.

### TECHNICAL FIELD

This application relates to the field of communication technologies, and in particular, to a collaborative inference method and a communication apparatus.

### BACKGROUND

A machine learning (machine learning, ML) model is a mathematical model or signal model composed of training data and expert knowledge, and is used to describe features of a given dataset statistically. When the ML model is introduced to a wireless communication network, the following specific implementations exist.

When a terminal device stores the ML model, the terminal device determines an inference result based on data of the terminal device and the ML model stored in the terminal device, and then performs related processing based on the inference result. For example, in a remote driving scenario, the terminal device is used as an in-vehicle module, an in-vehicle component, an in-vehicle chip, or an in-vehicle unit built in a vehicle. The terminal device adjusts a driving condition of the vehicle based on the obtained inference result.

However, the terminal device does not have a very high computing capability, and cannot satisfy a delay requirement of an actual service. For example, a delay of a remote driving service cannot exceed 5 ms, and when the ML model is implemented as an Alex Network (AlexNet) model, a computing capability of the terminal device is at least 39G floating point operations per second (floating point operations per second, FLOPS). However, the computing capability of the terminal device cannot satisfy the foregoing requirement, and therefore, a delay in obtaining the inference result by the terminal device is increased.

In conclusion, when ML inference is introduced to the wireless communication network, a problem of "a long delay in obtaining an inference result" cannot be resolved for the terminal device.

### SUMMARY

Embodiments of this application provide a collaborative inference method and a communication apparatus, to reduce a delay in obtaining a target inference result by a terminal device, and further improve data security of the terminal device.

To achieve the foregoing objectives, the following technical solutions are used in embodiments of this application.

According to a first aspect, an embodiment of this application provides a collaborative inference method. The method may be performed by a terminal device, or may be performed by a chip applied to a terminal device. The following provides descriptions by using an example in which the method is performed by the terminal device. The method includes: the terminal device determines a first inference result based on a first machine learning ML submodel. The first ML submodel is a part of an ML model. Then, the terminal device sends the first inference result, and then the terminal device receives a target inference result. The target inference result is an inference result that is of the ML model and that is determined based on the first inference result.

In this way, the terminal device performs a partial inference operation by using the first ML submodel, to obtain the first inference result. After the terminal device sends the first inference result, a first network device performs an operation on all information about the first inference result with reference to a target ML submodel, to obtain the target inference result, and then provides the target inference result to the terminal device, so that the terminal device does not need to perform a complete inference operation, thereby reducing a delay in obtaining the target inference result by the terminal device. In addition, the terminal device provides the first network device with an intermediate result calculated by the ML model instead of input data of the ML model, thereby reducing a risk of "data privacy exposure" and improving data security of the terminal device.

In a possible design, when the terminal device accesses a first network device before determining the first inference result, that the terminal device sends the first inference result includes: the terminal device sends all information about the first inference result to the first network device. That the terminal device receives a target inference result includes: the terminal device receives the target inference result from the first network device, where the target inference result is an inference result that is of the ML model and that is determined based on all the information about the first inference result. In other words, if the terminal device has accessed the first network device before performing local inference, the terminal device provides the first inference result to the first network device, and then obtains an inference result from the first network device.

In a possible design, that a terminal device obtains information about a first ML submodel includes: the terminal device receives information about the first ML submodel from the first network device, to enable the terminal device to perform local inference.

In a possible design, the information about the first ML submodel includes first target indication information. The collaborative inference method in this embodiment of this application further includes: the terminal device receives first model information from the first network device, where the first model information includes a correspondence between first candidate indication information and a first segmentation location, at least one piece of first candidate indication information and at least one first segmentation location are provided, one piece of first candidate indication information indicates to segment the ML model, and a location at which the ML model is segmented is a first segmentation location that has a correspondence with the one piece of first candidate indication information. The terminal device determines the first ML submodel based on the first target indication information and the correspondence between the first candidate indication information and the first segmentation location. In other words, the first network device sends the first target indication information (for example, a segmentation option corresponding to the first ML submodel, to indicate a segmentation location of the ML model) to the terminal device, so that the terminal device obtains the first ML submodel, thereby saving transmission resources.

In a possible design, the collaborative inference method in this embodiment of this application further includes: the terminal device sends inference requirement information to the first network device, where the inference requirement information includes an identifier of the ML model and information about a time at which the terminal device obtains the target inference result; and the inference requirement information is for determining the information about the first ML submodel. The inference requirement information includes the information about the time at which the terminal device obtains the target inference result. Therefore, performing local inference by the terminal device based on the first ML submodel after the first ML submodel is determined based on the inference requirement information can satisfy a delay requirement for obtaining the target inference result by the terminal device.

In a possible design, when the terminal device accesses a first network device before sending the first inference result, and accesses a second network device in a process of sending the first inference result by the terminal device, that the terminal device sends the first inference result includes: the terminal device sends first partial information about the first inference result to the first network device, where the first network device is a network device accessed by the terminal device before the terminal device accesses the second network device; and the terminal device sends second partial information about the first inference result to the second network device. That the terminal device receives a target inference result includes: the terminal device receives the target inference result from the second network device, where the target inference result is an inference result that is of the ML model and that is determined based on the first partial information and the second partial information. In other words, after the terminal device sends the first partial information about the first inference result to the first network device, the terminal device accesses the second network device (for example, the terminal device is handed over, that is, handed over from the first network device to the second network device), and the terminal device no longer interacts with the first network device, to send the second partial information about the first inference result to the second network device. In addition, the terminal device obtains the target inference result from the second network device.

In a possible design, when the terminal device accesses a first network device before sending the first inference result, and accesses a second network device in a process of sending the first inference result by the terminal device, that the terminal device sends the first inference result includes: the terminal device sends all information about the first inference result to the first network device, where the first network device is a network device accessed by the terminal device before the terminal device accesses the second network device. That the terminal device receives a target inference result includes: the terminal device receives the target inference result from the second network device, where the target inference result is an inference result that is of the ML model and that is determined based on all the information about the first inference result. In other words, after the terminal device sends the complete first inference result to the first network device, the terminal device accesses the second network device (for example, the terminal device is handed over, that is, handed over from the first network device to the second network device), to obtain the target inference result from the second network device.

In a possible design, when the terminal device accesses a second network device before sending the first inference result, that the terminal device sends the first inference result includes: the terminal device sends all information about the first inference result to the second network device. That the terminal device receives a target inference result includes: the terminal device receives the target inference result from the second network device, where the target inference result is an inference result that is of the ML model and that is determined based on all the information about the first inference result. In other words, after the terminal device obtains the first inference result, the terminal device has accessed the second network device, and the terminal device provides the first inference result to the second network device, and then obtains an inference result from the second network device.

In a possible design, when the terminal device accesses a first network device before determining the first inference result, the collaborative inference method in this embodiment of this application further includes: the terminal device receives information about the first ML submodel from the first network device, to enable the terminal device to perform local inference.

In a possible design, the information about the first ML submodel includes first target indication information. The collaborative inference method in this embodiment of this application further includes: the terminal device receives first model information from the first network device, where the first model information includes a correspondence between first candidate indication information and a first segmentation location, and at least one piece of first candidate indication information and at least one first segmentation location are provided. One piece of first candidate indication information indicates to segment the ML model, and a location at which the ML model is segmented is a first segmentation location that has a correspondence with the one piece of first candidate indication information. The terminal device determines the first ML submodel based on the first target indication information and the correspondence between the first candidate indication information and the first segmentation location. In other words, the first network device sends the first target indication information (that is, a segmentation option corresponding to the first ML submodel, to indicate a segmentation location of the ML model) to the terminal device, so that the terminal device obtains the first ML submodel, thereby saving transmission resources.

In a possible design, the collaborative inference method in this embodiment of this application further includes: the terminal device sends inference requirement information to the first network device, where the inference requirement information includes information about a time at which the terminal device obtains the target inference result, and the inference requirement information is for determining the information about the first ML submodel. The inference requirement information includes the information about the time at which the terminal device obtains the target inference result. Therefore, performing local inference by the terminal device based on the first ML submodel after the first ML submodel is determined based on the inference requirement information can satisfy a delay requirement for obtaining the target inference result by the terminal device.

In a possible design, when the terminal device accesses a second network device before determining the first inference result, that the terminal device sends the first inference result includes: the terminal device sends all information about the first inference result to the second network device. That the terminal device receives a target inference result includes: the terminal device receives the target inference result from the second network device, where the target inference result is an inference result that is of the ML model and that is determined based on all the information about the first inference result.

In a possible design, when the terminal device is handed over from the first network device to access the second network device, the collaborative inference method in this embodiment of this application further includes: the terminal device receives information about the first ML submodel from the first network device, to enable the terminal device to perform local inference.

In a possible design, the information about the first ML submodel includes first target indication information. The collaborative inference method in this embodiment of this application further includes: the terminal device receives first model information from the first network device, where the first model information includes a correspondence between first candidate indication information and a first segmentation location, and at least one piece of first candidate indication information and at least one first segmentation location are provided. One piece of first candidate indication information indicates to segment the ML model, and a location at which the ML model is segmented is a first segmentation location that has a correspondence with the one piece of first candidate indication information. The terminal device determines the first ML submodel based on the first target indication information and the correspondence between the first candidate indication information and the first segmentation location. In other words, the first network device sends the first target indication information to the terminal device, so that the terminal device obtains the first ML submodel, thereby saving transmission resources.

In a possible design, when the terminal device accesses the second network device based on a radio resource control RRC connection reestablishment process or an RRC connection resume process, the collaborative inference method in this embodiment of this application further includes: the terminal device receives information about the first ML submodel from the second network device, to enable the terminal device to perform local inference.

In a possible design, the information about the first ML submodel includes first target indication information. The collaborative inference method in this embodiment of this application further includes: the terminal device receives first model information from the second network device, where the first model information includes a correspondence between first candidate indication information and a first segmentation location, and at least one piece of first candidate indication information and at least one first segmentation location are provided. One piece of first candidate indication information indicates to segment the ML model, and a location at which the ML model is segmented is a first segmentation location that has a correspondence with the one piece of first candidate indication information. The terminal device determines the first ML submodel based on the first target indication information and the correspondence between the first candidate indication information and the first segmentation location. In other words, the second network device sends the first target indication information to the terminal device, so that the terminal device obtains the first ML submodel, thereby saving transmission resources.

In a possible design, the collaborative inference method in this embodiment of this application further includes: the terminal device sends inference requirement information to the first network device, where the inference requirement information includes information about a time at which the terminal device obtains the target inference result, and the inference requirement information is for determining the information about the first ML submodel. The inference requirement information includes the information about the time at which the terminal device obtains the target inference result. Therefore, performing local inference by the terminal device based on the first ML submodel after the first ML submodel is determined based on the inference requirement information can satisfy a delay requirement for obtaining the target inference result by the terminal device.

In a possible design, input data of the first ML submodel is data generated by the terminal device. The terminal device obtains the inference result of the first ML submodel based on the data generated by the terminal device, and further provides an intermediate result calculated by the ML model instead of input data of the ML model to a network device, thereby reducing a risk of "data privacy exposure" and improving data security of the terminal device.

According to a second aspect, an embodiment of this application provides a collaborative inference method. The method may be performed by a first network device, or may be performed by a chip applied to a first network device. The following provides descriptions by using an example in which the method is performed by the first network device. The method includes: the first network device receives first inference information from a terminal device. The first inference information includes all information or partial information of a first inference result, the first inference result is an inference result of a first machine learning ML submodel, and the first ML submodel is a part of an ML model. Then, the first network device sends second inference information to a second network device. The second inference information is determined based on the first inference information, and the second inference information is for determining a target inference result of the ML model, or the second inference information is the target inference result.

In this way, after receiving the first inference information of the terminal device, the first network device sends the second inference information to the second network device, so that the second network device determines the target inference result and then provides the target inference result to the terminal device. Alternatively, the second inference information is the target inference result, and is transmitted to the second network device. The first inference information is determined based on the first inference result. The first inference result is an inference result obtained by the terminal device by performing a partial inference operation by using the first ML submodel, so that the terminal device does not need to perform a complete inference operation, thereby reducing a delay in obtaining the target inference result by the terminal device. In addition, the terminal device provides the first network device with an intermediate result calculated by the ML model instead of input data of the ML model, thereby reducing a risk of "data privacy exposure" and improving data security of the terminal device.

In a possible design, the collaborative inference method in this embodiment of this application further includes: the first network device determines information about the first ML submodel. Then, the first network device sends the information about the first ML submodel to the terminal device, to enable the terminal device to perform an inference operation.

In a possible design, the collaborative inference method in this embodiment of this application further includes: the first network device receives inference requirement information from the terminal device. The inference requirement information includes information about a time at which the terminal device obtains the target inference result. That the first network device determines information about the first ML submodel includes: the first network device determines the information about the first ML submodel based on the inference requirement information.

In other words, the information about the first ML submodel is determined based on the inference requirement information, to satisfy a delay requirement for obtaining the target inference result by the terminal device. When the first ML submodel is determined by the first network device, the terminal device provides the inference requirement information to the first network device.

In a possible design, the information about the first ML submodel includes first target indication information. The collaborative inference method in this embodiment of this application further includes: the first network device sends first model information to the terminal device. The first model information includes a correspondence between first candidate indication information and a first segmentation location. At least one piece of first candidate indication information and at least one first segmentation location are provided, one piece of first candidate indication information indicates to segment the ML model, and a location at which the ML model is segmented is a first segmentation location that has a correspondence with the one piece of first candidate indication information. The first model information and the first target indication information are used by the terminal device to determine the first ML submodel. Compared with transmitting full information about the first ML submodel, transmission resources are saved.

In a possible design, the first inference information includes all information about the first inference result; and the collaborative inference method in this embodiment of this application further includes: the first network device determines the target inference result based on all information about the first inference result and a target ML submodel. The second inference information is the target inference result, and input data of the target ML submodel corresponds to output data of the first ML submodel. In other words, the first network device performs an inference operation based on the first inference result, to obtain the target inference result, and transmits the target inference result to the second network device, to reduce operation amounts of the terminal device and the second network device.

In a possible design, the first inference information includes all information about the first inference result; and the collaborative inference method in this embodiment of this application further includes: the first network device determines a second inference result based on all information about the first inference result and a second ML submodel. The second inference information is the second inference result, and input data of the second ML submodel corresponds to output data of the first ML submodel. In other words, the first network device performs a partial inference operation based on the first inference result, to obtain the second inference result, and transmits the second inference result to the second network device, so that the second network device continues to perform the inference operation based on the second inference result, thereby reducing an operation amount of the terminal device.

In a possible design, the collaborative inference method in this embodiment of this application further includes: the first network device sends information about a target ML submodel to the second network device. Input data of the target ML submodel corresponds to output data of the second ML submodel, and the target ML, submodel is used by the second network device to determine the target inference result.

When the first network device performs local inference to obtain the second inference result but does not obtain the target inference result, the first network device further provides the target ML submodel to the second network device, so that the second network device performs inference based on the target ML submodel to obtain the target inference result.

In a possible design, the first inference information is the same as the second inference information. The collaborative inference method in this embodiment of this application further includes: the first network device sends information about a target ML submodel to the second network device. Input data of the target ML submodel corresponds to output data of the first ML submodel, and the target ML submodel is used by the second network device to determine the target inference result.

When the first network device forwards the first inference information to the second network device, the first network device further provides the information about the target ML submodel to the second network device, so that the second network device performs inference based on the target ML submodel to obtain the target inference result.

In a possible design, the information about the target ML submodel includes second target indication information. The collaborative inference method in this embodiment of this application further includes: the first network device receives second model information from the second network device. The second model information includes a correspondence between second candidate indication information and a second segmentation location, at least one piece of second candidate indication information and at least one second segmentation location are provided, one piece of second candidate indication information indicates to segment the ML model, and a location at which the ML model is segmented is a second segmentation location that has a correspondence with the one piece of second candidate indication information. The first network device determines the second target indication information from the second candidate indication information based on the target ML submodel and the correspondence between the second candidate indication information and the second segmentation location. Compared with transmitting full information about the target ML submodel, transmission resources are saved.

According to a third aspect, an embodiment of this application provides a collaborative inference method. The method may be performed by a second network device, or may be performed by a chip applied to a second network device. The following provides descriptions by using an example in which the method is performed by the second network device. The method includes: the second network device obtains third inference information. The third inference information is determined based on all information about a first inference result, the first inference result is an inference result obtained after an operation is performed based on a first machine learning ML submodel, and the first ML submodel is a part of an ML model. Then, the second network device sends a target inference result to a terminal device. The target inference result is an inference result that is of the ML model and that is determined based on the third inference information.

In this way, the third inference information is determined based on all information about the first inference result, and the first inference result is an inference result obtained by the terminal device by performing a partial inference operation by using the first ML submodel. Therefore, after the second network device obtains the third inference information, the second network device can send the target inference result to the terminal device. The target inference result is determined based on the third inference information, so that the terminal device does not need to perform a complete inference operation, thereby reducing a delay in obtaining the target inference result by the terminal device. In addition, the terminal device provides the first network device with an intermediate result calculated by the ML model instead of input data of the ML model, thereby reducing a risk of "data privacy exposure" and improving data security of the terminal device.

In a possible design, when the terminal device accesses the second network device before the second network device obtains the third inference information, the third inference information is all information about the first inference result. That a second network device obtains third inference information includes: the second network device receives all information about the first inference result from the terminal device. The collaborative inference method in this embodiment of this application further includes: the second network device determines the target inference result based on all information about the first inference result and a target ML submodel, where input data of the target ML submodel corresponds to output data of the first ML submodel. In other words, when the terminal device accesses the second network device, the second network device obtains all information about the first inference result from the terminal device, to perform a network-side operation to obtain the target inference result, thereby reducing an operation amount of the terminal device.

In a possible design, that the second network device sends information about the first ML submodel includes: the second network device sends the information about the first ML submodel to the terminal device, to enable the terminal device to perform an inference operation.

In a possible design, the collaborative inference method in this embodiment of this application further includes: the second network device receives inference requirement information from the terminal device, where the inference requirement information includes information about a time at which the terminal device obtains the target inference result. The second network device determines the information about the first ML submodel based on the inference requirement information. The inference requirement information includes the information about the time at which the terminal device obtains the target inference result. Therefore, performing local inference by the terminal device based on the first ML submodel after the first ML submodel is determined based on the inference requirement information can satisfy a delay requirement for obtaining the target inference result by the terminal device.

In a possible design, when the terminal device accesses the second network device in a process of obtaining the third inference information by the second network device, the third inference information is all information about the first inference result. That a second network device obtains third inference information includes: the second network device receives first partial information about the first inference result from the terminal device; and the second network device receives second partial information about the first inference result from the first network device. The collaborative inference method in this embodiment of this application further includes: the second network device determines the target inference result based on the first partial information, the second partial information, and a target ML submodel, where input data of the target ML submodel corresponds to output data of the first ML submodel.

In other words, after the terminal device sends the first partial information about the first inference result to the first network device, the terminal device accesses the second network device, and the terminal device no longer interacts with the first network device, to send the second partial information about the first inference result to the second network device. In addition, the second network device can further obtain the first partial information about the first inference result from the first network device, to perform network-side inference to obtain the target inference result.

In a possible design, when the terminal device accesses the second network device after the second network device obtains the third inference information, the third inference information is all information about the first inference result. That a second network device obtains third inference information includes: the second network device receives all information about the first inference result from the first network device. The collaborative inference method in this embodiment of this application further includes: the second network device determines the target inference result based on all information about the first inference result and a target ML submodel, where input data of the target ML submodel corresponds to output data of the first ML submodel.

In other words, after the terminal device sends the complete first inference result to the first network device, the terminal device accesses the second network device. In this case, the second network device obtains all information about the first inference result from the first network device, to perform local inference, to obtain the target inference result.

In a possible design, when the terminal device accesses the second network device from a first network device before the second network device obtains the third inference information, the third inference information is all information about the first inference result. That a second network device obtains third inference information includes: the second network device receives all information about the first inference result from the terminal device. The collaborative inference method in this embodiment of this application further includes: the second network device determines the target inference result based on all information about the first inference result and a target ML submodel, where input data of the target ML submodel corresponds to output data of the first ML submodel.

In other words, after the terminal device obtains the first inference result, the terminal device has accessed the second network device, and the terminal device provides the first inference result to the second network device, so that the second network device performs network-side inference to obtain the target inference result.

In a possible design, the third inference information is a second inference result, the second inference result is an inference result that is of a second ML submodel and that is determined based on all the information about the first inference result, and input data of the second ML submodel corresponds to output data of the first ML submodel. That a second network device obtains third inference information includes: the second network device receives the second inference result from the first network device. The collaborative inference method in this embodiment of this application further includes: the second network device determines the target inference result based on the second inference result and a target ML submodel, where input data of the target ML submodel corresponds to output data of the second ML submodel.

In other words, when the first network device performs the inference operation to obtain the second inference result, the second network device obtains the second inference result from the first network device, and continues to perform the inference operation based on the second inference result, to obtain the target inference result.

In a possible design, when the terminal device accesses the second network device after the second network device obtains information about the target ML submodel, that the second network device obtains the information about the target ML submodel includes: the second network device receives the information about the target ML submodel from the first network device, to perform an inference operation to obtain a target inference result.

In a possible design, the information about the target ML submodel includes second target indication information. The collaborative inference method in this embodiment of this application further includes: the second network device sends second model information to the first network device, where the second model information includes a correspondence between second candidate indication information and a second segmentation location; at least one piece of second candidate indication information and at least one second segmentation location are provided, one piece of second candidate indication information indicates to segment the ML model, and a location at which the ML model is segmented is a second segmentation location that has a correspondence with the one piece of second candidate indication information, and the second model information is used by the first network device to determine the second target indication information.

In other words, when the first network device indicates the target ML submodel to the second network device by using the second target indication information, the second network device provides the second model information to the first network device, so that the first network device determines the second target indication information from the second model information, thereby saving transmission resources.

In a possible design, the third inference information is the target inference result. That a second network device obtains third inference information includes: the second network device receives the target inference result from a first network device.

In other words, when the first network device performs the inference operation to obtain the inference result, the second network device obtains the target inference result from the first network device.

In a possible design, that the second network device sends information about the first ML submodel includes: the second network device sends the information about the first ML submodel to the terminal device; or sending, by the second network device, the information about the first ML submodel to the first network device.

When the terminal device accesses the second network device based on an RRC connection resume process or an RRC connection reestablishment process, the second network device sends the information about the first ML submodel to the terminal device, so that the terminal device performs an inference operation. When the terminal device accesses the second network device based on a handover process, the second network device sends the information about the first ML submodel to the first network device, so that the first network device provides the information about the first ML submodel to the terminal device, and the terminal device performs an inference operation.

In a possible design, the collaborative inference method in this embodiment of this application further includes: the second network device receives inference requirement information from the first network device, where the inference requirement information includes information about a time at which the terminal device obtains the target inference result. The second network device determines the information about the first ML submodel based on the inference requirement information. The second network device obtains the inference requirement information from the first network device. The inference requirement information includes the information about the time at which the terminal device obtains the target inference result. Therefore, performing local inference by the terminal device based on the first ML submodel after the first ML submodel is determined based on the inference requirement information can satisfy a delay requirement for obtaining the target inference result by the terminal device.

According to a fourth aspect, an embodiment of this application provides a collaborative inference method. The method may be performed by a terminal device, or may be performed by a chip applied to a terminal device. The following provides descriptions by using an example in which the method is performed by the terminal device. When an access network device is implemented in a segmentation architecture, the method includes: the terminal device determines a first inference result based on a first machine learning ML submodel. The first ML submodel is a part of an ML model. Then, the terminal device sends the first inference result, and then the terminal device receives a target inference result. The target inference result is an inference result that is of the ML model and that is determined based on the first inference result.

In this way, the terminal device performs a partial inference operation by using the first ML submodel, to obtain the first inference result. After the terminal device sends the first inference result, a first distributed unit DU performs an operation on all information about the first inference result with reference to a target ML submodel, to obtain the target inference result, and then provides the target inference result to the terminal device, so that the terminal device does not need to perform a complete inference operation, thereby reducing a delay in obtaining the target inference result by the terminal device. In addition, the terminal device provides the first DU with an intermediate result calculated by the ML model instead of input data of the ML model, thereby reducing a risk of " data privacy exposure" and improving data security of the terminal device.

In a possible design, when the terminal device accesses the first DU before determining the first inference result, that the terminal device sends the first inference result includes: the terminal device sends all information about the first inference result to the first DU. That the terminal device receives a target inference result includes: the terminal device receives the target inference result from the first DU, where the target inference result is an inference result that is of the ML model and that is determined based on all the information about the first inference result. In other words, the terminal device has accessed the first DU before performing local inference, and the terminal device provides the first inference result to the first DU, and then obtains an inference result from the first DU.

In a possible design, that a terminal device obtains information about a first ML submodel includes: the terminal device receives information about the first ML submodel from the first DU, to enable the terminal device to perform local inference.

In a possible design, the information about the first ML submodel includes first target indication information. The collaborative inference method in this embodiment of this application further includes: the terminal device receives first model information from the first DU, where the first model information includes a correspondence between first candidate indication information and a first segmentation location, at least one piece of first candidate indication information and at least one first segmentation location are provided, one piece of first candidate indication information indicates to segment the ML model, and a location at which the ML model is segmented is a first segmentation location that has a correspondence with the one piece of first candidate indication information. The terminal device determines the first ML submodel based on the first target indication information and the correspondence between the first candidate indication information and the first segmentation location. In other words, the first DU sends the first target indication information (that is, a segmentation option corresponding to the first ML submodel, to indicate a segmentation location of the ML model) to the terminal device, so that the terminal device obtains the first ML submodel, thereby saving transmission resources.

In a possible design, the collaborative inference method in this embodiment of this application further includes: the terminal device sends inference requirement information to the first DU, where the inference requirement information includes an identifier of the ML model and information about a time at which the terminal device obtains the target inference result, and the inference requirement information is for determining the information about the first ML submodel. The inference requirement information includes the information about the time at which the terminal device obtains the target inference result. Therefore, performing local inference by the terminal device based on the first ML submodel after the first ML submodel is determined based on the inference requirement information can satisfy a delay requirement for obtaining the target inference result by the terminal device.

In a possible design, when the terminal device accesses a first DU before sending the first inference result, and accesses a second DU in a process of sending the first inference result by the terminal device, that the terminal device sends the first inference result includes: the terminal device sends first partial information about the first inference result to the first DU, where the first DU is a DU accessed by the terminal device before the terminal device accesses the second DU; and the terminal device sends second partial information about the first inference result to the second DU. That the terminal device receives a target inference result includes: the terminal device receives the target inference result from the second DU, where the target inference result is an inference result that is of the ML model and that is determined based on the first partial information and the second partial information. In other words, after the terminal device sends the first partial information about the first inference result to the first DU, the terminal device accesses the second DU (for example, the terminal device is handed over, that is, handed over from the first DU to the second DU), and the terminal device no longer interacts with the first DU, to send the second partial information about the first inference result to the second DU. In addition, the terminal device obtains the target inference result from the second DU.

In a possible design, when the terminal device accesses a first DU before sending the first inference result, and the terminal device accesses a second DU after sending the first inference result and before receiving the target inference result, that the terminal device sends the first inference result includes: the terminal device sends all information about the first inference result to the first DU, where the first DU is a DU accessed by the terminal device before the terminal device accesses the second DU. That the terminal device receives a target inference result includes: the terminal device receives the target inference result from the second DU, where the target inference result is an inference result that is of the ML model and that is determined based on all the information about the first inference result. In other words, after the terminal device sends the complete first inference result to the first DU, the terminal device accesses the second DU (for example, the terminal device is handed over, that is, handed over from the first DU to the second DU), to obtain the target inference result from the second DU.

In a possible design, when the terminal device accesses a second DU before sending the first inference result, that the terminal device sends the first inference result includes: the terminal device sends all information about the first inference result to the second DU. That the terminal device receives a target inference result includes: the terminal device receives the target inference result from the second DU, where the target inference result is an inference result that is of the ML model and that is determined based on all the information about the first inference result. In other words, after the terminal device obtains the first inference result, the terminal device has accessed the second DU, and the terminal device provides the first inference result to the second DU, and then obtains an inference result from the second DU.

In a possible design, when the terminal device accesses the first DU before determining the first inference result, the collaborative inference method in this embodiment of this application further includes: the terminal device receives information about the first ML submodel from the first DU, to enable the terminal device to perform local inference.

In a possible design, the information about the first ML submodel includes first target indication information. The collaborative inference method in this embodiment of this application further includes: the terminal device receives first model information from the first DU, where the first model information includes a correspondence between first candidate indication information and a first segmentation location, and at least one piece of first candidate indication information and at least one first segmentation location are provided. One piece of first candidate indication information indicates to segment the ML model, and a location at which the ML model is segmented is a first segmentation location that has a correspondence with the one piece of first candidate indication information. The terminal device determines the first ML submodel based on the first target indication information and the correspondence between the first candidate indication information and the first segmentation location. In other words, the first DU sends the first target indication information (that is, a segmentation option corresponding to the first ML submodel, to indicate a segmentation location of the ML model) to the terminal device, so that the terminal device obtains the first ML submodel, thereby saving transmission resources.

In a possible design, the collaborative inference method in this embodiment of this application further includes: the terminal device sends inference requirement information to the first DU, where the inference requirement information includes information about a time at which the terminal device obtains the target inference result, and the inference requirement information is for determining the information about the first ML submodel. The inference requirement information includes the information about the time at which the terminal device obtains the target inference result. Therefore, performing local inference by the terminal device based on the first ML submodel after the first ML submodel is determined based on the inference requirement information can satisfy a delay requirement for obtaining the target inference result by the terminal device.

In a possible design, when the terminal device accesses the second DU before determining the first inference result, that the terminal device sends the first inference result includes: the terminal device sends all information about the first inference result to the second DU. That the terminal device receives a target inference result includes: the terminal device receives the target inference result from the second DU, where the target inference result is an inference result that is of the ML model and that is determined based on all the information about the first inference result.

In a possible design, the collaborative inference method in this embodiment of this application further includes: the terminal device receives information about the first ML submodel from the first DU. When the terminal device is handed over from the first DU to access the second DU, the terminal device obtains the information about the first ML submodel by using the first DU.

In a possible design, the information about the first ML submodel includes first target indication information. The collaborative inference method in this embodiment of this application further includes: the terminal device receives first model information from the first DU, where the first model information includes a correspondence between first candidate indication information and a first segmentation location, and at least one piece of first candidate indication information and at least one first segmentation location are provided. One piece of first candidate indication information indicates to segment the ML model, and a location at which the ML model is segmented is a first segmentation location that has a correspondence with the one piece of first candidate indication information. The terminal device determines the first ML submodel based on the first target indication information and the correspondence between the first candidate indication information and the first segmentation location. In other words, the first DU sends the first target indication information (that is, a segmentation option corresponding to the first ML submodel, to indicate a segmentation location of the ML model) to the terminal device, so that the terminal device obtains the first ML submodel, thereby saving transmission resources.

In a possible design, the collaborative inference method in this embodiment of this application further includes: the terminal device sends inference requirement information to the first DU, where the inference requirement information includes information about a time at which the terminal device obtains the target inference result, and the inference requirement information is for determining the information about the first ML submodel. The inference requirement information includes the information about the time at which the terminal device obtains the target inference result. Therefore, performing local inference by the terminal device based on the first ML submodel after the first ML submodel is determined based on the inference requirement information can satisfy a delay requirement for obtaining the target inference result by the terminal device.

In a possible design, input data of the first ML submodel is data generated by the terminal device. The terminal device obtains the inference result of the first ML submodel based on the data generated by the terminal device, and further provides an intermediate result calculated by the ML model instead of input data of the ML model to a DU, thereby reducing a risk of "data privacy exposure" and improving data security of the terminal device.

According to a fifth aspect, an embodiment of this application provides a collaborative inference method. The method may be performed by a first DU, or may be performed by a chip applied to a first DU. The following provides descriptions by using an example in which the method is performed by the first DU. The method includes: the first DU receives first inference information from a terminal device. The first inference information includes all information or partial information of a first inference result, the first inference result is an inference result of a first machine learning ML submodel, and the first ML submodel is a part of an ML model. Then, the first DU sends second inference information to a second DU. The second inference information is determined based on the first inference information, and the second inference information is for determining a target inference result of the ML model, or the second inference information is the target inference result.

In this way, after receiving the first inference information of the terminal device, the first DU sends the second inference information to the second DU, so that the second DU determines the target inference result and then provides the target inference result to the terminal device. Alternatively, the second inference information is the target inference result, and is transmitted to the second DU. The first inference information is determined based on the first inference result. The first inference result is an inference result obtained by the terminal device by performing a partial inference operation by using the first ML submodel, so that the terminal device does not need to perform a complete inference operation, thereby reducing a delay in obtaining the target inference result by the terminal device. In addition, the terminal device provides the first DU with an intermediate result calculated by the ML model instead of input data of the ML model, thereby reducing a risk of "data privacy exposure" and improving data security of the terminal device.

In a possible design, the collaborative inference method in this embodiment of this application further includes: the first DU determines information about the first ML submodel. Then, the first DU sends the information about the first ML submodel to the terminal device, to enable the terminal device to perform an inference operation.

In a possible design, the collaborative inference method in this embodiment of this application further includes: the first DU receives inference requirement information from the terminal device. The inference requirement information includes information about a time at which the terminal device obtains the target inference result. When the first DU determines the first ML submodel, the first DU determines the first ML submodel based on the inference requirement information.

In other words, the first ML submodel is determined based on the inference requirement information, to satisfy a delay requirement for obtaining the target inference result by the terminal device. When the first ML submodel is determined by the first DU, the terminal device provides the inference requirement information to the first DU.

In a possible design, the information about the first ML submodel includes first target indication information. The collaborative inference method in this embodiment of this application further includes: the first network device sends first model information to the terminal device. The first model information includes a correspondence between first candidate indication information and a first segmentation location. At least one piece of first candidate indication information and at least one first segmentation location are provided, one piece of first candidate indication information indicates to segment the ML model, and a location at which the ML model is segmented is a first segmentation location that has a correspondence with the one piece of first candidate indication information. The first model information and the first target indication information are used by the terminal device to determine the first ML submodel. Compared with transmitting full information about the first ML submodel, transmission resources are saved.

In a possible design, the first inference information includes all information about the first inference result; and the collaborative inference method in this embodiment of this application further includes: the first DU determines the target inference result based on all information about the first inference result and a target ML submodel. The second inference information is the target inference result, and input data of the target ML submodel corresponds to output data of the first ML submodel. In other words, the first DU performs an inference operation based on the first inference result, to obtain the target inference result, and transmits the target inference result to the second DU, to reduce operation amounts of the terminal device and the second DU.

In a possible design, the first inference information includes all information about the first inference result; and the collaborative inference method in this embodiment of this application further includes: the first DU determines a second inference result based on all information about the first inference result and a second ML submodel. The second inference information is the second inference result, and input data of the second ML submodel corresponds to output data of the first ML submodel. In other words, the first DU performs a partial inference operation based on the first inference result, to obtain the second inference result, and transmits the second inference result to the second DU, so that the second DU continues to perform the inference operation based on the second inference result, thereby reducing an operation amount of the terminal device.

In a possible design, the collaborative inference method in this embodiment of this application further includes: the first DU sends information about a target ML submodel to the second DU. Input data of the target ML submodel corresponds to output data of the second ML submodel, and the target ML submodel is used by the second DU to determine the target inference result.

When the first DU performs local inference to obtain the second inference result but does not obtain the target inference result, the first DU further provides the information about the target ML submodel to the second DU, so that the second DU performs inference based on the target ML submodel to obtain the target inference result.

In a possible design, the first inference information is the same as the second inference information. The collaborative inference method in this embodiment of this application further includes: the first DU sends information about a target ML submodel to the second DU. Input data of the target ML submodel corresponds to output data of the first ML submodel, and the target ML submodel is used by the second DU to determine the target inference result.

When the first DU forwards the first inference information to the second DU, the first DU further provides the information about the target ML submodel to the second DU, so that the second DU performs inference based on the target ML submodel to obtain the target inference result.

In a possible design, the information about the target ML submodel includes second target indication information. The collaborative inference method in this embodiment of this application further includes: the first DU receives second model information from the second DU. The second model information includes a correspondence between second candidate indication information and a second segmentation location, at least one piece of second candidate indication information and at least one second segmentation location are provided, one piece of second candidate indication information indicates to segment the ML model, and a location at which the ML model is segmented is a second segmentation location that has a correspondence with the one piece of second candidate indication information. The first DU determines the second target indication information from the second candidate indication information based on the target ML submodel and the correspondence between the second candidate indication information and the second segmentation location. Compared with transmitting full information about the target ML submodel, transmission resources are saved.

According to a sixth aspect, an embodiment of this application provides a collaborative inference method. The method may be performed by a second DU, or may be performed by a chip applied to a second DU. The following provides descriptions by using an example in which the method is performed by the second DU. The method includes: the second DU obtains third inference information. The third inference information is determined based on all information about a first inference result, the first inference result is an inference result obtained after a terminal device performs an operation based on a first machine learning ML submodel, and the first ML submodel is a part of an ML model. Then, the second DU sends a target inference result to the terminal device. The target inference result is an inference result that is of the ML model and that is determined based on the third inference information.

In this way, the third inference information is determined based on all information about the first inference result, and the first inference result is an inference result obtained by the terminal device by performing a partial inference operation by using the first ML submodel. Therefore, after the second DU obtains the third inference information, the second DU can send the target inference result to the terminal device. The target inference result is determined based on the third inference information, so that the terminal device does not need to perform a complete inference operation, thereby reducing a delay in obtaining the target inference result by the terminal device. In addition, the terminal device provides the first DU with an intermediate result calculated by the ML model instead of input data of the ML model, thereby reducing a risk of "data privacy exposure" and improving data security of the terminal device.

In a possible design, when the terminal device accesses the second DU before the second DU obtains the third inference information, the third inference information is all information about the first inference result. That the second DU obtains the third inference information includes: the second DU receives all information about the first inference result from the terminal device. The collaborative inference method in this embodiment of this application further includes: the second DU determines the target inference result based on all information about the first inference result and a target ML submodel, where input data of the target ML submodel corresponds to output data of the first ML submodel. In other words, when the terminal device accesses the second DU, the second DU obtains all information about the first inference result from the terminal device, to perform an operation to obtain the target inference result, thereby reducing an operation amount of the terminal device.

In a possible design, the sending, by the second DU, information about the first ML submodel includes: the second DU sends the information about the first ML submodel to the terminal device, to enable the terminal device to perform an inference operation.

In a possible design, the collaborative inference method in this embodiment of this application further includes: the second DU receives inference requirement information from the terminal device, where the inference requirement information includes information about a time at which the terminal device obtains the target inference result. The second DU determines the information about the first ML submodel based on the inference requirement information.

In a possible design, when the terminal device accesses the second DU in a process of obtaining the third inference information by the second DU, the third inference information is all information about the first inference result. That the second DU obtains the third inference information includes: the second DU receives first partial information about the first inference result from the terminal device; and receiving, by the second DU, second partial information about the first inference result from the first DU. The collaborative inference method in this embodiment of this application further includes: the second DU determines the target inference result based on the first partial information, the second partial information, and a target ML submodel, where input data of the target ML submodel corresponds to output data of the first ML submodel. The inference requirement information includes the information about the time at which the terminal device obtains the target inference result. Therefore, performing local inference by the terminal device based on the first ML submodel after the first ML submodel is determined based on the inference requirement information can satisfy a delay requirement for obtaining the target inference result by the terminal device.

In a possible design, when the terminal device accesses the second DU after the second DU obtains the third inference information, the third inference information is all information about the first inference result. That the second DU obtains the third inference information includes: the second DU receives all information about the first inference result from the first DU. The collaborative inference method in this embodiment of this application further includes: the second DU determines the target inference result based on all information about the first inference result and a target ML submodel, where input data of the target ML submodel corresponds to output data of the first ML submodel.

In other words, after the terminal device sends the first partial information about the first inference result to the first DU, the terminal device accesses the second DU, and the terminal device no longer interacts with the first DU, to send the second partial information about the first inference result to the second DU. In addition, the second DU can further obtain the first partial information about the first inference result from the first DU, to perform network-side inference to obtain the target inference result.

In a possible design, when the terminal device accesses the second DU from the first DU before the second DU obtains the third inference information, the third inference information is all information about the first inference result. That the second DU obtains the third inference information includes: the second DU receives all information about the first inference result from the terminal device. The collaborative inference method in this embodiment of this application further includes: the second DU determines the target inference result based on all information about the first inference result and a target ML submodel, where input data of the target ML submodel corresponds to output data of the first ML submodel.

In other words, after the terminal device obtains the first inference result, the terminal device has accessed the second DU, and the terminal device provides the first inference result to the second DU, so that the second DU performs network-side inference to obtain the target inference result.

In a possible design, the third inference information is a second inference result, the second inference result is an inference result that is of a second ML submodel and that is determined based on all the information about the first inference result, and input data of the second ML submodel corresponds to output data of the first ML submodel. That the second DU obtains the third inference information includes: the second DU receives the second inference result from the first DU. The collaborative inference method in this embodiment of this application further includes: the second DU determines the target inference result based on the second inference result and a target ML submodel, where input data of the target ML submodel corresponds to output data of the second ML submodel.

In other words, when the first DU performs the inference operation to obtain the second inference result, the second DU obtains the second inference result from the first DU, and continues to perform the inference operation based on the second inference result, to obtain the target inference result.

In a possible design, when the terminal device accesses the second DU after the second DU obtains information about the target ML submodel, that the second DU obtains information about the target ML submodel includes: the second DU receives the information about the target ML submodel from the first DU, to perform an inference operation to obtain a target inference result.

In a possible design, the information about the target ML submodel includes second target indication information. The collaborative inference method in this embodiment of this application further includes: the second DU sends second model information to the first DU, where the second model information includes a correspondence between second candidate indication information and a second segmentation location; at least one piece of second candidate indication information and at least one second segmentation location are provided, one piece of second candidate indication information indicates to segment the ML model, and a location at which the ML model is segmented is a second segmentation location that has a correspondence with the one piece of second candidate indication information; and the second model information is used by the first DU to determine the second target indication information.

In other words, when the first DU indicates the target ML submodel to the second DU by using the second target indication information, the second DU provides the second model information to the first DU, so that the first DU determines the second target indication information from the second model information, thereby saving transmission resources.

In a possible design, the third inference information is the target inference result. That the second DU obtains the third inference information includes: the second DU receives the target inference result from the first DU.

In other words, when the first DU performs the inference operation to obtain the inference result, the second DU obtains the target inference result from the first DU.

In a possible design, that the second DU sends information about the first ML submodel includes: the second DU sends the information about the first ML submodel to the first DU.

When the terminal device accesses the second DU based on a handover process, the second DU sends the information about the first ML submodel to the first DU, so that the first DU provides the information about the first ML submodel to the terminal device, and the terminal device performs an inference operation.

In a possible design, the collaborative inference method in this embodiment of this application further includes: the second DU receives inference requirement information from the first DU, where the inference requirement information includes information about a time at which the terminal device obtains the target inference result. The second DU determines the information about the first ML submodel based on the inference requirement information. The second DU obtains the inference requirement information from the first DU. The inference requirement information includes the information about the time at which the terminal device obtains the target inference result. Therefore, performing local inference by the terminal device based on the first ML submodel after the first ML submodel is determined based on the inference requirement information can satisfy a delay requirement for obtaining the target inference result by the terminal device.

According to a seventh aspect, an embodiment of this application provides a communication apparatus. The communication apparatus includes units configured to perform the steps in the first aspect or any possible design of the first aspect, or the fourth aspect or any possible design of the fourth aspect. The communication apparatus may be the terminal device in the first aspect or any possible design of the first aspect, or a chip that implements a function of the terminal device; or the communication apparatus may be the terminal device in the fourth aspect or any possible design of the fourth aspect, or a chip that implements a function of the terminal device. The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

According to an eighth aspect, an embodiment of this application provides a communication apparatus, including: a processor and a memory. The memory is configured to store computer instructions, and when the processor executes the instructions, the communication apparatus is enabled to perform the method according to the first aspect or any possible design of the first aspect, or the fourth aspect or any possible design of the fourth aspect. The communication apparatus may be the terminal device in the first aspect or any possible design of the first aspect, or a chip that implements a function of the terminal device; or the communication apparatus may be the terminal device in the fourth aspect or any possible design of the fourth aspect, or a chip that implements a function of the terminal device.

According to a ninth aspect, an embodiment of this application provides a communication apparatus, including a processor. The processor is configured to: after being coupled to a memory and reading instructions in the memory, perform, according to the instructions, the method according to the first aspect or any possible design of the first aspect, or the fourth aspect or any possible design of the fourth aspect. The communication apparatus may be the terminal device in the first aspect or any possible design of the first aspect, or a chip that implements a function of the terminal device; or the communication apparatus may be the terminal device in the fourth aspect or any possible design of the fourth aspect, or a chip that implements a function of the terminal device.

According to a tenth aspect, an embodiment of this application provides a chip, including a logic circuit and an input/output interface. The input/output interface is configured to communicate with a module other than the chip. For example, the input/output interface outputs first inference information, or the input/output interface inputs a target inference result. The logic circuit is configured to run a computer program or instructions, to implement the collaborative inference method provided in the first aspect or any possible design of the first aspect, or the fourth aspect or any possible design of the fourth aspect. The chip may be a chip that implements a function of the terminal device in the first aspect or any possible design of the first aspect; or the chip may be a chip that implements a function of the terminal device in the fourth aspect or any possible design of the fourth aspect.

According to an eleventh aspect, an embodiment of this application provides a communication apparatus. The communication apparatus includes units configured to perform the steps in the second aspect or any possible design of the second aspect. The communication apparatus may be the first network device in the second aspect or any possible design of the second aspect, or a chip that implements a function of the first network device. The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

According to a twelfth aspect, an embodiment of this application provides a communication apparatus, including: a processor and a memory. The memory is configured to store computer instructions, and when the processor executes the instructions, the communication apparatus is enabled to perform the method according to the second aspect or any possible design of the second aspect. The communication apparatus may be the first network device in the second aspect or any possible design of the second aspect, or a chip that implements a function of the first network device.

According to a thirteenth aspect, an embodiment of this application provides a communication apparatus, including a processor. The processor is configured to: after being coupled to a memory and reading instructions in the memory, perform, according to the instructions, the method according to the second aspect or any possible design of the second aspect. The communication apparatus may be the first network device in the second aspect or any possible design of the second aspect, or a chip that implements a function of the first network device.

According to a fourteenth aspect, an embodiment of this application provides a chip, including a logic circuit and an input/output interface. The input/output interface is configured to communicate with a module other than the chip. For example, the input/output interface inputs first inference information, or the input/output interface outputs second inference information. The logic circuit is configured to run a computer program or instructions, to implement the collaborative inference method provided in the second aspect or any possible design of the second aspect. The chip may be a chip that implements a function of the first network device in the second aspect or any possible design of the second aspect.

According to a fifteenth aspect, an embodiment of this application provides a communication apparatus. The communication apparatus includes units configured to perform the steps in the third aspect or any possible design of the third aspect. The communication apparatus may be the second network device in the third aspect or any possible design of the third aspect, or a chip that implements a function of the second network device. The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

According to a sixteenth aspect, an embodiment of this application provides a communication apparatus, including a processor and a memory. The memory is configured to store computer instructions, and when the processor executes the instructions, the communication apparatus is enabled to perform the method according to the third aspect or any possible design of the third aspect. The communication apparatus may be the second network device in the third aspect or any possible design of the third aspect, or a chip that implements a function of the second network device.

According to a seventeenth aspect, an embodiment of this application provides a communication apparatus, including a processor. The processor is configured to: after being coupled to a memory and reading instructions in the memory, perform, according to the instructions, the method according to the third aspect or any possible design of the third aspect. The communication apparatus may be the second network device in the third aspect or any possible design of the third aspect, or a chip that implements a function of the second network device.

According to an eighteenth aspect, an embodiment of this application provides a chip, including a logic circuit and an input/output interface. The input/output interface is configured to communicate with a module other than the chip. For example, the input/output interface outputs a target inference result. The logic circuit is configured to run a computer program or instructions, to implement the collaborative inference method provided in the third aspect or any possible design of the third aspect. The chip may be a chip that implements a function of the second network device in the third aspect or any possible design of the third aspect.

According to a nineteenth aspect, an embodiment of this application provides a communication apparatus. The communication apparatus includes units configured to perform the steps in the fifth aspect or any possible design of the fifth aspect. The communication apparatus may be the first DU in the fifth aspect or any possible design of the fifth aspect, or a chip that implements a function of the first DU. The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

According to a twentieth aspect, an embodiment of this application provides a communication apparatus, including: a processor and a memory. The memory is configured to store computer instructions, and when the processor executes the instructions, the communication apparatus is enabled to perform the method according to the fifth aspect or any possible design of the fifth aspect. The communication apparatus may be the first DU in the fifth aspect or any possible design of the fifth aspect, or a chip that implements a function of the first DU.

According to a twenty-first aspect, an embodiment of this application provides a communication apparatus, including a processor. The processor is configured to: after being coupled to a memory and reading instructions in the memory, perform, according to the instructions, the method according to the fifth aspect or any possible design of the fifth aspect. The communication apparatus may be the first DU in the fifth aspect or any possible design of the fifth aspect, or a chip that implements a function of the first DU.

According to a twenty-second aspect, an embodiment of this application provides a chip, including a logic circuit and an input/output interface. The input/output interface is configured to communicate with a module other than the chip. For example, the input/output interface inputs first inference information, or the input/output interface outputs second inference information. The logic circuit is configured to run a computer program or instructions, to implement the collaborative inference method provided in the fifth aspect or any possible design of the fifth aspect. The chip may be a chip that implements a function of the first DU in the fifth aspect or any possible design of the fifth aspect.

According to a twenty-third aspect, an embodiment of this application provides a communication apparatus. The communication apparatus includes units configured to perform the steps in the sixth aspect or any possible design of the sixth aspect. The communication apparatus may be the second DU in the sixth aspect or any possible design of the sixth aspect, or a chip that implements a function of the second DU. The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

According to a twenty-fourth aspect, an embodiment of this application provides a communication apparatus, including: a processor and a memory. The memory is configured to store computer instructions, and when the processor executes the instructions, the communication apparatus is enabled to perform the method according to the sixth aspect or any possible design of the sixth aspect. The communication apparatus may be the second DU in the sixth aspect or any possible design of the sixth aspect, or a chip that implements a function of the second DU.

According to a twenty-fifth aspect, an embodiment of this application provides a communication apparatus, including: a processor. The processor is configured to: after being coupled to a memory and reading instructions in the memory, perform, according to the instructions, the method according to the sixth aspect or any possible design of the sixth aspect. The communication apparatus may be the second DU in the sixth aspect or any possible design of the sixth aspect, or a chip that implements a function of the second DU.

According to a twenty-sixth aspect, an embodiment of this application provides a chip, including a logic circuit and an input/output interface. The input/output interface is configured to communicate with a module other than the chip. For example, the input/output interface outputs a target inference result. The logic circuit is configured to run a computer program or instructions, to implement the collaborative inference method provided in the sixth aspect or any possible design of the sixth aspect. The chip may be a chip that implements a function of the second DU in the sixth aspect or any possible design of the sixth aspect.

According to a twenty-seventh aspect, an embodiment of this application provides a computer-readable storage medium. The computer-readable storage medium stores instructions, and when the instructions are run on a computer, the computer is enabled to perform the collaborative inference method according to any one of the foregoing aspects.

According to a twenty-eighth aspect, an embodiment of this application provides a computer program product including instructions. When the computer program product runs on a computer, the computer is enabled to perform the collaborative inference method according to any one of the foregoing aspects.

According to a twenty-ninth aspect, an embodiment of this application provides a circuit system. The circuit system includes a processing circuit, and the processing circuit is configured to perform the collaborative inference method according to any one of the foregoing aspects.

According to a thirtieth aspect, an embodiment of this application provides a collaborative inference system. The system includes a first network device and a second network device.

For technical effects brought by any design of the seventh aspect to the thirtieth aspect, refer to beneficial effects in the corresponding method provided above. Details are not described herein again.

### BRIEF DESCRIPTION OF DRAWINGS

FIG. 1 is a schematic diagram of a neural network according to an embodiment of this application;
FIG. 2 is a schematic diagram of a network architecture according to an embodiment of this application;
FIG. 3 is a schematic diagram of a distributed network architecture according to an embodiment of this application;
FIG. 4 is a schematic flowchart of a first collaborative inference method according to an embodiment of this application;
FIG. 5 is a schematic flowchart of configuring a first computing radio bearer according to an embodiment of this application;
FIG. 6 is a schematic flowchart of transmitting a first machine learning submodel according to an embodiment of this application;
FIG. 7a is a schematic layered diagram of a communication protocol according to an embodiment of this application;
FIG. 7b is a schematic layered diagram of another communication protocol according to an embodiment of this application;
FIG. 8 is a schematic flowchart of a second collaborative inference method according to an embodiment of this application;
FIG. 9a is a schematic flowchart of configuring a target computing radio bearer according to an embodiment of this application;
FIG. 9b is a schematic flowchart of transmitting a target machine learning submodel according to an embodiment of this application;
FIG. 9c is a schematic layered diagram of still another communication protocol according to an embodiment of this application;
FIG. 9d is a schematic layered diagram of still another communication protocol according to an embodiment of this application;
FIG. 10 is another schematic flowchart of configuring a target computing radio bearer according to an embodiment of this application;
FIG. 11 is a schematic flowchart of a third collaborative inference method according to an embodiment of this application;
FIG. 12 is a schematic flowchart of a fourth collaborative inference method according to an embodiment of this application;
FIG. 13 is another schematic flowchart of transmitting a first machine learning submodel according to an embodiment of this application;
FIG. 14 is still another schematic flowchart of configuring a target computing radio bearer according to an embodiment of this application;
FIG. 15 is a schematic layered diagram of still another communication protocol according to an embodiment of this application;
FIG. 16 is a schematic diagram of a structure of a communication apparatus according to an embodiment of this application; and
FIG. 17 is a schematic diagram of a structure of another communication apparatus according to an embodiment of this application.

### DESCRIPTION OF EMBODIMENTS

In the specification and accompanying drawings of this application, the terms "first", "second", and the like are intended to distinguish between different objects or distinguish between different processing of a same object, but do not indicate a particular order of the objects. In addition, the terms "including", "having", or any other variant thereof in descriptions of this application are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device. In embodiments of this application, "a plurality of" includes two or more. In embodiments of this application, terms such as "example" or "for example" are for representing giving an example, an illustration, or a description. Any embodiment or design scheme described as an "example" or "for example" in embodiments of this application should not be explained as being more preferred or having more advantages than another embodiment or design scheme. Exactly, use of the term "example", "for example", or the like is intended to present a related concept in a specific manner. In embodiments of this application, "transmission" includes "sending" or "receiving".

Technical terms used in this application are first described.

### 1. Handover

In a wireless communication system, when a terminal device moves from one cell to another cell, or due to a network reason, a service load adjustment, a device fault, or the like, the terminal device may be handed over from a source cell to a target cell, to ensure continuity of communication between the terminal device and a network. The foregoing process is referred to as "handover". An access network device communicating with the terminal device before the handover is described as a source (source) access network device. An access network device communicating with the terminal device after the handover is described as a target (target) access network device. In embodiments of this application, the source access network device is described as a "first network device", and the target access network device is described as a "second network device".

### 2. Radio resource control (radio resource control, RRC) inactive (inactive) mode and RRC connected (connected) mode

Each of the RRC inactive mode and the RRC connected mode is for describing a state of the terminal device.

For the terminal device in the RRC inactive mode, a user plane bearer of an air interface is suspended (suspend), and a user plane bearer and a control plane bearer between an access network device and a core network device are still maintained. The terminal device stores an access stratum context, and supports cell reselection. When the terminal device initiates a call or service request, the user plane bearer of the air interface needs to be activated, and the existing user plane bearer and control plane bearer between the access network device and the core network device are reused.

For the terminal device in the RRC connected mode, the control plane bearer of the air interface has been established.

An access network device that switches the terminal device from the RRC connected mode to the RRC inactive mode or an access network device that stores an access stratum context of the terminal device is described as a source access network device. An access network device reselected by the terminal device in the RRC inactive mode or an access network device newly accessed by the terminal device is described as a target access network device. In embodiments of this application, the source access network device is described as a "first network device", and the target access network device is described as a "second network device".

### 3. RRC connection resume (resume)

When the terminal device is in the RRC inactive mode, and the terminal device needs to perform radio access network based notification area (radio access network based notification area, RNA) update, the terminal device sends an RRC connection resume request (RRC resume request) message to the second network device. Correspondingly, the second network device receives the RRC connection resume request message from the terminal device. Then, the second network device sends information such as a radio bearer configuration to the terminal device, so that the terminal device performs data transmission. The foregoing process is "RRC connection resume".

### 4. RRC connection reestablishment (reestablishment)

An obj ective of RRC connection reestablishment is that when an exception occurs on an RRC connection, the terminal device in the RRC connected mode can restore the RRC connection again, to reduce impact of the exception on communication. When at least one of the following cases occurs, the terminal device initiates RRC connection reestablishment: first, a radio link fails; second, an integrity check fails; and third, an RRC connection reconfiguration fails.

### 5. ML model

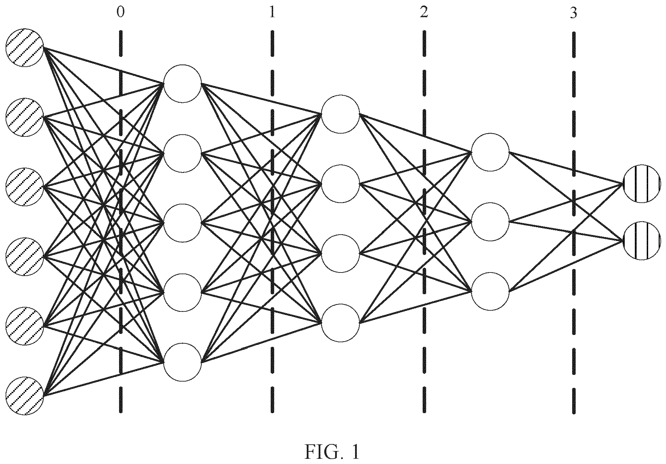

The ML model is also referred to as an artificial intelligence (artificial intelligence, AI) model. The ML model is a mathematical model or signal model composed of training data and expert knowledge, and is used to describe features of a given dataset statistically. The ML model includes a supervised learning (supervised learning) model, an unsupervised learning (unsupervised learning) model, a reinforcement learning (reinforcement learning) model, a neural network (neural network) model, and the like. For example, FIG. 1 shows a typical neural network model. The neural network model includes a plurality of neurons (neuron), as shown by circles in FIG. 1. The neural network model includes one input layer (as shown by circles filled with slashes in FIG. 1), three hidden layers (as shown by blank circles in FIG. 1), and one output layer (as shown by circles filled with vertical lines in FIG. 1). The input layer receives a signal that is input from the outside, the hidden layer and the output layer process the input signal at different stages, and the output layer outputs a final result. Each layer of the neural network model includes at least one neuron. Each neuron receives input signals transferred from other neurons, and the input signals are transferred by using a weighted connection. The neuron first compares a total received input value with a threshold of the neuron, and then processing is performed by using an activation function to generate an output of the neuron. In addition, precision of the ML model can be improved, or a capacity of the ML model can be increased by increasing data of the hidden layer in the ML model and/or increasing a quantity of neurons of the hidden layer. Only the neural network model is used as an example to describe a structure of the ML model. The supervised learning model, the unsupervised learning model, the reinforcement learning model, or the like has a same structure as that of the neural network model shown in FIG. 1, that is, each includes an input layer, a hidden layer, and an output layer. For "supervised learning model, unsupervised learning model, or reinforcement learning model", connection relationships between adjacent layers of different models are different. In addition, the hidden layer may also be described as a "middle layer".

Generally, ML is divided into a training part and an inference (inference) part. The training part refers to a process of performing learning based on a specific training dataset to obtain an ML model for executing a specific task. The inference part refers to a process of calculating input data by the ML model to obtain an inference result.

When an ML model is introduced to a wireless communication network, the following two possible implementations are shown in a related technology:
Implementation 1: A terminal device stores an ML model. The terminal device determines an inference result based on data of the terminal device and the ML model stored in the terminal device.
Implementation 2: A network device stores an ML model. The terminal device sends input data to the network device. The network device determines an inference result based on the input data provided by the terminal device and the ML model stored in the network device. The network device sends the inference result to the terminal device, so that the terminal device obtains the inference result.

However, in the foregoing implementation 1, the terminal device needs to have a very high computing capability, to satisfy a delay requirement of an actual service. In the foregoing implementation 2, the terminal device does not need to perform ML inference, and a requirement on a computing capability of the terminal device is low. However, the terminal device provides input data to the network device, and the input data belongs to data of the terminal device. As a result, data privacy of the terminal device is exposed.

In conclusion, when ML inference is introduced to the wireless communication network, a problem of "a long delay in obtaining an inference result" cannot be resolved for the terminal device. In addition, some related technologies still cannot solve the problem of "data privacy exposure".

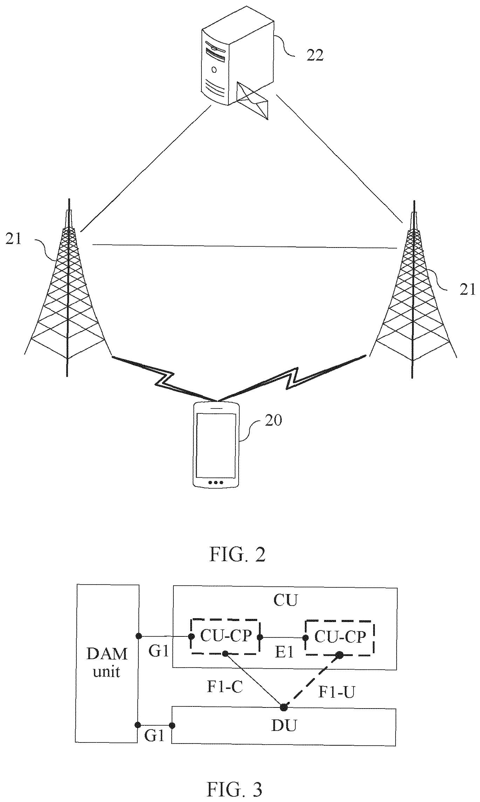

In view of this, embodiments of this application provide a collaborative inference method. The collaborative inference method in embodiments of this application is applicable to various communication systems. The collaborative inference method provided in embodiments of this application may be applied to a Long Tenn Evolution (long term evolution, LTE) system, a fifth generation (fifth-generation, 5G) communication network, another similar network, or another future network. FIG. 2 is a schematic architectural diagram of a communication system to which a collaborative inference method in embodiments of this application is applicable. The communication system may include an access network device 21, a terminal device 20 that communicates with the access network device 21, and a core network device 22 that communicates with the access network device 21. There may be one or more terminal devices 20, one or more access network devices 21, and one or more core network devices 22. FIG. 2 shows only one terminal device 20, two access network devices 21, and one core network device 22. FIG. 2 is merely a schematic diagram, and does not constitute a limitation on an applicable scenario of the collaborative inference method in embodiments of this application.

The terminal device 20 is also referred to as a user equipment (user equipment, UE), a mobile station (mobile station, MS), a mobile terminal (mobile terminal, MT), or the like, is a device that provides a voice/data connectivity to a user, for example, a handheld device or a vehicle-mounted device having a wireless connection function. The terminal device may be specifically a mobile phone (mobile phone), a tablet computer, a notebook computer, a palmtop computer, a mobile Internet device (mobile Internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a terminal device in a 5G communication network or a communication network after 5G, or the like. This is not limited in embodiments of this application.

The core network device 22 is an apparatus that is deployed in a core network to provide a service to the terminal device 20. In systems using different radio access technologies, core network devices having a similar wireless communication function may have different names. For example, the collaborative inference method in embodiments of this application is applied to a 5G system, and the core network device may be, for example, but is not limited to, an access and mobility management function (access and mobility management function, AMF) or a network data analytics function (network data analytics function, NWDAF). The AMF has functions such as mobility management, registration management, and connection management of the terminal device 20, lawful interception, support for transmission of session management (session management, SM) information between the terminal device 20 and a session management function (session management function, SMF), access authentication, and access authorization. The NWDAF may collect data from each network function (network function, NF), an application function (application function, AF), and operations, administration and maintenance (operations, administration and maintenance, OAM), and perform network function analysis and prediction. For ease of description only, in embodiments of this application, the foregoing apparatuses that can provide a service to the terminal device 20 are collectively referred to as a core network device. An interface between the core network device and the access network device is an NG interface.

The access network device 21 is a device in a wireless communication network. For example, the terminal device 20 accesses a radio access network (radio access network, RAN) node in the wireless communication network. Currently, some examples of the RAN node are: a next generation network node (next generation NodeB, gNB), an evolved NodeB (next generation evolved NodeB, ng-eNB) connected to a next generation core network, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a base band unit (base band unit, BBU), or a wireless fidelity (wireless fidelity, Wi-Fi) access point (access point, AP).

In a possible manner, the access network device 21 in embodiments of this application includes a central unit (central unit, CU) and a distributed unit (distributed unit, DU), as shown in FIG. 3. There may be one or more CUs and one or more DUs. It may be understood that the access network device 21 is divided into the CU and the DU from a perspective of logical functions. The CU and the DU may be physically segmented, or may be deployed together. This is not specifically limited in embodiments of this application. The CU and the DU may be connected through an interface, for example, an F1 interface. The CU and the DU may be obtained through division based on protocol layers of a wireless network. For example, functions of a radio resource control (radio resource control, RRC) layer, a service data adaptation protocol (service data adaptation protocol, SDAP) layer, and a packet data convergence protocol (packet data convergence protocol, PDCP) layer are set in the CU, and functions of a radio link control (radio link control, RLC) layer, a media access control (media access control, MAC) layer, a physical (physical, PHY) layer, and the like are set in the DU. It may be understood that, division into processing functions of the CU and the DU based on the protocol layers is merely an example, and the processing functions of the CU and the DU may alternatively be divided in another manner. This is not specifically limited in embodiments of this application.

Optionally, the CU includes a CU control plane (CU control plane, CU-CP) and a CU user plane (CU user plane, CU-UP). One CU includes one CU-CP and one or more CU-UPs. It may be understood that the CU is divided into the CU-CP and the CU-UP from a perspective of logical functions. The CU-CP and the CU-UP may be obtained through division based on the protocol layers of the wireless network. For example, control planes of an RRC layer and a PDCP layer are set in the CU-CP, and a user plane of the PDCP layer is set in the CU-UP. In addition, functions of an SDAP layer may also be set in the CU-UP. The CU-CP and the CU-UP may be connected through an interface, for example, an El interface. The CU-CP and the DU may be connected through an F1 control plane interface (Fl-C), and the CU-UP and the DU may be connected through an F1 user plane interface (F1-U). Further, the CU, the DU, or the CU-CP may be separately connected to a data analysis and management (data analysis and management, DAM) unit through a G1 interface. Optionally, the DAM unit may be separately used as an internal function of the CU, the DU, or the CU-CP. In this case, the G1 interface is an internal interface.

It may be understood that the communication system shown in FIG. 2 is merely intended to describe technical solutions in embodiments of this application more clearly, and does not constitute a limitation on the technical solutions provided in embodiments of this application. For example, the communication system may further include another device such as a network control device (not shown in FIG. 2). The network control device may be an operations, administration and maintenance (operations, administration and maintenance, OAM) system, and the OAM system may also be referred to as a network management system. The network control device may manage the access network device and the core network device.

The communication system and a service scenario described in embodiments of this application are intended to describe the technical solutions in embodiments of this application more clearly, but constitute no limitation on the technical solutions provided in embodiments of this application. A person of ordinary skill in the art may learn that the technical solutions provided in embodiments of this application are also applicable to a similar technical problem as a network architecture evolves and a new service scenario emerges.

The following specifically describes the collaborative inference method provided in embodiments of this application.

It should be noted that in the following embodiments of this application, names of messages between network elements, names of parameters in messages, or the like are merely examples, and may be other names during specific implementation. This is uniformly described herein, and details are not described below again.

In embodiments of this application, a terminal device provides inference-related information (for example, a first inference result) to a first network device, and receives a target inference result from the first network device. On a terminal device side, a model for performing inference is described as a "first ML submodel". On a first network device side, a model for performing inference is described as a "target ML submodel". The ML model includes the first ML submodel and the target ML submodel. An inference result obtained based on the "first ML submodel" is described as a "first inference result". An inference result obtained based on the "target ML submodel" is described as a "target inference result". The target inference result is a final inference result of the ML model. The first network device may be the access network device, the core network device, or the network control device described above.

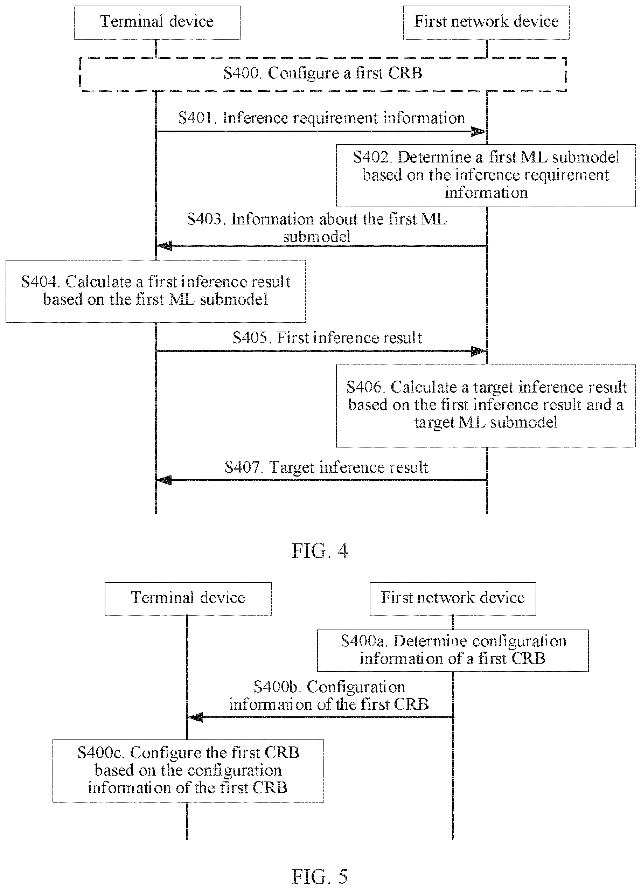

An embodiment of this application provides a first collaborative inference method, and the collaborative inference method is applied to a machine learning process. Refer to FIG. 4. The collaborative inference method includes the following steps.

S400: A terminal device and a first network device separately perform a process of "configuring a first computing radio bearer (computing radio bearer, CRB)".

The first CRB is a dedicated radio bearer, and is configured to implement orderly sending, encryption/decryption, repetition detection, and the like of related information of an inference operation. In other words, the related information of the inference operation is transmitted between the terminal device and the first network device by using the first CRB. The related information of the inference operation may be, for example, but is not limited to, information shown in FIG. 4: inference requirement information, information about a first ML submodel, a first inference result, and a target inference result. It should be noted that the first network device in this case is an access network device. In the following, FIG. 5 shows a possible process of configuring a first CRB.

S400a: The first network device determines configuration information of a first CRB.

The configuration information of the first CRB may include the following information:
A first piece of information is an identifier of the first CRB. The identifier of the first CRB uniquely identifies one CRB.
A second piece of information is a sequence number size of the first CRB. The sequence number size of the first CRB indicates a length of a bearer of transmitting the inference-related information (for example, the information about the first ML submodel, the first inference result, and the target inference result). The sequence number size of the first CRB may be 12 bits (bit), 18 bits, or the like. The sequence number size of the first CRB is not limited in this embodiment of this application.
A third piece of information is a discarding time of the first CRB. The discarding time of the first CRB indicates the terminal device to discard or release the first CRB after specific duration. For example, the discarding time of the first CRB is " 5 minutes", that is, the terminal device is indicated to keep the first CRB for duration of 5 minutes. After 5 minutes, the terminal device discards or releases the first CRB.
A fourth piece of information is header compression information of the first CRB. The header compression information of the first CRB indicates compression information of the first CRB. For example, the header compression information is a maximum context identifier value. In this case, the information about the first ML submodel (or the first inference result or the target inference result) is first compressed based on the maximum context identifier value, and then a compression result is transmitted by using the first CRB.

It should be noted that in the foregoing four pieces of information, the configuration information of the first CRB includes the identifier of the first CRB, to uniquely identify one CRB. Optionally, the configuration information of the first CRB includes at least one of the sequence number size of the first CRB, the discarding time of the first CRB, and the header compression information of the first CRB.

S400b: The first network device sends the configuration information of the first CRB to a terminal device. Correspondingly, the terminal device receives the configuration information of the first CRB from the first network device.

S400c: The terminal device configures the first CRB based on the configuration information of the first CRB.

In this way, when the terminal device obtains the configuration information of the first CRB, the terminal device may configure the first CRB, to transmit inference-related information by using the first CRB.

It should be noted that S400 is an optional step. When the PDCP layer is associated with the CRB, the collaborative inference method in this embodiment of this application includes S400, that is, perform the process of "configuring the first CRB". When the PDCP layer is not associated with the CRB, the collaborative inference method in this embodiment of this application does not include S400, that is, it is unnecessary perform the process of "configuring the first CRB".

S401: The terminal device sends inference requirement information to the first network device. Correspondingly, the first network device receives inference requirement information from the terminal device.

The inference requirement information includes information about a time at which the terminal device obtains the target inference result. The time information may be specifically implemented as "time segment information", for example, information about a time segment from a first time point to a second time point. The first time point may be a time point at which the terminal device performs S401. The second time point may be a latest time point at which the terminal device obtains the target inference result. Alternatively, the first time point is marked as t1. The second time point is marked as t2. t1 and t2 may be any time point specified in advance. In other words, the terminal device needs to obtain the target inference result within the "time segment indicated by the time information". The inference requirement information further includes full information about the ML model or an identifier of the ML model. When "the inference requirement information includes the full information about the ML model", the first network device does not need to store the ML model, thereby reducing a requirement of the first network device on storage space. The full information about the ML model is information that can completely describe the ML model, for example, source code that describes the ML model, executable program code of the ML model, or partially or completely compiled code of the ML model.

Optionally, the inference requirement information further includes at least one of the following information: an input size (size) of the ML model and computing capability information of the terminal device. The input size of the ML model represents a data volume of input data for ML inference, for example, may be represented by a quantity of bytes. The computing capability information of the terminal device may also be described as a computing capability of the terminal device, may be understood as a capability for indicating or evaluating a data processing speed of the terminal device, for example, a data output speed of the terminal device when calculating a hash function, and may be specifically represented by FLOPS. A computing capability of the terminal device is positively correlated with a data processing speed. For example, a higher computing capability indicates a higher data processing speed. In this case, generally, the terminal device performs ML model inference at a higher speed. The computing capability of the terminal device is related to factors such as hardware configuration performance of the terminal device and running smoothness of an operating system.

S402: The first network device determines a first ML submodel based on the inference requirement information.

For example, when the inference requirement information includes the identifier of the ML model, the first network device may determine the corresponding ML model based on the identifier of the ML model, and the first network device can determine a model to be segmented. When the inference requirement information includes the full information about the ML model, the first network device can segment the ML model carried in the inference requirement information.

When segmentation options are set for the ML model, the first network device determines, based on the inference requirement information, a segmentation option corresponding to the first ML submodel.

The following first describes the segmentation options of the ML model. The segmentation options are options defined between adjacent layers in the ML model, and are for segmenting the ML model. One segmentation option corresponds to one segmentation location of the ML model. For example, FIG. 1 is a schematic structural diagram of an ML model. In FIG. 1, segmentation options of the ML model are represented by using numbers, for example, 0, 1, 2, and 3. In FIG. 1, the segmentation option "0" represents an option between the input layer and a first layer of the hidden layers of the ML model, and a segmentation location corresponding to the segmentation option "0" is shown by a dashed line between the input layer and the first layer of the hidden layers in FIG. 1. If the segmentation option corresponding to the first ML submodel is "0", it indicates that the first ML submodel includes the input layer of the ML model, and the terminal device needs to process the input data at the input layer. The segmentation option " 1" represents an option between the first layer of the hidden layers and a second layer of the hidden layers of the ML model, and a segmentation location corresponding to the segmentation option " 1" is shown by a dashed line between the first layer of the hidden layers and the second layer of the hidden layers in FIG. 1. If the segmentation option corresponding to the first ML submodel is "1", it indicates that the first ML submodel includes the input layer and the first layer of the hidden layers of the ML model, and the terminal device needs to process the input data at the input layer and the first layer of the hidden layers. The segmentation option "2" represents an option between the second layer of the hidden layers and a third layer of the hidden layers of the ML model, and a segmentation location corresponding to the segmentation option "2" is shown by a dashed line between the second layer of the hidden layers and the third layer of the hidden layers in FIG. 1. If the segmentation option corresponding to the first ML submodel is "2", it indicates that the first ML submodel includes the input layer, the first layer of the hidden layers, and the second layer of the hidden layers of the ML model, and the terminal device needs to process the input data at the input layer, the first layer of the hidden layers, and the second layer of the hidden layers. The segmentation option "3" represents an option between the third layer of the hidden layers and the output layer of the ML model, and a segmentation location corresponding to the segmentation option "3" is shown by a dashed line between the third layer of the hidden layers and the output layer in FIG. 1. If the segmentation option corresponding to the first ML submodel is "3", it indicates that the first ML submodel includes the input layer, the first layer of the hidden layers, the second layer of the hidden layers, and the third layer of the hidden layers of the ML model, and the terminal device needs to process the input data at the input layer, the first layer of the hidden layers, the second layer of the hidden layers, and the third layer of the hidden layers. If there is another segmentation option in the ML model, a meaning represented by the another segmentation option may be deduced by analogy.

Then, the ML model shown in FIG. 1 is still used as an example. When the first network device selects the segmentation option "2", the first ML submodel includes the input layer, the first layer of the hidden layers, and the second layer of the hidden layers of the ML model, but does not include the third layer of the hidden layers and the output layer of the ML model. The first network device performs calculation to obtain the following information:
A first piece of information is duration of performing local inference by the terminal device. For example, the first network device determines, based on the computing capability of the terminal device, the duration of performing local inference by the terminal device.
A second piece of information is duration of sending the first inference result by the terminal device. For example, the first network device determines, based on a size of the first inference result and an uplink bandwidth of the terminal device, the "duration of sending the first inference result by the terminal device".
A third piece of information is duration of performing local inference by the first network device. For example, the first network device determines, based on a computing capability of the first network device, the "duration of performing local inference by the first network device".
A fourth piece of information is duration of sending the target inference result by the first network device. For example, the first network device determines, based on the target inference result and a downlink bandwidth of the terminal device, the "duration of sending the target inference result by the first network device".

If a sum of the foregoing pieces of duration does not exceed a time segment indicated by the time information in the inference requirement information, the first network device uses the segmentation option "2" as the segmentation option corresponding to the first ML submodel. If the sum exceeds the time segment, the first network device performs calculation to determine whether the segmentation option " 1" exceeds the time segment indicated by the time information in the inference requirement information. The first network device repeatedly performs the foregoing process until the first network device determines the segmentation option corresponding to the first ML submodel, or the first network device traverses the segmentation options of the ML model. If the first network device determines the segmentation option, the first ML submodel is correspondingly determined.

In addition, the first piece of information (that is, the "duration of performing local inference by the terminal device") and the second piece of information (that is, the "duration of sending the first inference result by the terminal device") may also be obtained by the terminal device through calculation, and reported by the terminal device to the first network device. In this case, the first network device only needs to determine the third piece of information (that is, the "duration of performing local inference by the first network device") and the fourth piece of information (that is, the "duration of sending the target inference result by the first network device"), so that the first network device determines the segmentation option corresponding to the first ML submodel. For details, refer to related descriptions in the previous paragraph. Details are not described herein again. Specific descriptions of "the terminal device determines the first piece of information" and "the terminal device determines the second piece of information" are as follows:

Using "the terminal device determines the first piece of information" as an example, when the terminal device learns of "operation amounts of the layers of the ML model", the terminal device determines, with reference to a computing capability of the terminal device and the "the operation amounts of the layers of the ML model", duration of performing local inference by the terminal device. For example, using the ML model shown in FIG. 1 as an example, when the terminal device obtains "the operation amount of the input layer of the ML model", the terminal device calculates "duration of performing inference at the input layer of the ML model by the terminal device". When the terminal device obtains "the operation amount of the input layer and the operation amount of the first layer of the hidden layers of the ML model", the terminal device calculates "duration of performing inference at the input layer and the first layer of the hidden layers of the ML model by the terminal device". When the terminal device obtains "the operation amount of the input layer, and the operation amounts of the first layer of the hidden layers and the second layer of the hidden layers of the ML model", the terminal device calculates "duration of performing inference at the input layer, the first layer of the hidden layers, and the second layer of the hidden layers of the ML model by the terminal device". In other words, when the terminal device traverses the segmentation options of the ML model, the first piece of information includes "duration of performing local inference under different segmentation options of the ML model by the terminal device".

Then using "the terminal device determines the second piece of information" as an example, when the terminal device learns of "sizes of inference results of the layers of the ML model", the terminal device determines, with reference to the uplink bandwidth and the "sizes of the inference results of the layers of the ML model", "duration of sending the first inference result by the terminal device". For example, using the ML model shown in FIG. 1 as an example, when the terminal device obtains "the size of the inference result of the input layer of the ML model", the terminal device calculates "duration of sending the inference result of the input layer of the ML model by the terminal device". When the terminal device obtains "the size of the inference result of the first layer of the hidden layers of the ML model", the terminal device calculates "duration of sending the inference result of the first layer of the hidden layers of the ML model by the terminal device". When the terminal device obtains "the size of the inference result of the second layer of the hidden layers of the ML model", the terminal device calculates "duration of sending the inference result of the second layer of the hidden layers of the ML model by the terminal device". In other words, when the terminal device traverses the segmentation options of the ML model, the second piece of information includes "duration of sending the first inference result under different segmentation options of the ML model by the terminal device". Then, when selecting the segmentation option corresponding to the first ML submodel, the first network device may learn of "duration of sending the first inference result by the terminal device".

The foregoing first piece of information and second piece of information and the inference requirement information may be carried in a same message, or may be carried in different messages. This is not limited in this embodiment of this application.

It should be noted that the first ML submodel is a part of the ML model. The first ML submodel includes at least the input layer of the ML model. In other words, the terminal device performs at least processing at the input layer, to avoid providing input data to the first network device and prevent data privacy exposure. The ML model shown in FIG. 1 is used as an example, and a minimum value of the segmentation option corresponding to the first ML submodel is "0". In addition, the first network device segments the ML model, and after determining the first ML submodel, the first network device correspondingly determines the target ML submodel, that is, the output data of the first ML submodel corresponds to the input data of the target ML submodel.

When no segmentation option is set for the ML model, the first network device autonomously determines a segmentation location of the ML model, and segments the ML model to obtain two ML submodels. A model used by the terminal device for inference is denoted as an "ML submodel a", and a model used by the first network device for inference is denoted as an "ML submodel b". Then, the first network device determines the foregoing four pieces of information (that is, the duration of performing local inference by the terminal device, the duration of sending the first inference result by the terminal device, the duration of performing local inference by the first network device, and the duration of sending the target inference result by the first network device). If a sum of the foregoing pieces of duration does not exceed a time segment indicated by the time information in the inference requirement information, the first network device uses the "ML submodel a" as the first ML submodel. Correspondingly, the "ML submodel b" is used as the target ML submodel. If the sum exceeds the time segment, the first network device re-determines a segmentation location, and repeatedly performs the foregoing process until the first network device determines the first ML submodel or a quantity of times that the first network device repeatedly determines a segmentation location satisfies a preset value.

S403: The first network device sends information about the first ML submodel to the terminal device. Correspondingly, the terminal device receives the information about the first ML submodel from the first network device.

The first ML submodel is used by the terminal device to perform an inference operation, to obtain the first inference result. For example, the first network device selects the segmentation option " 1". In this case, the first ML submodel includes the input layer and the first layer of the hidden layers of the ML model, but does not include the second layer of the hidden layers, the third layer of the hidden layers, and the output layer of the ML model.

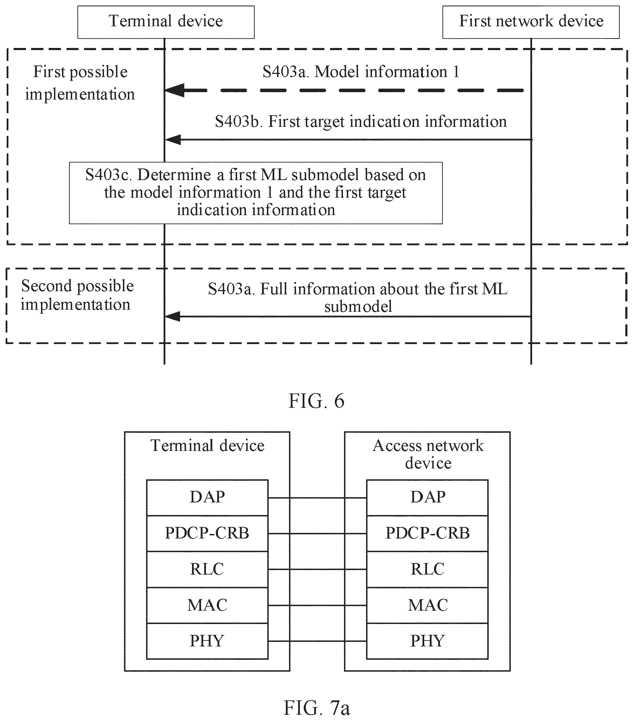

Refer to FIG. 6. Specific implementation of S403 is described in two possible implementations.

In a first possible implementation, when ML model synchronization between the first network device and the terminal device is implemented, the first network device indicates the first ML submodel to the terminal device by using indication information. Details are shown in a block diagram of "the first possible implementation" in FIG. 6. That "ML model synchronization between the first network device and the terminal device is implemented" means that a meaning represented by a segmentation option of the ML model is applicable to the first network device and the terminal device. In other words, the first network device and the terminal device have a same understanding of the meaning represented by the segmentation option of the ML model. S403 is specifically implemented as S403b. Specific descriptions of steps shown in FIG. 6 are as follows:
S403a: The first network device sends model information 1 to the terminal device. Correspondingly, the terminal device receives the model information 1 from the first network device.

The model information 1 indicates a correspondence between first candidate indication information and a first segmentation location. The first segmentation location is a segmentation location in which the ML model is segmented.

For example, a segmentation manner of the ML model is "segmenting by layer", and meanings of different segmentation options are defined. Details are shown in FIG. 1. One piece of first candidate indication information is implemented as one segmentation option, and different pieces of first candidate indication information are implemented as different segmentation options. The first segmentation location is a segmentation location corresponding to a segmentation option. If the first target indication information is implemented as the segmentation option "1", it indicates that segmentation is performed between the first layer of the hidden layers and the second layer of the hidden layers of the ML model. In this way, the first ML submodel includes the input layer and the first layer of the hidden layers of the ML model, and the target ML submodel includes the second layer of the hidden layers, the third layer of the hidden layers, and the output layer of the ML model.

Optionally, in a scenario of a single ML model, the model information 1 may not carry an identifier of the ML model. In a scenario of a plurality of ML models, the model information 1 carries identifiers of the ML models, so that the terminal device determines corresponding models based on the identifiers of the ML models. For example, in a scenario of a plurality of ML models, identifiers of the ML models are predefined between the terminal device and the first network device, and an identifier of one ML model uniquely identifies the one ML model. For example, an identifier 1 of an ML model represents an Alex Network (AlexNet) model, an identifier 2 of an ML model represents a visual geometry group 16 (visual geometry group 16, VGG16) model, and an identifier 3 of an ML model represents a ResNet-152 model. In another example, an identifier of an ML model is AlexNet, VGG16, ResNet-152, or the like.

It should be noted that S403a is an optional step. For example, if the terminal device and the first network device obtain the model information 1 from another network device in advance, S403a does not need to be performed. The first network device and the terminal device may alternatively obtain the model information 1 from a network control device, to implement model synchronization between the first network device and the terminal device. The network control device may be an CAM device.

S403b: The first network device sends first target indication information to the terminal device. Correspondingly, the terminal device receives the first target indication information from the first network device.

The first target indication information indicates a segmentation location of the ML model. The first target indication information includes a segmentation option corresponding to the first ML submodel, and a segmentation location of the ML model is indicated by using the segmentation option, so that the terminal device obtains the first ML submodel by segmenting the ML model. Optionally, in a scenario of a single ML model, the first target indication information may not carry the identifier of the first ML submodel. In a scenario of a plurality of ML models, the first target indication information carries the identifier of the first ML submodel. The identifier of the first ML submodel is the same as the identifier of the ML model.

For example, still using the scenario shown in FIG. 1 as an example, when the first network device determines that the segmentation option is " 1", the first target indication information includes the segmentation option " 1". Correspondingly, the first ML submodel includes the input layer and the first layer of the hidden layers of the ML model, and the terminal device needs to process the input data at the input layer and the first layer of the hidden layers.

It should be noted that when the first network device needs to perform S403a and S403b, the first network device may first perform S403a and then perform S403b, or the first network device may perform S403a and S403b simultaneously. In addition, the model information 1 and the first target indication information may alternatively be carried in a same message. To be specific, the first network device sends, to the terminal device, the " segmentation option corresponding to the first ML submodel" and the meaning represented by the " segmentation option corresponding to the first ML submodel". This is not limited in this embodiment of this application.

S403c: The terminal device determines a first ML submodel based on the model information 1 and the first target indication information.

For example, in a scenario of a plurality of ML models, when obtaining the model information 1, the terminal device may learn of a segmentation manner of an ML model corresponding to an identifier of the ML model. In the segmentation manner of "segmenting by layer" indicated by the model information 1, the terminal device may learn of, with reference to the first target indication information, a model to be segmented, and "layers that belong to the first ML submodel" in the to-be-segmented ML model, and then obtain the first ML submodel. For example, when the first target indication information includes the segmentation option " 1", the terminal device segments the ML model, that is, performs segmentation between the first layer of the hidden layers and the second layer of the hidden layers, to obtain the first ML submodel.

In this way, when ML model synchronization between the first network device and the terminal device is implemented, the first network device may send the first target indication information (that is, a segmentation option corresponding to the first ML submodel, to indicate a segmentation location of the ML model) to the terminal device, so that the terminal device obtains the first ML submodel, thereby saving transmission resources.

In a second possible implementation, when the inference requirement information includes the full information about the ML model, reference is made to a block diagram of the "second possible implementation" in FIG. 6. S403 is specifically implemented as S403a.

S403a: The first network device sends full information about the first ML submodel to the terminal device. Correspondingly, the terminal device receives the full information about the first ML submodel from the first network device.

Specifically, the full information about the first ML submodel is information that can completely describe the first ML submodel, for example, source code that describes the first ML submodel, executable program code of the first ML submodel, or partially or completely compiled code of the first ML submodel. In this way, even if model synchronization is not performed between the first network device and the terminal device, the terminal device can still obtain the first ML submodel.

S404: The terminal device calculates a first inference result based on the first ML submodel.

The first ML submodel includes at least the input layer of the ML model. For example, using "the first ML submodel includes the input layer and the first layer of the hidden layers of the ML model" as an example, the first inference result is an inference result of the first layer of the hidden layers.

The terminal device inputs data into the first ML submodel, and calculates the input data by using the first ML submodel, to obtain the first inference result. The input data is input data that is of the first ML submodel and that is generated by the terminal device, that is, the input data is generated by the terminal device and is used as the input data of the first ML submodel. For example, in a transmit power self-optimization scenario of the terminal device, the terminal device may optimize a transmit power of the terminal device by using a power ML model. Specifically, the terminal device obtains a first power ML submodel, and uses a transmit power at a current moment or a transmit power (transmit powers) at a moment (some moments) before the current moment as input data of the first power ML submodel. The terminal device performs inference calculation on the transmit power value (the transmit power values) by using the first power ML submodel, to obtain a first inference result. It can be learned that, the terminal device does not need to provide input data of the ML model to the network device, thereby reducing a risk of "data privacy exposure".

S405: The terminal device sends the first inference result to the first network device. Correspondingly, the first network device receives the first inference result from the terminal device.

The first inference result refers to a complete first inference result. For example, still using "the first ML submodel includes the input layer and the first layer of the hidden layers of the ML model" in FIG. 1 as an example, the first inference result includes an inference result of the first layer of the hidden layers.

S406: The first network device calculates a target inference result based on the first inference result and a target ML submodel.

The target ML submodel includes at least the output layer of the ML model. Input data of the target ML submodel corresponds to output data of the first ML submodel. For example, using "the first ML submodel includes the input layer and the first layer of the hidden layers of the ML model" in FIG. 1 as an example, the target ML submodel includes the second layer of the hidden layers, the third layer of the hidden layers, and the output layer of the ML model.

The target inference result is a final inference result of the ML model.

For example, the first network device inputs the first inference result to the target ML submodel, and performs processing at the second layer of the hidden layers, the third layer of the hidden layers, and the output layer by using the target ML submodel, to obtain the target inference result.

Using the foregoing transmit power self-optimization scenario of the terminal device as an example, the first network device uses, as the input data of the target power ML submodel, the first inference result obtained by the terminal device by performing inference by using the first power ML submodel, and performs inference calculation by using the target power ML submodel, to obtain the target inference result, that is, an optimized transmit power of the terminal device.

S407: The first network device sends the target inference result to the terminal device. Correspondingly, the terminal device receives the target inference result from the first network device.

Using the foregoing transmit power self-optimization scenario of the terminal device as an example, after receiving the optimized transmit power of the terminal device sent by the first network device, the terminal device may use the optimized transmit power to send data.

It should be noted that in the foregoing interaction steps (for example, S401, S403, S405, and S407) between the terminal device and the first network device, the terminal device and the first network device may send related information of the inference operation based on an existing protocol stack. For example, the related information of the inference operation is carried in an RRC message or a non-access stratum (non-access stratum, NAS) message. The terminal device and the first network device may alternatively send the related information of the inference operation based on a new protocol stack.

For example, when the first network device is implemented as an access network device, a dedicated protocol (for example, a data analytics protocol (data analytics protocol, DAP)) may be used between the terminal device and the access network device to send the related information of the inference operation, to implement functions such as segmentation, sorting, integrity protection, and encryption/decryption of the related information. The PDCP layer is associated with a dedicated radio bearer (for example, a CRB), to implement orderly sending, encryption/decryption, repetition detection, and the like of the related information of the inference operation. FIG. 7a shows a protocol stack between a terminal device and an access network device. The protocol stack is for transmitting related information of an inference operation between the terminal device and the access network device. The protocol stack mainly includes a DAP layer, a PDCP layer, an RLC layer, a MAC layer, and a PHY layer. The DAP layer, the PDCP layer, the RLC layer, the MAC layer, and the PHY layer all belong to an access stratum (access stratum, AS). The related information of the inference operation may be, for example, but is not limited to, the following information: inference requirement information, information about a first ML submodel, a first inference result, and a target inference result.

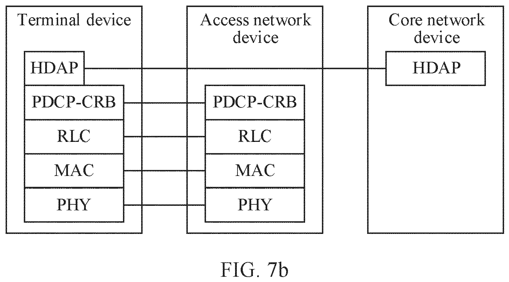

In another example, when the first network device is implemented as a core network device, a dedicated protocol (for example, a high data analytics protocol (high data analytics protocol, HDAP)) may be used between the terminal device and the core network device to send the related information, to implement functions such as segmentation, sorting, integrity protection, and encryption/decryption of the related information. FIG. 7b shows a protocol stack between a terminal device and a core network device. Similarly, the protocol stack is for transmitting related information of an inference operation between the terminal device and the core network device. The protocol stack mainly includes an HDAP layer. It should be noted that in FIG. 7b, a protocol stack for interaction between the access network device and the core network device is omitted. For a description of the protocol stack for interaction between the terminal device and the access network device, refer to related descriptions in FIG. 7a. Details are not described herein again.

In addition, in the first collaborative inference method provided in this embodiment of this application, S400 may be performed before any one of S401 to S407, or may be performed simultaneously with any one of S401 to S407. This is not limited in this embodiment of this application. When S400 and a step are performed simultaneously, the "configuration information of the first CRB" and information transmitted in this step may be carried in a same message, or may be carried in different messages. This is not limited in this embodiment of this application. For example, using an example in which S400 and S403 are simultaneously performed, the "configuration information of the first CRB" and the "first ML submodel" may be carried in a same message, or may be carried in different messages.

According to the collaborative inference method provided in this embodiment of this application, the terminal device performs a partial inference operation by using the first ML submodel, to obtain the first inference result. After the terminal device sends the first inference result, a first network device performs an operation on all information about the first inference result with reference to a target ML submodel, to obtain the target inference result, and then provides the target inference result to the terminal device, so that the terminal device does not need to perform a complete inference operation, thereby reducing a delay in obtaining the target inference result by the terminal device. Further, the terminal device provides the network device with an intermediate result calculated by the ML model instead of input data of the ML model, thereby reducing a risk of "data privacy exposure" and improving data security of the terminal device.

In the communication process shown in FIG. 4, if the terminal device is handed over, subjected to RRC connection resume, or subjected to RRC connection reestablishment, to connect to the second network device, the terminal device receives the target inference result from the second network device. Using an example in which the terminal device is "handed over", after the first network device obtains information (for example, a complete first inference result) provided by the terminal device, if the first network device determines that the terminal device needs to be handed over, the first network device does not perform an inference operation. Alternatively, after the first network device obtains information provided by the terminal device, if the first network device determines that the terminal device needs to be handed over and a computing capability of the second network device is better than a computing capability of the first network device, the first network device may not perform an inference operation and the second network device performs an inference operation. Then, using an example in which the terminal device is subjected to "RRC connection resume" or "RRC connection reestablishment", after the first network device obtains information (for example, a complete first inference result) provided by the terminal device, if the first network device receives a retrieve UE context request (retrieve UE context request) message from the second network device, the first network device does not perform an inference operation and the second network device performs an inference operation. If the first network device receives the retrieve UE context request message from the second network device, it indicates that the terminal device accesses the second network device. In a scenario in which the first network device does not perform an inference operation, similarly, the ML model includes the first ML submodel and the target ML submodel. On the terminal device side, a model for performing inference is described as the "first ML submodel", and an obtained inference result is described as the "first inference result". On the second network device side, a model for performing inference is described as the "target ML submodel", and an obtained inference result is described as the "target inference result". The second network device may be the access network device, the core network device, or the network control device described above. Optionally, when the inference-related information is transmitted by using CRBs, a CRB between the terminal device and the first network device is described as a "first CRB", and a CRB between the terminal device and the second network device is described as a "target CRB" .

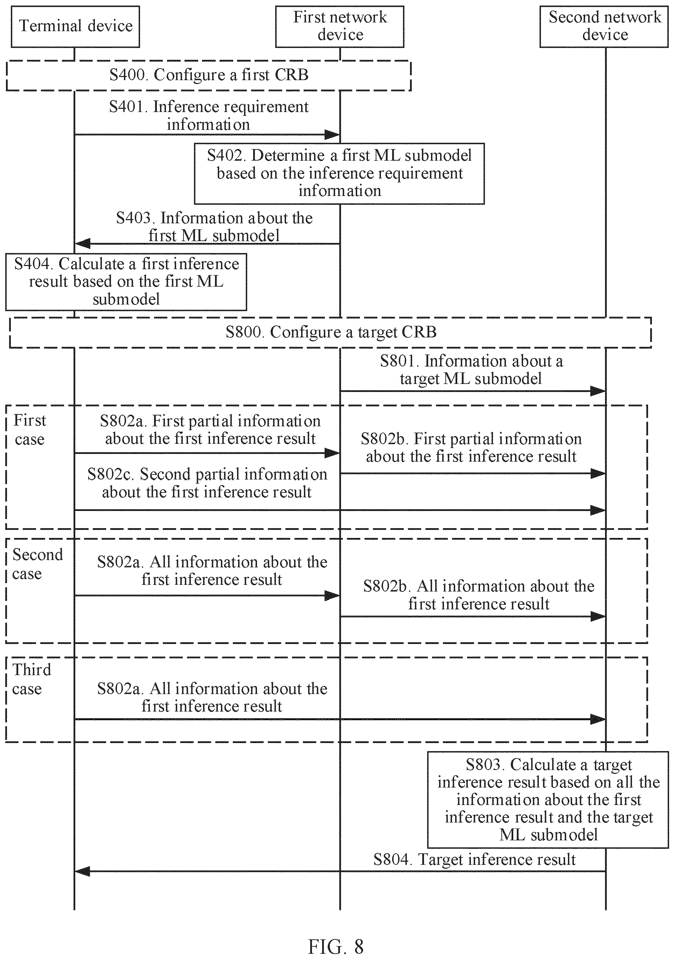

The following describes a second collaborative inference method provided in an embodiment of this application by using an example in which a terminal device is handed over (that is, the terminal device is handed over from a first network device to a second network device, and in this case, the first network device is a first access network device and the second network device is a second access network device). The collaborative inference method is applied to a machine learning process. Refer to FIG. 8. The collaborative inference method may include S400 to S404 and the following steps.

S800: The terminal device and a second network device separately perform a process of "configuring a target CRB" .

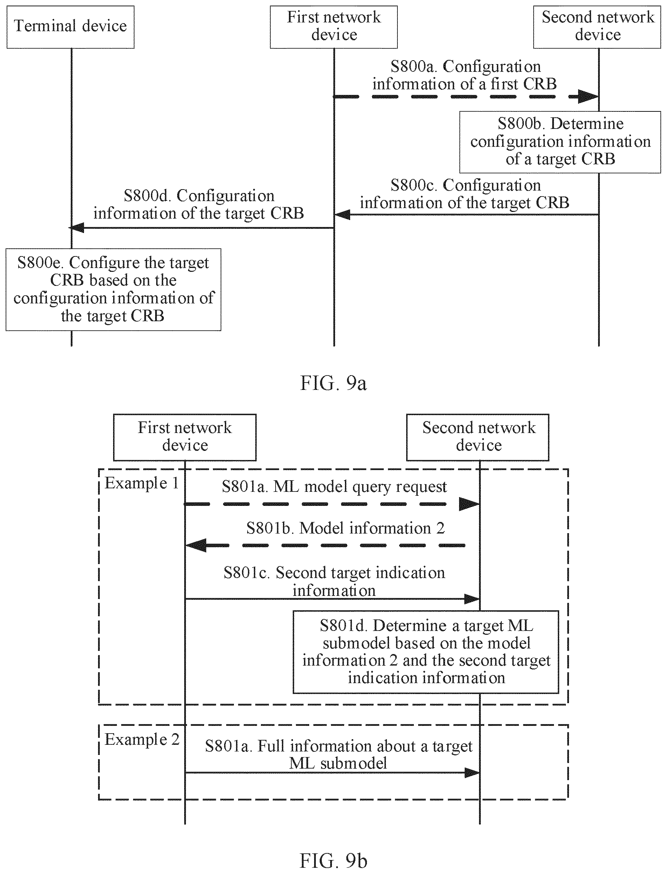

The target CRB is also a dedicated radio bearer, and is configured to implement orderly sending, encryption/decryption, repetition detection, and the like of related information of an inference operation. In other words, the related information of the inference operation is transmitted between the terminal device and the second network device by using the target CRB. The related information of the inference operation may be, for example, but is not limited to, information shown in FIG. 8: second partial information about the first inference result, all information about the first inference result, and a target inference result. In the following, FIG. 9a shows a possible process of configuring a target CRB.

Optionally, if a first CRB exists between a terminal device and a first network device, S800a is performed.

S800a: The first network device sends configuration information of the first CRB to a second network device.

For related descriptions of the "configuration information of the first CRB", refer to the description of S400a. Details are not described herein again.

For example, in a handover scenario, the configuration information of the first CRB may be carried in a handover request (handover request) message. Certainly, the configuration information of the first CRB may alternatively be carried in another message. This is not limited in this embodiment of this application.

It should be noted that S800a is an optional step. When the first CRB exists between the terminal device and the first network device, the first network device may perform S800a, or may not perform S800a. When the first CRB does not exist between the terminal device and the first network device, the first network device does not need to perform S800a.

S800b: The second network device determines configuration information of a target CRB.

The configuration information of the target CRB may include the following information:
A first piece of information is an identifier of the target CRB. The identifier of the target CRB uniquely identifies one CRB.
A second piece of information is a sequence number size of the target CRB. The sequence number size of the target CRB indicates a length of a bearer of transmitting the inference-related information (for example, information about the target ML submodel, all information about the first inference result, and the target inference result). The sequence number size of the target CRB may be 12 bits, 18 bits, or the like. The sequence number size of the target CRB is not limited in this embodiment of this application.
A third piece of information is a discarding time of the target CRB. The discarding time of the target CRB indicates the terminal device to discard or release the target CRB after specific duration. For example, the discarding time of the target CRB is "5 minutes", that is, the terminal device is indicated to keep the target CRB for duration of 5 minutes. After 5 minutes, the terminal device discards or releases the target CRB.
A fourth piece of information is header compression information of the target CRB. The header compression information of the target CRB indicates compression information of the target CRB. For example, the header compression information is a maximum context identifier value. In this case, the information about the first ML submodel (or the first inference result or the target inference result) is first compressed based on the maximum context identifier value, and then a compression result is transmitted by using the target CRB.

It should be noted that in the foregoing four pieces of information, the configuration information of the target CRB includes the identifier of the target CRB, to uniquely identify one CRB. Optionally, the configuration information of the target CRB includes at least one of the sequence number size of the target CRB, the discarding time of the target CRB, and the header compression information of the target CRB. S800a is an optional step. When S800a is performed, the second network device determines the configuration information of the target CRB based on the configuration information of the first CRB. For example, the second network device modifies some parameters in the configuration information of the first CRB, to obtain the configuration information of the target CRB. When S800a is not performed, the second network device may determine the configuration information of the target CRB without reference to the configuration information of the first CRB.

S800c: The second network device sends the configuration information of the target CRB to the first network device. Correspondingly, the first network device receives the configuration information of the target CRB from the second network device.

For example, in a handover scenario, the configuration information of the target CRB is carried in a handover request acknowledge (handover request acknowledge) message. The handover request acknowledge message is a message sent to the first network device after the second network device completes a handover preparation processing process. Certainly, the configuration information of the target CRB may alternatively be carried in another message. This is not limited in this embodiment of this application.

S800d: The first network device sends the configuration information of the target CRB to the terminal device. Correspondingly, the terminal device receives the configuration information of the target CRB from the first network device.

S800e: The terminal device configures the target CRB based on the configuration information of the target CRB.

For example, when the terminal device configures the first CRB, the terminal device modifies the first CRB based on the configuration information of the target CRB, to obtain the target CRB. When the terminal device does not configure the first CRB, the terminal device configures the target CRB based on the configuration information of the target CRB.

After the terminal device completes configuration of the target CRB, optionally, the terminal device sends a configuration acknowledgment to the second network device. Correspondingly, the second network device receives the configuration acknowledgment from the terminal device.

In this way, in a scenario in which the terminal device is handed over, after the second network device determines the configuration information of the target CRB, the second network device provides the configuration information of the target CRB to the terminal device by using the first network device, so that the terminal device configures the target CRB. Then, the related information of the inference may be transmitted between the terminal device and the second network device by using the target CRB.

It should be noted that S800 is an optional step. When the PDCP layer is associated with the CRB, the collaborative inference method in this embodiment of this application includes S800, that is, perform the process of "configuring the target CRB". When the PDCP layer is not associated with the CRB, the collaborative inference method in this embodiment of this application does not include S800, that is, it is unnecessary perform the process of "configuring the target CRB".

S801: The first network device sends information about a target ML submodel to the second network device. Correspondingly, the second network device receives the information about the target ML submodel from the first network device.

Input data of the target ML submodel corresponds to output data of the first ML submodel. The first network device may obtain the target ML submodel after performing S402.

For example, the following describes a specific implementation process of S801 by using Example 1 and Example 2.

Example 1: When ML model synchronization between the first network device and the second network device is implemented, the first network device indicates the target ML submodel to the second network device by using the second target indication information, which is specifically shown in a block diagram of "Example 1" in FIG. 9b. That "ML model synchronization between the first network device and the second network device is implemented" means that a meaning represented by a segmentation option of the ML model is applicable to the first network device and the second network device. In other words, the first network device and the second network device have a same understanding of the meaning represented by the segmentation option of the ML model. S801 is specifically implemented as S801c. Specific descriptions of steps shown in FIG. 9b are as follows:
S801a: The first network device sends an ML model query request to the second network device. Correspondingly, the second network device receives the ML model query request from the first network device.

The ML model query request is for requesting an ML model supported by the second network device and a segmentation manner of the ML model supported by the second network device. When the segmentation manner of the ML model supported by the second network device is "segmenting by layer", for descriptions of meanings of different segmentation options, refer to related descriptions in FIG. 1. Details are not described herein again.

S801b: The second network device sends model information 2 to the first network device. Correspondingly, the first network device receives the model information 2 from the second network device.

The model information 2 indicates a correspondence between second candidate indication information and a second segmentation location. The second segmentation location is a segmentation location in which the ML model is segmented.

For example, a segmentation manner of the ML model is "segmenting by layer", and meanings of different segmentation options are defined. Details are shown in FIG. 1. One piece of second candidate indication information is implemented as one segmentation option, and different pieces of second candidate indication information are implemented as different segmentation options. The second segmentation location is a segmentation location corresponding to a segmentation option. If the second target indication information is implemented as the segmentation option " 1", it indicates that segmentation is performed between the first layer of the hidden layers and the second layer of the hidden layers of the ML model. In this way, the first ML submodel includes the input layer and the first layer of the hidden layers of the ML model, and the target ML submodel includes the second layer of the hidden layers, the third layer of the hidden layers, and the output layer of the ML model.

Optionally, in a scenario of a single ML model, the model information 2 may not carry an identifier of the ML model. In a scenario of a plurality of ML models, the model information 2 carries identifiers of the ML models, so that the first network device determines corresponding models based on the identifiers of the ML models.

It should be noted that S801a and S801b are optional steps. For example, if the first network device and the second network device obtain the model information 2 from another network device in advance, S801a and S801b do not need to be performed. The first network device and the second network device may alternatively obtain the model information 2 from a network control device, to implement model synchronization between the first network device and the second network device. The network control device may be an OAM device. Further, when S801a and S801b are performed, the second network device may perform S801b, and does not perform S801a, that is, the second network device can directly feed back the model information 2 to the first network device. Certainly, the second network device may alternatively perform S801a and S801b, that is, the second network device feeds back the model information 2 to the first network device only when the first network device requests the second network device.

S801c: The first network device sends second target indication information to the second network device. Correspondingly, the second network device receives the second target indication information from the first network device.

The second target indication information indicates a segmentation location of the ML model. The second target indication information includes a segmentation option corresponding to the target ML submodel, and a segmentation location of the ML model is indicated by using the segmentation option, so that the second network device obtains the target ML submodel by segmenting the ML model. For example, in a handover scenario, the second target indication information may be carried in a handover request message. The handover request message is for requesting to hand over the terminal device to the second network device. After the second network device completes a handover preparation processing process, the second network device sends a handover request acknowledge message to the first network device.

Optionally, in a scenario of a single ML model, the second target indication information may not carry the identifier of the target ML, submodel. In a scenario of a plurality of ML models, the second target indication information carries the identifier of the first ML submodel. The identifier of the target ML submodel is the same as the identifier of the ML model.

For example, still using the scenario shown in FIG. 1 as an example, when the first network device determines that the segmentation option is " 1", the second target indication information includes the segmentation option "1". Correspondingly, the first ML submodel includes the input layer and the first layer of the hidden layers of the ML model, and the target ML submodel includes the second layer of the hidden layers, the third layer of the hidden layers, and the output layer of the ML model. In this case, input data of the target ML submodel corresponds to output data of the first ML submodel.

S801d: The second network device determines a target ML submodel based on the model information 2 and the second target indication information.

For example, in a scenario of a plurality of ML models, when obtaining the model information 2, the second network device may learn of a segmentation manner of an ML model corresponding to an identifier of the ML model. In the segmentation manner of "segmenting by layer" indicated by the model information 2, the second network device may learn of, with reference to the second target indication information, a model to be segmented, and "layers that belong to the target ML submodel" in the to-be-segmented ML model, and then obtain the target ML submodel. For example, when the second target indication information includes the segmentation option "1", the second network device segments the ML model, that is, performs segmentation between the first layer of the hidden layers and the second layer of the hidden layers, to obtain the target ML submodel.

In this way, when ML model synchronization between the first network device and the second network device is implemented, the first network device may send the second target indication information (that is, a segmentation option corresponding to the target ML submodel, to indicate a segmentation location of the ML model) to the second network device, so that the second network device obtains the target ML submodel, thereby saving transmission resources.

Example 2: When the inference requirement information includes the full information about the ML model, as shown in a block diagram of "Example 2" in FIG. 9b, S801 is specifically implemented as S801a.

S801a: The first network device sends full information about a target ML submodel to the second network device. Correspondingly, the second network device receives the full information about the target ML submodel from the first network device.

The full information about the target ML submodel is information that can completely describe the target ML submodel, for example, source code that describes the target ML submodel, executable program code of the target ML submodel, or partially or completely compiled code of the target ML submodel. In this way, when the first network device provides the second network device with the full information about the target ML submodel, model synchronization does not need to be performed between the first network device and the second network device, and the second network device can still obtain the target ML submodel.

For the terminal device, the terminal device performs S404 to obtain the first inference result. Refer to FIG. 8. Before the terminal device is handed over from the first network device to the second network device, for the first inference result, statuses of transmission between the terminal device and the first network device may be classified into the following three cases:
First case (as shown in a block diagram of a "first case" in FIG. 8): All information of the first inference result (that is, a complete first inference result) is divided into two parts, that is, all information about the first inference result includes first partial information about the first inference result and second partial information about the first inference result. The first partial information about the first inference result is information that is about the first inference result and that is provided by the terminal device to the first network device. The second partial information about the first inference result is information that is about the first inference result and that is provided by the terminal device to the second network device. In other words, after the terminal device sends the first partial information about the first inference result to the first network device, the terminal device is handed over, that is, handed over from the first network device to the second network device, and the terminal device no longer interacts with the first network device, to send the second partial information about the first inference result to the second network device. In addition, to perform an inference operation of the target ML submodel on a network side, the first network device needs to send the first partial information of the first inference result to the second network device, so that the second network device performs the inference operation to obtain the target inference result. For details, refer to related descriptions of S802a to S802c in the first case.

S802a: The terminal device sends first partial information about the first inference result to the first network device. Correspondingly, the first network device receives the first partial information about the first inference result from the terminal device.

For example, still using "the first ML submodel includes the input layer and the first layer of the hidden layers of the ML model" in FIG. 1 as an example, the first inference result is an inference result of the first layer of the hidden layers. The terminal device sends first partial information about the inference result of the first layer of the hidden layers to the first network device. Correspondingly, the first network device receives the first partial information about the inference result of the first layer of the hidden layers from the terminal device.

It should be noted that the first network device may first perform S801, and then perform S802a, the first network device may first perform S802a, and then perform S801, or the first network device may simultaneously perform S801 and S802a. This is not limited in this embodiment of this application. Further, when the "target ML submodel" is carried in the handover request message, the first network device first performs S802a, and then performs S801.

S802b: The first network device sends the first partial information about the first inference result to the second network device. Correspondingly, the second network device receives the first partial information about the first inference result from the first network device.

It should be noted that Optionally, the first network device further sends state information of the first CRB to the second network device. Correspondingly, the second network device receives the state information of the first CRB from the first network device.

The state information of the first CRB includes an identifier of the first CRB and a state corresponding to each CRB sequence number in the first CRB. For example, a state corresponding to a CRB sequence number is represented by a status of a value of a bit. If a value of a bit corresponding to a CRB sequence number is "0", it indicates that a data part corresponding to the CRB sequence number is received unsuccessfully. If a value of a bit corresponding to a CRB sequence number is "1", it indicates that a data part corresponding to the CRB sequence number is received successfully. Alternatively, on the contrary, if a value of a bit corresponding to a CRB sequence number is "0", it indicates that a data part corresponding to the CRB sequence number is received successfully. If a value of a bit corresponding to a CRB sequence number is "1", it indicates that a data part corresponding to the CRB sequence number is received unsuccessfully. In this way, the second network device may learn of, according to the state information of the first CRB, the "data part that is unsuccessfully received by the first network device", and then the second network device may request the terminal device to resend the "data part that is unsuccessfully received by the first network device". In this way, the terminal device may send the "data part that is unsuccessfully received by the first network device" to the second network device, to ensure that the second network device obtains all information about the first inference result.

S802c: The terminal device sends second partial information about the first inference result to the second network device. Correspondingly, the second network device receives the second partial information about the first inference result from the terminal device.

In this case, the second network device may use the first partial information about the first inference result obtained from the first network device and the second partial information about the first inference result obtained from the terminal device as the input data of the target ML submodel, to perform an inference operation.

Second case (as shown in a block diagram of a "second case" in FIG. 8): After the terminal device sends the complete first inference result to the first network device, the terminal device is handed over, that is, handed over from the first network device to the second network device. For details, refer to related descriptions of S802a and S802b in the second case.

S802a: The terminal device sends all information about the first inference result to the first network device. In other words, the terminal device sends the complete first inference result to the first network device. Correspondingly, the first network device receives all information about the first inference result from the terminal device.

For example, still using "the first ML submodel includes the input layer and the first layer of the hidden layers of the ML model" in FIG. 1 as an example, the first inference result is an inference result of the first layer of the hidden layers. The terminal device sends all information about the inference result of the first layer of the hidden layers to the first network device. Correspondingly, the first network device receives all information about the inference result of the first layer of the hidden layers from the terminal device.

It should be noted that the first network device may first perform S801, and then perform S802a, the first network device may first perform S802a, and then perform S801, or the first network device may simultaneously perform S801 and S802a. This is not limited in this embodiment of this application. Further, when the "target ML submodel" is carried in the handover request message, the first network device first performs S802a, and then performs S801.

S802b: The first network device sends all information about the first inference result to the second network device. Correspondingly, the second network device receives all information about the first inference result from the first network device.

In this case, the second network device may use all information about the first inference result obtained from the first network device as the input data of the target ML submodel, to perform an inference operation.

Third case (as shown in a block diagram of a "third case" in FIG. 8): After the terminal device obtains the first inference result, the terminal device is handed over, that is, handed over from the first network device to the second network device. The terminal device does not provide the first inference result to the first network device, but provides the first inference result to the second network device. For details, refer to related descriptions of S802a in the third case.

S802a: The terminal device sends all information about the first inference result to the second network device. Correspondingly, the second network device receives all information about the first inference result from the terminal device.

For example, still using "the first ML submodel includes the input layer and the first layer of the hidden layers of the ML model" as an example, the first inference result is an inference result of the first layer of the hidden layers. The terminal device sends all information about the inference result of the first layer of the hidden layers to the second network device. Correspondingly, the second network device receives all information about the inference result of the first layer of the hidden layers from the terminal device.

In this case, the second network device may use all information about the first inference result obtained from the terminal device as the input data of the target ML, submodel, to perform an inference operation.

In the foregoing three cases, the second network device obtains all information about the first inference result in different manners, and performs local inference, that is, the second network device performs S803.

S803: The second network device calculates a target inference result based on all the information about the first inference result and the target ML submodel.

For example, still using "the first ML submodel includes the input layer and the first layer of the hidden layers of the ML model" in FIG. 1 as an example, the first inference result is an inference result of the first layer of the hidden layers. The target ML submodel includes the second layer of the hidden layers, the third layer of the hidden layers, and the output layer. The second network device uses all information about the first inference result as the input data of the target ML submodel, and performs inference calculation by using the target ML submodel, to obtain the target inference result. It should be noted that in the first case, after the second network device performs S802b and S802c, the second network device integrates the first partial information about the first inference result and the second partial information about the first inference result, to obtain all information about the first inference result, that is, the complete first inference result, and then performs S803 to obtain the target inference result.

S804: The second network device sends the target inference result to the terminal device. Correspondingly, the terminal device receives the target inference result from the second network device.

For a specific implementation process of S804, refer to related descriptions of S407. Details are not described herein again.

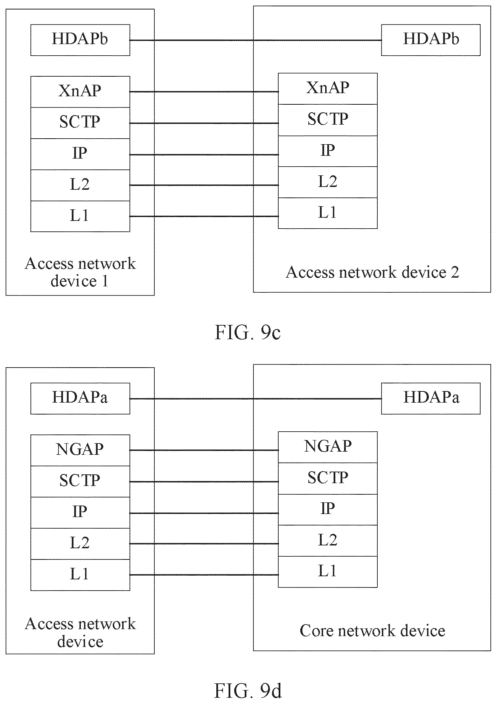

It should be noted that when an Xn interface exists between the first network device and the second network device, in the foregoing steps, a message is transmitted between the first network device and the second network device through the Xn interface. The first network device and the second network device may transmit related information by using an existing protocol stack, or may transmit related information by using a protocol stack shown in FIG. 9c. For example, the message between the first network device and the second network device is carried in a high data analytics protocol type b (high data analytics protocol type b, HDAPb) message. The HDAPb protocol supports functions such as computing data transmission (for example, data partitioning and data sorting) and computing data security (for example, data integrity protection, data encryption, and data decryption) between the first network device and the second network device. The HDAPb message may be carried in an XnAP message. FIG. 9c shows a protocol stack between two access network devices (that is, an access network device 1 and an access network device 2). The protocol stack is for transmitting related information of an inference operation between the two access network devices. The protocol stack mainly includes an HDAP layer, an Xn application protocol (Xn application protocol, XnAP) layer, a Stream Control Transmission Protocol (stream control transmission protocol, SCTP) layer, an Internet Protocol (internet protocol, IP) layer, an L2 layer, and an L 1 layer. The related information may be, for example, but is not limited to, the following information: information about the target ML submodel, the first partial information about the first inference result, and all information about the first inference result.

On the contrary, when there is no Xn interface between the first network device and the second network device, in the foregoing steps, information is transmitted between the first network device and the second network device by using a core network device. Using "the first network device sends all information about the first inference result to the second network device" as an example, the first network device sends all information about the first inference result to the core network device through the NG interface. Correspondingly, the core network device receives all information about the first inference result from the first network device. Then, the core network device sends all information about the first inference result to the second network device. Correspondingly, the second network device receives all information about the first inference result from the core network device. The first network device (or the second network device) and the core network device may transmit related information by using an existing protocol stack, or may transmit related information by using a protocol stack shown in FIG. 9d. For example, the message between the first network device (or the second network device) and the core network device is carried in a high data analytics protocol type a (high data analytics protocol type a, HDAPa) message. The HDAPa protocol supports functions such as computing data transmission (for example, data partitioning and data sorting) and computing data security (for example, data integrity protection, data encryption, and data decryption) between the first network device (or the second network device) and the core network device. The HDAPa message may be carried in a next generation application protocol (next generation application protocol, NGAP) message. FIG. 9d shows a protocol stack between an access network device and a core network device. The protocol stack is for transmitting related information of an inference operation between the access network device and the core network device. The protocol stack mainly includes an HDAPa layer, an NGAP layer, an SCTP layer, an IP layer, an L2 layer, and an L1 layer

The following describes the second collaborative inference method provided in embodiments of this application in an "RRC connection resume" or "RRC connection reestablishment" scenario. It should be noted that in this scenario, the terminal device encounters RRC interruption, failure, or suspension in an area served by the first network device, then enters an area served by the second network device, and initiates RRC connection resume or RRC connection reestablishment to the second network device.

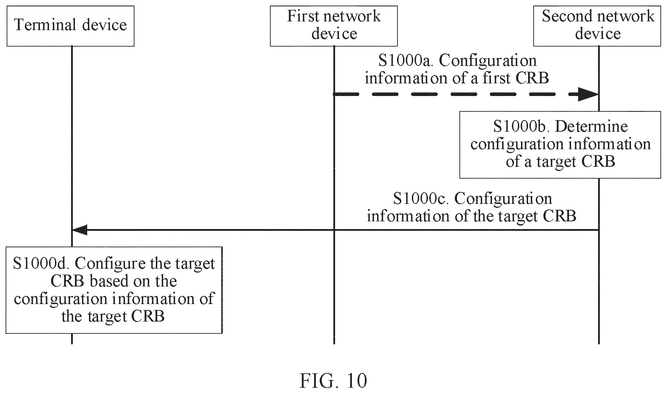

It should be noted that in the RRC connection resume scenario or RRC connection reestablishment scenario, a process of configuring a target CRB (that is, a specific implementation process of S800) is shown in steps in FIG. 10.

S1000a: The first network device sends configuration information of the first CRB to a second network device.

For related descriptions of the "configuration information of the first CRB", refer to the description of S800a. Details are not described herein again. In the "RRC connection resume" scenario, the configuration information of the first CRB may be carried in a retrieve UE context response (retrieve UE context response) message. Certainly, the configuration information of the first CRB may alternatively be carried in another message. This is not limited in this embodiment of this application.

It should be noted that S1000a is an optional step. When the first CRB exists between the terminal device and the first network device, the first network device may perform S1000a, or may not perform 51000a. When the first CRB does not exist between the terminal device and the first network device, the first network device does not need to perform S1000a.

S1000b: The second network device determines configuration information of a target CRB.

For a specific implementation process of S1000b, refer to related descriptions of S800b. Details are not described herein again.

S1000c: The second network device sends the configuration information of the target CRB to the terminal device. Correspondingly, the terminal device receives the configuration information of the target CRB from the second network device.

S1000d: The terminal device configures the target CRB based on the configuration information of the target CRB.

For a specific implementation process of S1000d, refer to related descriptions of S800e. Details are not described herein again.

In this way, in a scenario in which the terminal device performs RRC connection resume, after the second network device determines the configuration information of the target CRB, the second network device provides the configuration information of the target CRB to the terminal device, so that the terminal device configures the target CRB, and transmits inference-related information to the second network device by using the target CRB.

In addition, in the "RRC connection resume" scenario, the information transmission process between the terminal device and the network device may further include the following step 1a to step 1c.

Step 1a: The terminal device sends an RRC resume request message to the second network device. Correspondingly, the second network device receives the RRC resume request message from the terminal device.

The RRC resume request message is for requesting to resume an RRC connection. The RRC resume request message includes an RRC resume cause. For example, the RRC resume cause is that the terminal device needs to send the first inference result.

Step 1b: The second network device sends a retrieve UE context request message to the first network device. Correspondingly, the first network device receives the retrieve UE context request message from the second network device.

The retrieve UE context request message is for requesting a context of the terminal device. For example, the retrieve UE context request message includes an RRC resume cause. The RRC resume cause is still that the terminal device needs to send the first inference result.

Step 1c: The first network device sends a retrieve UE context response (retrieve UE context response) message to the second network device. Correspondingly, the second network device receives the retrieve UE context response message from the first network device.

In the "RRC connection reestablishment" scenario, the information transmission process between the terminal device and the network device includes the following step 2a to step 2c.

Step 2a: The terminal device sends an RRC reestablishment request (RRC reestablishment request) message to the second network device. Correspondingly, the second network device receives the RRC reestablishment request message from the terminal device.

The RRC reestablishment request message is for requesting to reestablish an RRC connection. The RRC reestablishment request message includes an RRC reestablishment cause. For example, the RRC reestablishment cause is that the terminal device needs to send the first inference result.

Step 2b: The second network device sends a retrieve UE context request message to the first network device. Correspondingly, the first network device receives the retrieve UE context request message from the second network device. For a description of step 2b, refer to related description of step 1b in the "RRC connection resume" scenario. Details are not described herein again.

Step 2c: The first network device sends a retrieve UE context response (retrieve UE context response) message to the second network device. Correspondingly, the second network device receives the retrieve UE context response message from the first network device. For a description of step 2c, refer to related description of step 1c in the "RRC connection resume" scenario. Details are not described herein again.

In the "RRC connection resume" or "RRC connection reestablishment" scenario, in a specific implementation process of S801, the information about the target ML submodel (for example, the second target indication information or the full information about the target ML submodel) may be carried in the retrieve UE context response message

It should be noted that in the "RRC connection resume" or "RRC connection reestablishment" scenario, all information of the first inference result (that is, the complete first inference result) may still be divided into two parts. For details, refer to related descriptions in FIG. 8. Details are not described herein again. That is, after the terminal device sends the first partial information about the first inference result to the first network device, if the first network device receives the retrieve UE context request message from the second network device, the first network device no longer interacts with the terminal device. In this case, the terminal device and the second network device perform an RRC connection resume process, and the terminal device sends the second partial information about the first inference result to the second network device. In addition, to perform an inference operation of the target ML submodel on a network side, the first network device further sends the first partial information of the first inference result to the second network device, so that the second network device performs the inference operation. Refer to specific implementation of the first case in FIG. 8.

Alternatively, after the terminal device sends the complete first inference result to the first network device, if the first network device receives the retrieve UE context request message from the second network device, the first network device sends the complete first inference result to the second network device, so that the second network device performs the inference operation. Refer to specific implementation of the second case in FIG. 8.

Alternatively, the terminal device and the second network device perform an RRC connection resume process. The first network device receives the retrieve UE context request message from the second network device, and the first network device no longer interacts with the terminal device. After the terminal device obtains the first inference result, the terminal device provides the complete first inference result to the second network device. Refer to specific implementation of the third case in FIG. 8.

In the second collaborative inference method provided in this embodiment of this application, even if the terminal device is handed over from the first network device to the second network device, or the terminal device performs RRC connection resume to access the second network device, or the terminal device performs RRC connection reestablishment to access the second network device, after obtaining the first inference result, the terminal device can provide all information about the first inference result to the second network device directly (for example, the terminal device sends all information about the first inference result to the second network device) or indirectly (for example, the first network device forwards the first partial information or all information about the first inference result of the terminal device to the second network device). The second network device can perform an operation on all information about the first inference result with reference to the target ML submodel, to obtain the target inference result, and then provides the target inference result to the terminal device, so that the terminal device does not need to perform a complete inference operation, thereby reducing a delay in obtaining the target inference result by the terminal device. Similarly, the terminal device provides the network device with an intermediate result calculated by the ML model instead of input data of the ML model, thereby reducing a risk of "data privacy exposure" and improving data security of the terminal device.

The foregoing second collaborative inference method is described by using a scenario in which "the first network device does not perform an inference operation" as an example. The following describes the collaborative inference method in embodiments of this application by using a scenario in which "the first network device performs an inference operation" as an example. Still using an example in which the terminal device is handed over, after the first network device obtains the complete first inference result provided by the terminal device, if the first network device determines that the terminal device does not need to be handed over, the first network device performs an inference operation. Then, using an example in which the terminal device is subjected to "RRC connection resume" or "RRC connection reestablishment", after the first network device obtains the complete first inference result provided by the terminal device, if the first network device has not received a retrieve UE context request message from the second network device, the first network device performs an inference operation.

In a scenario in which the first network device performs an inference operation, the ML model includes the first ML submodel and the target ML submodel. Optionally, the ML model further includes a second ML submodel. On the terminal device side, a model for performing inference is described as the "first ML submodel", and an obtained inference result is described as the "first inference result". On the first network device side, when the first network device performs an inference operation based on the first inference result to obtain the target inference result, a model used by the first network device to perform inference is described as a "target ML submodel", and an obtained inference result is described as a "target inference result". For details, refer to related descriptions in the following "second case". Alternatively, when the first network device performs an inference operation based on the first inference result, but does not obtain the target inference result, the model used by the first network device to perform inference is described as "a second ML submodel", and the obtained inference result is described as "a second inference result". For details, refer to related descriptions of the following "first case". On the second network device side, a model for performing inference is described as the "target ML submodel", and an obtained inference result is described as the "target inference result". Optionally, when the inference-related information is transmitted by using CRBs, a CRB between the terminal device and the first network device is described as a "first CRB", and a CRB between the terminal device and the second network device is described as a "target CRB".

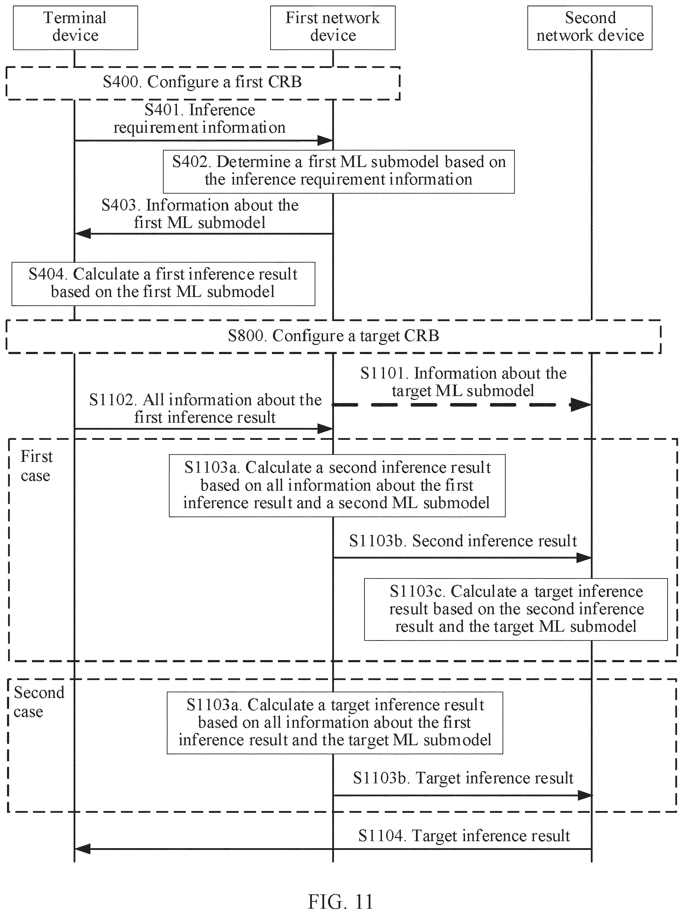

The following describes a third collaborative inference method provided in an embodiment of this application by using an example in which a terminal device is handed over (that is, the terminal device is handed over from a first network device to a second network device, and in this case, the first network device is a first access network device and the second network device is a second access network device). The collaborative inference method is applied to a machine learning process. Refer to FIG. 11. The collaborative inference method includes S400 to S404, S800, and the following steps.

It should be noted that Optionally, in a handover scenario, for a process of "configuring the target CRB" (that is, a specific implementation process of S800), refer to related descriptions in FIG. 9a. Details are not described herein again.

S1101: The first network device sends information about a target ML submodel to the second network device. Correspondingly, the second network device receives the information about the target ML submodel from the first network device.

In this case, the target ML submodel in the scenario in FIG. 11 is different from the target ML submodel in FIG. 4 (or FIG. 8). The ML model includes a first ML submodel, a second ML submodel, and a target ML submodel. In other words, the output data of the first ML submodel corresponds to the input data of the second ML submodel, and the output data of the second ML submodel corresponds to the input data of the target ML submodel. In other words, after segmenting the ML model to obtain the first ML submodel, the first network device further segments the ML model to obtain the second ML submodel and the target ML submodel. For a description of the "second ML submodel", refer to related descriptions of S1103a in the first case. Details are not described herein again. For example, still using the ML model shown in FIG. 1 as an example, and still using "the first ML submodel includes the input layer and the first layer of the hidden layers" as an example, when the second ML submodel includes the second layer of the hidden layers, the target ML submodel includes the third layer of the hidden layers and the output layer of the ML model.

For example, for a specific implementation process of S1101, refer to related descriptions of S801. Details are not described herein again.

It should be noted that S1101 is an optional step. When the first network device performs an inference operation based on the first inference result but does not obtain the target inference result, the first network device performs S1101. For details, refer to related descriptions of the following "first case". On the contrary, when the first network device performs the inference operation based on the first inference result to obtain the target inference result, the first network device does not need to perform S1101. For details, refer to related descriptions of the following "second case". For the terminal device, the terminal device performs S404 to obtain the first inference result. Then, the terminal device performs S1102.

S1102: The terminal device sends all information about the first inference result to the first network device. In other words, the terminal device sends the complete first inference result to the first network device. Correspondingly, the first network device receives all information about the first inference result from the terminal device.

For a specific implementation process of S1102, refer to related descriptions of S802a in the second case in FIG. 8. Details are not described herein again.

It should be noted that the first network device may first perform S1101, and then perform S1102, the first network device may first perform S1102, and then perform S1101, or the first network device may simultaneously perform S1101 and S1102. This is not limited in this embodiment of this application. Further, when the "target ML submodel" is carried in the handover request message, the first network device first performs S1102, and then performs S1101.

For the first network device, after the first network device obtains all information about the first inference result, the first network device performs local inference. The local inference performed by the first network device includes the following two cases:
First case (as shown in a block diagram of a "first case" in FIG. 11): In a process of performing local inference, if the first network device determines that handover needs to be initiated for the terminal device, the first network device stops a local inference operation process, and provides the second inference result and the target ML submodel to the second network device, and then the second network device continues to perform the inference operation on the second inference result by using the target ML submodel, to obtain the target inference result. Alternatively, in a process of performing local inference, if the first network device determines that handover needs to be initiated for the terminal device, and a computing capability of the second network device is better than a computing capability of the first network device, the first network device still stops the local inference operation process, and provides the second inference result to the second network device, and then the second network device continues to perform the inference operation based on the second inference result. In this case, the ML model includes a first ML submodel, a second ML submodel, and a target ML submodel. For details, refer to related descriptions in S1103a to S1103c.

S1103a: The first network device calculates a second inference result based on all information about the first inference result and a second ML submodel.

Input data of the second ML submodel corresponds to output data of the first ML submodel.

For example, still using the ML model shown in FIG. 1 as an example, when the first ML submodel includes the input layer and the first layer of the hidden layers, the first inference result is an inference result of the first layer of the hidden layers. The second ML submodel includes the second layer of the hidden layers. The first network device uses the inference result of the first layer of the hidden layers as the input data of the second ML submodel, to obtain an inference result of the second layer of the hidden layers, that is, the second inference result.

Sll03b: The first network device sends the second inference result to the second network device. Correspondingly, the second network device receives the second inference result from the first network device.

For example, when the second ML submodel includes the second layer of the hidden layers, the second inference result is an inference result of the second layer of the hidden layers. The first network device sends the inference result of the second layer of the hidden layers to the second network device.

S1103c: The second network device calculates a target inference result based on the second inference result and the target ML submodel.

Input data of the target ML submodel corresponds to output data of the second ML submodel. For a process of obtaining the target ML submodel by the second network device, refer to related descriptions in S1101. Details are not described herein again.

For example, still using the ML model shown in FIG. 1 as an example, when the second ML submodel includes the second layer of the hidden layers, the second inference result is an inference result of the second layer of the hidden layers. The target ML submodel includes the third layer of the hidden layers and the output layer of the ML model. The second network device uses the inference result of the second layer of the hidden layers as the input data of the target ML submodel, to obtain the target inference result.

Second case (as shown in a block diagram of a "second case" in FIG. 11): The terminal device is handed over only after the first network device performs a local inference process. In this way, the first network device performs a local inference operation process to obtain a target inference result. Because the terminal device has been handed over and the first network device cannot provide the target inference result to the terminal device, the first network device provides the target inference result to the second network device and the second network device provides the target inference result to the terminal device. In this case, the ML model includes a first ML submodel and a target ML submodel. For details, refer to related descriptions in S1103 a and S1103b.

S1103a: The first network device calculates a target inference result based on all information about the first inference result and the target ML submodel.

Input data of the target ML submodel corresponds to output data of the first ML submodel.

For example, still using the ML model shown in FIG. 1 as an example, when the first ML submodel includes the first layer of the hidden layers, the first inference result is an inference result of the first layer of the hidden layers. The target ML submodel includes the second layer of the hidden layers, the third layer of the hidden layers, and the output layer. The first network device uses the inference result of the first layer of the hidden layers as the input data of the target ML submodel, to obtain the target inference result.

S1103b: The first network device sends the target inference result to the second network device. Correspondingly, the second network device receives the target inference result from a first network device.

For example, when "the target ML submodel includes the second layer of the hidden layers, the third layer of the hidden layers, and the output layer", the target inference result is a final inference result of the ML model. The first network device sends the final inference result of the ML model to the second network device. In this case, the first network device provides the target inference result to the second network device. The second network device does not need to obtain the target ML submodel, that is, the second network device does not need to perform S1101.

It should be noted that if the first network device determines, in a process of performing local inference, that the terminal device is handed over, and a computing capability of the first network device is better than a computing capability of the second network device, the first network device may stop the local inference operation process and provide the second inference result to the second network device, and then the second network device continues to perform the inference operation based on the second inference result, that is, perform the execution process of the foregoing "first case". Alternatively, the first network device may continue to perform the local inference operation process to obtain the target inference result, and then provide the target inference result to the second network device, that is, perform the execution process of the "second case". This is not limited in this embodiment of this application.

In the foregoing two cases, the second network device obtains the target inference result in different manners, and then the second network device performs S1104.

S1104: The second network device sends the target inference result to the terminal device. Correspondingly, the terminal device receives the target inference result from the second network device.

For a specific implementation process of S1104, refer to related descriptions of S804. Details are not described herein again.

It should be noted that in the foregoing steps, when an Xn interface exists between the first network device and the second network device, in the foregoing steps, related information is transmitted between the first network device and the second network device through the Xn interface. On the contrary, when there is no Xn interface between the first network device and the second network device, in the foregoing steps, the foregoing related information is transmitted between the first network device and the second network device by using a core network device. The related information may be, for example, but is not limited to, the following information: information about the target ML submodel, the second inference result, and the target inference result.

The following describes the third collaborative inference method provided in embodiments of this application by using an example in which the terminal device performs an RRC connection resume process or an RRC connection reestablishment process.

It should be noted that in the "RRC connection resume" scenario or the "RRC connection reestablishment" scenario, in a process of performing local inference by the first network device, if the first network device receives a retrieve UE context request message from the second network device, the first network device stops a local inference operation process. The first network device provides the second inference result to the second network device, and then the second network device continues to perform an inference operation based on the second inference result, to obtain the target inference result. Alternatively, in a process of performing local inference by the first network device, the first network device receives a retrieve UE context request message from the second network device, and a computing capability of the second network device is better than a computing capability of the first network device, the first network device stops the local inference operation process, and provides the second inference result to the second network device, and then the second network device continues to perform the inference operation based on the second inference result. For details, refer to specific implementation of the first case in FIG. 11.

Alternatively, after the process of performing local inference by the first network device ends, if the first network device receives a retrieve UE context request message from the second network device, the first network device provides the target inference result to the second network device. For details, refer to specific implementation of the second case in FIG. 11.

In addition, in the "RRC connection resume" scenario or the "RRC connection reestablishment" scenario, in a process of performing local inference by the first network device, if the first network device receives a retrieve UE context request message from the second network device, and a computing capability of the first network device is better than a computing capability of the second network device, the first network device may stop the local inference operation process and provide the second inference result to the second network device, and then the second network device continues to perform the inference operation based on the second inference result, that is, perform the execution process of the foregoing "first case". Alternatively, the first network device may continue to perform the local inference operation process to obtain the target inference result, and then provide the target inference result to the second network device, that is, perform the execution process of the " second case". This is not limited in this embodiment of this application.

In the third collaborative inference method provided in this embodiment of this application, the terminal device can determine the first inference result, and send all information about the first inference result to the first network device, and the first network device can perform an operation on all information about the first inference result with reference to the target ML submodel, to obtain the target inference result, and then provide the target inference result to the terminal device by using the second network device. Alternatively, the first network device performs an operation on all information about the first inference result with reference to the second ML submodel, to obtain the second inference result, and then the second network device performs an operation on the second inference result with reference to the target ML submodel, to obtain the target inference result, and then provides the target inference result to the terminal device. In this way, even if the terminal device is handed over from the first network device to the second network device, or the terminal device performs RRC connection resume, or the terminal device performs RRC connection reestablishment, the terminal device does not need to perform a complete inference operation, thereby reducing a delay in obtaining the target inference result by the terminal device. Similarly, the terminal device provides the network device with an intermediate result calculated by the ML model instead of input data of the ML model, thereby reducing a risk of "data privacy exposure" and improving data security of the terminal device.

The foregoing second or third collaborative inference method is described by using a scenario in which "the first network device determines the first ML submodel" as an example. In the following, still using an example in which the terminal device is handed over, after the first network device obtains the inference requirement information provided by the terminal device, if the first network device determines that the terminal device is handed over, the first network device does not determine the first ML submodel. Alternatively, after the first network device obtains the inference requirement information provided by the terminal device, if the first network device determines that the terminal device needs to be handed over, and a computing capability of the second network device is better than a computing capability of the first network device, the first network device still does not determine the first ML submodel, and the second network device determines the first ML submodel. Then, using an example in which the terminal device is subjected to "RRC connection resume" or "RRC connection reestablishment", after the first network device obtains the inference requirement information provided by the terminal device, if the first network device receives a retrieve UE context request message from the second network device, the first network device does not determine the first ML submodel. The first network device provides the inference requirement information to the second network device, and then the second network device determines the first ML submodel. A scenario in which "the second network device determines the first ML submodel" is used as an example to describe the collaborative inference method in this embodiment of this application. In a scenario in which the second network device determines the first ML submodel, the ML model includes the first ML submodel and the target ML submodel. On the terminal device side, a model for performing inference is described as the "first ML submodel", and an obtained inference result is described as the "first inference result". On the second network device side, a model for performing inference is described as the "target ML submodel", and an obtained inference result is described as the "target inference result". Optionally, when the inference-related information is transmitted by using CRBs, a CRB between the terminal device and the first network device is described as a "first CRB", and a CRB between the terminal device and the second network device is described as a "target CRB".

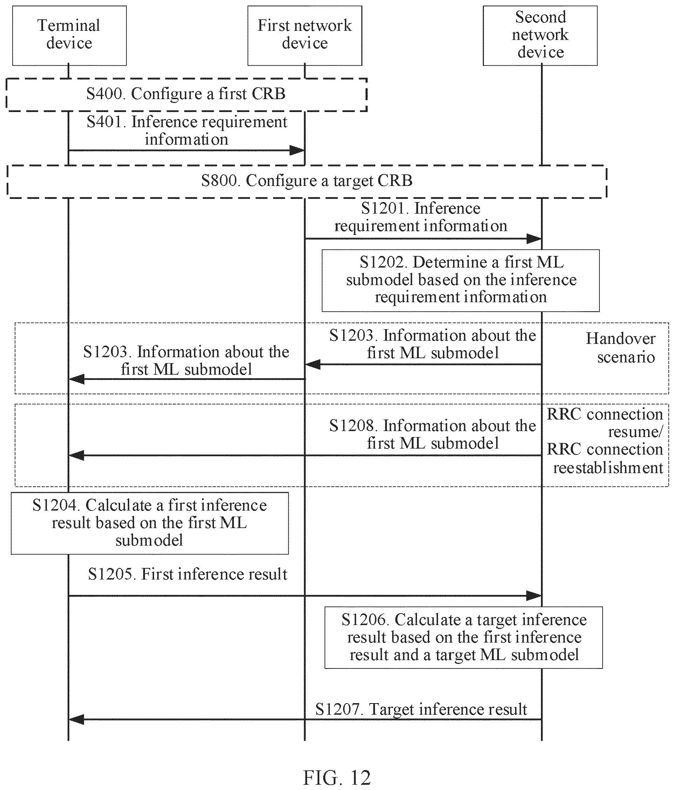

The following describes a fourth collaborative inference method provided in an embodiment of this application by using an example in which a terminal device is handed over (that is, the terminal device is handed over from a first network device to a second network device). The collaborative inference method is applied to a machine learning process. Refer to FIG. 12. The collaborative inference method includes S400, S401, 5800, and the following steps.

It should be noted that Optionally, when inference-related information is transmitted by using a CRB, for a process of "configuring a target CRB", refer to related descriptions in FIG. 9a. Details are not described herein again.

S1201: The first network device sends inference requirement information to the second network device. Correspondingly, the second network device receives the inference requirement information from the first network device.

For related descriptions of the "inference requirement information", refer to related descriptions of S401. Details are not described herein again.

In a "handover" scenario, the inference requirement information may be carried in a handover request message. The handover request message is for requesting to hand over the terminal device to the second network device.

S1202: The second network device determines a first ML submodel based on the inference requirement information.

For a specific implementation process of S1202, refer to related descriptions of S402. Details are not described herein again.

S1203: The second network device sends information about the first ML submodel to the terminal device by using the first network device. Correspondingly, the terminal device receives the information about the first ML submodel from the second network device by using the first network device.

The first ML submodel is used by the terminal device to perform an inference operation, to obtain the first inference result. S1203 is specifically shown in a block diagram of a "handover scenario" in FIG. 12. Specific implementation of S1203 is described below in two possible implementations.

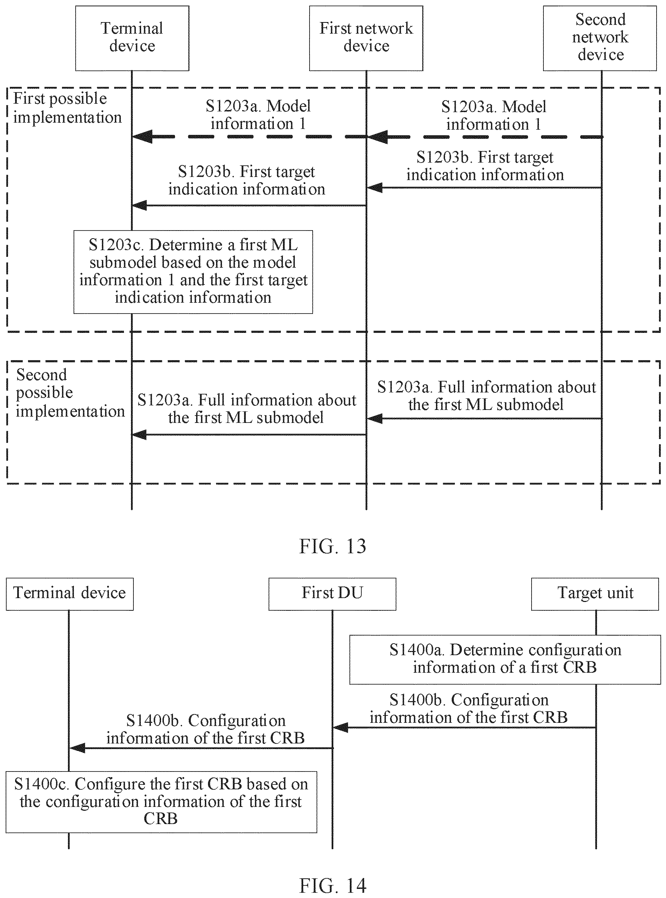

In a first possible implementation, as shown in a block diagram of the "first possible implementation" in FIG. 13, when ML model synchronization between the second network device and the terminal device is implemented, the second network device indicates the first ML submodel by using the first target indication information. That "ML model synchronization between the second network device and the terminal device is implemented" means that a meaning represented by a segmentation option of the ML model is applicable to the second network device and the terminal device. In other words, the second network device and the terminal device have a same understanding of the meaning represented by the segmentation option of the ML model. S1203 is specifically implemented as S1203b. Specific descriptions of steps shown in FIG. 13 are as follows:

S1203a: The second network device sends model information 1 to the terminal device by using the first network device. Correspondingly, the terminal device receives the model information 1 from the second network device by using the first network device.

For a description of the model information 1, refer to related descriptions in S403a. Details are not described herein again. A specific implementation process of S1203a is as follows: The second network device sends model information 1 to the first network device. Correspondingly, the first network device receives the model information 1 from the second network device. Then, the first network device sends the model information 1 to the terminal device. Correspondingly, the terminal device receives the model information 1 from the first network device.

It should be noted that S1203a is an optional step. For example, if the terminal device and the second network device obtain the model information 1 from another network device in advance, S1203a does not need to be performed. The terminal device and the second network device may alternatively obtain the model information 1 from a network control device, to implement model synchronization between the terminal device and the second network device. The network control device may be an OAM device.

S1203b: The second network device sends first target indication information to the terminal device by using the first network device. Correspondingly, the terminal device receives the first target indication information from the second network device by using the first network device.

For a description of the first target indication information, refer to related descriptions in S403b. Details are not described herein again. A specific implementation process of S1203b is as follows: The second network device sends the first target indication information to the first network device. Correspondingly, the first network device receives the first target indication information from the second network device. Then, the first network device sends the first target indication information to the terminal device. Correspondingly, the terminal device receives the first target indication information from the first network device.

S1203c: The terminal device determines a first ML submodel based on the model information 1 and the first target indication information.

For a specific implementation process of S1203c, refer to descriptions of S403c. Details are not described herein again.

In this way, the second network device sends the model information 1 to the terminal device by using the first network device, to indicate a segmentation location corresponding to a segmentation option of the ML model, to implement ML model synchronization between the second network device and the terminal device. Then, the second network device may send the first target indication information (that is, a segmentation option corresponding to the first ML submodel) to the terminal device by using the first network device, so that the terminal device determines the first ML submodel, thereby saving transmission resources.

In a second possible implementation, as shown in a block diagram of the "second possible implementation" in FIG. 13, when ML model synchronization is not performed, S1203 is specifically implemented as S1203a.

S1203a: The second network device sends full information about the first ML submodel to the terminal device by using the first network device. Correspondingly, the terminal device receives the full information about the first ML submodel from the second network device by using the first network device.

The full information about the first ML submodel is information that can completely describe the first ML submodel, for example, source code that describes the first ML submodel, executable program code of the first ML submodel, or partially or completely compiled code of the first ML submodel. In other words, model synchronization does not need to be performed between the terminal device and the second network device, and the second network device provides the full information about the first ML submodel to the terminal device by using the first network device. A specific implementation process of S1203a is as follows: The second network device sends the full information about the first ML submodel to the first network device. Correspondingly, the first network device receives the full information about the first ML submodel from the second network device. Then, the first network device sends the full information about the first ML submodel to the terminal device. Correspondingly, the terminal device receives the full information about the first ML submodel from the first network device.

S1204: The terminal device calculates a first inference result based on the first ML submodel.

For a specific implementation process of S1204, refer to related descriptions of S404. Details are not described herein again.

S1205: The terminal device sends the first inference result to the second network device. Correspondingly, the second network device receives the first inference result from the terminal device.

The first inference result refers to a complete first inference result. For a specific implementation process of S 1205, refer to related descriptions of S802a in the third case in FIG. 8. Details are not described herein again.

S1206: The second network device calculates a target inference result based on the first inference result and a target ML submodel.

The target ML submodel includes at least the output layer of the ML model, and input data of the target ML submodel corresponds to output data of the first ML submodel. For example, using "the first ML submodel includes the input layer and the first layer of the hidden layers of the ML model" in FIG. 1 as an example, the target ML submodel includes the second layer of the hidden layers, the third layer of the hidden layers, and the output layer of the ML model.

The target inference result is a final inference result of the ML model.

For example, the second network device inputs all information about the first inference result to the target ML submodel, and performs processing at the second layer of the hidden layers, the third layer of the hidden layers, and the output layer by using the target ML submodel, to obtain the target inference result. For a specific implementation process of S1206, refer to related descriptions of S803. Details are not described herein again.

S1207: The second network device sends the target inference result to the terminal device. Correspondingly, the terminal device receives the target inference result from the second network device.

For a specific implementation process of S1207, refer to related descriptions of S804. Details are not described herein again.

It should be noted that in the foregoing steps, when an Xn interface exists between the first network device and the second network device, in the foregoing steps, related information is transmitted between the first network device and the second network device through the Xn interface. On the contrary, when there is no Xn interface between the first network device and the second network device, in the foregoing steps, the related information is transmitted between the first network device and the second network device by using a core network device. The related information may be, for example, but is not limited to, the following information: inference requirement information and information about the first ML submodel.

In the following, when the terminal device performs an RRC connection resume process or an RRC connection reestablishment process, the fourth collaborative inference method provided in this embodiment of this application is also applicable. Compared with the fourth collaborative inference method in the foregoing handover scenario, differences include the following descriptions:

First, when the inference-related information is transmitted by using the CRB, for a "process of configuring the target CRB", refer to steps shown in FIG. 10. Details are not described herein again.

Second, "the second network device provides information about the first ML submodel to the terminal device" is specifically implemented as S1208 shown in a block diagram of "RRC connection resume/RRC connection reestablishment" in FIG. 12.

S1208: The second network device sends the information about the first ML submodel to the terminal device. Correspondingly, the terminal device receives the information about the first ML submodel from the second network device.

The first ML submodel is used by the terminal device to perform an inference operation, to obtain the first inference result. For a specific implementation process of S1208, refer to related descriptions in FIG. 6, that is, the second network device performs related processing steps of the first network device in FIG. 6. Details are not described herein again.

In the fourth collaborative inference method provided in this embodiment of this application, even if the terminal device is handed over from the first network device to the second network device, the terminal device performs RRC connection resume, or the terminal device performs RRC connection reestablishment, when the first network device sends the inference requirement information to the second network device, the second network device can determine the first ML submodel for the terminal device, so that the terminal device obtains the first inference result. After obtaining the first inference result, the terminal device can send all information about the first inference result to the second network device. The second network device can perform an operation on all information about the first inference result with reference to the target ML submodel, to obtain the target inference result, and then provides the target inference result to the terminal device, so that the terminal device does not need to perform a complete inference operation, thereby reducing a delay in obtaining the target inference result by the terminal device. Similarly, the terminal device provides the network device with an intermediate result calculated by the ML model instead of input data of the ML model, thereby reducing a risk of "data privacy exposure" and improving data security of the terminal device.

The foregoing describes the collaborative inference method in embodiments of this application by using an interaction process between "a terminal device and a network device" as an example. The following further describes a case in which "the access network device is implemented as a segmentation architecture".

In embodiments of this application, a terminal device provides inference-related information (for example, a first inference result) to a first DU, and receives a target inference result from the first DtJ. The ML model includes the first ML submodel and the target ML submodel. On the terminal device side, a model for performing inference is described as the "first ML submodel", and an obtained inference result is described as the "first inference result". On the first DU side, a model for performing inference is described as the "target ML submodel", and an obtained inference result is described as the "target inference result". The target inference result is a final inference result of the ML model. In a scenario in which the access network device is implemented as a segmentation architecture, at least one of a CU, a CU-CP, and a DAM unit is described as a "target unit".

An embodiment of this application provides a fifth collaborative inference method. The collaborative inference method is applied to a machine learning process. For a specific implementation process, refer to the steps shown in FIG. 4, that is, the first DU performs related steps of the first network device. In addition, compared with the first collaborative inference method shown in FIG. 4, differences include the following descriptions:

First, in a scenario in which "the access network device is implemented as a segmentation architecture", a CRB between the terminal device and the target unit is described as "a first CRB". A specific process of "configuring the first CRB" is shown in FIG. 14:
S1400a: The target unit determines configuration information of the first CRB.

For descriptions of the "configuration information of the first CRB", refer to the related description of S400a. Details are not described herein again.

S1400b: The target unit sends the configuration information of the first CRB to the terminal device by using the first DU. Correspondingly, the terminal device receives the configuration information of the first CRB from the target unit by using the first DU.

For example, the target unit sends the configuration information of the first CRB to the first DU. Correspondingly, the first DU receives the configuration information of the first CRB from the target unit. Then, the first DU sends the configuration information of the first CRB to the terminal device. Correspondingly, the terminal device receives the configuration information of the first CRB from the first DU.

S1400c: The terminal device configures the first CRB based on the configuration information of the first CRB.

For a specific implementation process of S1400c, refer to related descriptions of S400c. Details are not described herein again.

In this way, when the terminal device obtains the configuration information of the first CRB, the terminal device may configure the first CRB, to transmit inference-related information by using the first CRB.

Second, in a process of transmitting inference-related information (for example, the inference requirement information and all information about the first inference result), if the terminal device sends information to the first DU, there are the following two manners in a specific implementation process:
Manner 1: The terminal device directly sends information to the first DIJ.
Manner 2: The terminal device sends information to the first DU by using the target unit. In this manner, the terminal device sends information to the target unit by using an RRC message. Correspondingly, the target unit receives the RRC message from the terminal device. The information sent by the terminal device to the first DU is carried in the RRC message. Then, the target unit determines the information carried in the RRC message. The target unit sends the information carried in the RRC message to the first DU. Correspondingly, the first DU receives the information from the target unit. An example in which the terminal device sends the inference requirement information to the first DU is used to describe a process of "sending information to the first DU by the terminal device": The terminal device sends the inference requirement information to the target unit by using the RRC message. Correspondingly, the target unit receives the RRC message from the terminal device. Then, the target unit determines the inference requirement information carried in the RRC message. The target unit sends the inference requirement information to the first DU. Correspondingly, the first DU receives the inference requirement information from the target unit.

Optionally, when the terminal device configures the first CRB, the terminal device sends information (for example, the inference requirement information and all information about the first inference result) to the target unit by using the first CRB. Correspondingly, the target unit receives the information from the terminal device by using the first CRB.

If the first DU sends information (for example, the information about the first ML submodel and the target inference result) to the terminal device, there are the following two manners in a specific implementation process:
Manner 1: The first DU directly sends information to the terminal device.
Manner 2: The first DU sends information to the terminal device by using the target unit. In this case, the first DU sends information to the target unit. Correspondingly, the target unit receives the information from the first DU. Then, the target unit sends the information to the terminal device by using an RRC message. Correspondingly, the terminal device receives the RRC message from the target unit. The RRC message carries the information sent by the first DU to the terminal device. An example in which the first DU sends the target inference result to the terminal device is used to describe a process of "sending, by the first DU, the target inference result to the terminal device": The first DU sends the target inference result to the target unit. Correspondingly, the target unit receives the target inference result from the first DU. Then, the target unit sends the target inference result to the terminal device by using the RRC message. Correspondingly, the terminal device receives the RRC message from the target unit. The RRC message carries the target inference result.

Optionally, when the terminal device configures the first CRB, the target unit sends information (for example, information about the first ML submodel and the target inference result) to the terminal device by using the first CRB. Correspondingly, the terminal device receives the information from the target unit by using the first CRB.

According to the fifth collaborative inference method provided in this embodiment of this application, the terminal device performs a partial inference operation by using the first ML submodel, to obtain the first inference result, and provides the first inference result to the first DU. The first DU can perform an operation on all information about the first inference result with reference to the target ML submodel, to obtain the target inference result, and then provides the target inference result to the terminal device, so that the terminal device does not need to perform a complete inference operation, thereby reducing a delay in obtaining the target inference result by the terminal device. Similarly, the terminal device provides the DU with an intermediate result calculated by the ML model instead of input data of the ML model, thereby reducing a risk of "data privacy exposure" and improving data security of the terminal device.

In addition, in a process of transmitting inference-related information (for example, the inference requirement information and all information about the first inference result), if the terminal device is handed over, that is, the terminal device is handed over from the first DU to the second DU, the terminal device receives the target inference result from the second DU. In this case, for a specific implementation process of the collaborative inference method in this embodiment of this application, refer to the processing steps shown in FIG. 8, FIG. 11, or FIG. 12. To be specific, the first DU performs a processing step of the first network device, and the second DU performs a processing step of the second network device. When the processing step shown in FIG. 12 is implemented, "the second DU provides the information about the first ML submodel to the terminal device" is specifically implemented as S1203 shown in a block diagram of a "handover scenario" in FIG. 12, that is, "the second DU provides the information about the first ML submodel to the terminal device by using the first DU".

It should be noted that when the first DU sends related information (for example, the information about the target ML submodel, the first partial information about the first inference result, all information about the first inference result, the second inference result, and the target inference result) to the second DU, a specific implementation may be, for example, but is not limited to, the following two manners:
Manner 1: The first DU directly sends related information to the second DU. Correspondingly, the second DU directly receives the related information from the first DU.
Manner 2: The first DU sends related information to the second DU by using the target unit. Correspondingly, the second DU receives the related information from the first DU by using the target unit.

When the first DU provides the related information to the target unit, the target unit sends the related information to the second DU. Using an example in which the target unit is implemented as a CU, if the first DU and the second DU correspond to a same CU, that is, both the first DU and the second DU have interfaces connected to the same CU, the first DU sends related information to the target unit through an F1 interface. After receiving the related information, the target unit sends the related information to the second DU through the F1 interface. If the first DU and the second DU correspond to different CUs, that is, the first DU corresponds to a first CU, and the second DU corresponds to a second CU, the first DU sends the related information to the first CU through the F1 interface, the first CU sends the related information to the second CU through the Xn interface, and the second CU sends the related information to the second DU through the F1 interface.

Further, in the case of Manner 2, using the scenario shown in FIG. 8 or FIG. 11 as an example, in a process of sending the second target indication information by the target unit to the second DU, the second target indication information may be carried in a UE context setup request message. The UE context setup request message is for requesting the second DU to set up a context of the terminal device. Optionally, after the second DU completes a context setup process, the second DU sends a UE context setup response message to the target unit. Using the scenario shown in FIG. 12 as an example, in a process of sending the inference requirement information by the target unit to the second DU, the inference requirement information may be carried in the UE context setup request message. After the second DU completes a context setup process, the second DU sends a UE context setup response message to the target unit. The information about the first ML submodel may be carried in the UE context setup response message

On the contrary, when the second DU sends the related information (for example, the model information 1, the model information 2, and the information about the first ML submodel) to the first DU, a specific implementation may be, for example, but is not limited to, the following two manners. That is, the second DU directly sends the related information to the first DLT. Alternatively, the second DU sends the related information to the first DU by using the target unit.

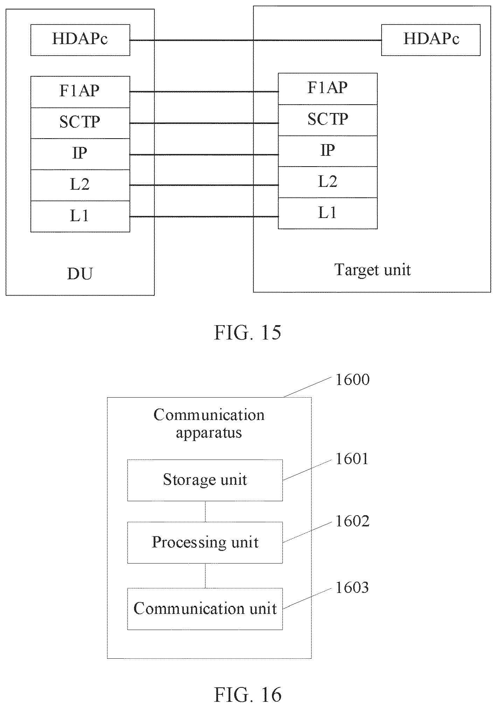

In the foregoing steps, when the target unit is implemented as a DAM unit, the DAM unit may transmit information with the first DU (or the second DU), may transmit information with the first DU (or the second DU) by using a CU, or may transmit information with the first DU (or the second DU) by using a CU-CP. The target unit and the first DU (or the second DU) may transmit related information by using an existing protocol stack, or may transmit related information by using a protocol stack shown in FIG. 15. For example, a message between the target unit and the first DU (or the second DU) is carried in a high data analytics protocol type c (high data analytics protocol type c, HDAPc) message. The HDAPc protocol supports functions such as computing data transmission (for example, data partitioning and data sorting) and computing data security (for example, data integrity protection, data encryption, and data decryption) between the target unit and the first DU (or the second DU). The HDAPc message may be carried in an FlAP message.

FIG. 15 shows a communication protocol stack between a DU and a target unit. The protocol stack is for transmitting related information of an inference operation between the DU and the target unit. The protocol stack mainly includes an HDAPc layer, an F1 application protocol (Fl application protocol, FlAP) layer, an SCTP layer, an IP layer, an L2 layer, and an L1 layer.

The foregoing mainly describes the solutions provided in embodiments of this application from a perspective of interaction between network elements. Correspondingly, embodiments of this application further provide a communication apparatus. The communication apparatus may be the network element in the foregoing method embodiments, or an apparatus including the foregoing network element, or a component that can be used in the network element. It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

FIG. 16 is a schematic diagram of a structure of a communication apparatus 1600. The communication apparatus 1600 includes a communication unit 1603 and a processing unit 1602.

In a process of interaction between a terminal device and a network device, using an example in which the communication apparatus 1600 is the terminal device in FIG. 4 (FIG. 8, FIG. 11, or FIG. 12) in the foregoing method embodiments, the processing unit 1602 is configured to determine a first inference result based on a first machine learning ML submodel. The first ML submodel is a part of an ML model. The communication unit 1603 is configured to send the first inference result. The communication unit 1603 is further configured to receive a target inference result. The target inference result is an inference result that is of the ML model and that is determined based on the first inference result.

In a possible design, when the communication apparatus 1600 accesses a first network device before determining the first inference result, the communication unit 1603 is specifically configured to: send all information about the first inference result to the first network device, and receive the target inference result from the first network device, where the target inference result is an inference result that is of the ML model and that is determined based on all the information about the first inference result.

In a possible design, the communication unit 1603 is further configured to: receive information about the first ML submodel from the first network device.

In a possible design, the information about the first ML submodel includes first target indication information. The communication unit 1603 is further configured to: receive first model information from the first network device, where the first model information includes a correspondence between first candidate indication information and a first segmentation location, and at least one piece of first candidate indication information and at least one first segmentation location are provided; and one piece of first candidate indication information indicates to segment the ML model, and a location at which the ML model is segmented is a first segmentation location that has a correspondence with the one piece of first candidate indication information. The processing unit 1602 is further configured to determine the first ML submodel based on the first target indication information and the correspondence between the first candidate indication information and the first segmentation location.

In a possible design, the communication unit 1603 is further configured to: send inference requirement information to the first network device, where the inference requirement information includes information about a time at which the communication apparatus 1600 obtains the target inference result; and the inference requirement information is for determining the information about the first ML submodel.

In a possible design, when the communication apparatus 1600 accesses a first network device before sending the first inference result, and accesses a second network device in a process of sending the first inference result by the communication apparatus 1600, the communication unit 1603 is specifically configured to: send first partial information about the first inference result to the first network device, and send second partial information about the first inference result to the second network device. The communication unit 1603 is specifically configured to: receive the target inference result from the second network device, where the target inference result is an inference result that is of the ML model and that is determined based on the first partial information and the second partial information.

In a possible design, when the communication apparatus 1600 accesses a first network device before sending the first inference result, and the communication apparatus 1600 accesses a second network device after sending the first inference result and before receiving the target inference result, the communication unit 1603 is specifically configured to: send all information about the first inference result to the first network device, and receive the target inference result from the second network device, where the target inference result is an inference result that is of the ML model and that is determined based on all the information about the first inference result.

In a possible design, when the communication apparatus 1600 accesses a second network device before sending the first inference result, the communication unit 1603 is specifically configured to: send all information about the first inference result to the second network device, and receive the target inference result from the second network device, where the target inference result is an inference result that is of the ML model and that is determined based on all the information about the first inference result.

In a possible design, when the communication apparatus 1600 accesses a first network device before determining the first inference result, the communication unit 1603 is further configured to: receive information about the first ML submodel from the first network device.

In a possible design, the information about the first ML submodel includes first target indication information. The communication unit 1603 is further configured to: receive first model information from the first network device, where the first model information includes a correspondence between first candidate indication information and a first segmentation location; at least one piece of first candidate indication information and at least one first segmentation location are provided; and one piece of first candidate indication information indicates to segment the ML model, and a location at which the ML model is segmented is a first segmentation location that has a correspondence with the one piece of first candidate indication information. The processing unit 1602 is further configured to determine the first ML submodel based on the first target indication information and the correspondence between the first candidate indication information and the first segmentation location.

In a possible design, the communication unit 1603 is further configured to: send inference requirement information to the first network device, where the inference requirement information includes information about a time at which the communication apparatus 1600 obtains the target inference result; and the inference requirement information is for determining the information about the first ML submodel.

In a possible design, when the communication apparatus 1600 accesses a second network device before determining the first inference result, the communication unit 1603 is specifically configured to: send all information about the first inference result to the second network device, and receive the target inference result from the second network device, where the target inference result is an inference result that is of the ML model and that is determined based on all the information about the first inference result.

In a possible design, the communication unit 1603 is further configured to: receive information about the first ML submodel from the first network device. A target network device is the first network device or the second network device.

In a possible design, the information about the first ML submodel includes first target indication information. The communication unit 1603 is further configured to: receive first model information from the first network device, where the first model information includes a correspondence between first candidate indication information and a first segmentation location; at least one piece of first candidate indication information and at least one first segmentation location are provided; and one piece of first candidate indication information indicates to segment the ML model, and a location at which the ML model is segmented is a first segmentation location that has a correspondence with the one piece of first candidate indication information. The processing unit 1602 is further configured to determine the first ML submodel based on the first target indication information and the correspondence between the first candidate indication information and the first segmentation location.

In a possible design, the communication unit 1603 is further configured to: receive information about the first ML submodel from the second network device. A target network device is the first network device or the second network device.

In a possible design, the information about the first ML submodel includes first target indication information. The communication unit 1603 is further configured to: receive first model information from the second network device, where the first model information includes a correspondence between first candidate indication information and a first segmentation location; at least one piece of first candidate indication information and at least one first segmentation location are provided; and one piece of first candidate indication information indicates to segment the ML model, and a location at which the ML model is segmented is a first segmentation location that has a correspondence with the one piece of first candidate indication information. The processing unit 1602 is further configured to determine the first ML submodel based on the first target indication information and the correspondence between the first candidate indication information and the first segmentation location.

In a possible design, the communication unit 1603 is further configured to: send inference requirement information to the first network device, where the inference requirement information includes information about a time at which the communication apparatus 1600 obtains the target inference result; and the inference requirement information is for determining the information about the first ML submodel.

In a process of interaction between a terminal device and a network device, using an example in which the communication apparatus 1600 is the first network device in FIG. 8 or FIG. 11 in the foregoing method embodiments, the communication unit 1603 is configured to receive first inference information from the terminal device. The first inference information includes all information or partial information of a first inference result, the first inference result is an inference result of a first machine learning ML submodel, and the first ML submodel is a part of an ML model. The communication unit 1603 is further configured to send second inference information to the second network device. The second inference information is for determining a target inference result of the ML model, or the second inference information is the target inference result. The processing unit 1602 is configured to determine the second inference information based on the first inference information.

In a possible design, the processing unit 1602 is further configured to determine information about the first ML submodel. The communication unit 1603 is further configured to send the information about the first ML submodel to the terminal device.

In a possible design, the communication unit 1603 is further configured to receive inference requirement information from the terminal device. The inference requirement information includes an identifier of the ML model and information about a time at which the terminal device obtains the target inference result. The processing unit 1602 is specifically configured to determine the information about the first ML submodel based on the inference requirement information.

In a possible design, the information about the first ML submodel includes first target indication information. The communication unit 1603 is further configured to send first model information to the terminal device. The first model information includes a correspondence between first candidate indication information and a first segmentation location. At least one piece of first candidate indication information and at least one first segmentation location are provided; and one piece of first candidate indication information indicates to segment the ML model, and a location at which the ML model is segmented is a first segmentation location that has a correspondence with the one piece of first candidate indication information. The first model information and the first target indication information are used by the terminal device to determine the first ML submodel.

In a possible design, the first inference information includes all information about the first inference result; and the processing unit 1602 is further configured to determine the target inference result based on all information about the first inference result and the second ML submodel. The second inference information is the target inference result, and input data of the second ML submodel corresponds to output data of the first ML submodel.

In a possible design, the first inference information is the same as the second inference information. The communication unit 1603 is further configured to send information about the target ML submodel to the second network device. Input data of the target ML submodel corresponds to output data of the first ML submodel. The target ML submodel is used by the second network device to determine the target inference result.

In a possible design, the first inference information includes all information about the first inference result; and the processing unit 1602 is further configured to determine a second inference result based on all information about the first inference result and a second ML submodel. The second inference information is the second inference result, and input data of the second ML submodel corresponds to output data of the first ML submodel.

In a possible design, the communication unit 1603 is further configured to send information about the target ML submodel to the second network device. Input data of the target ML submodel corresponds to output data of the second ML submodel. The target ML submodel is used by the second network device to determine the target inference result.

In a possible design, the information about the target ML submodel includes second target indication information. The communication unit 1603 is further configured to receive second model information from the second network device. The second model information includes a correspondence between second candidate indication information and a second segmentation location. At least one piece of second candidate indication information and at least one second segmentation location are provided; and one piece of second candidate indication information indicates to segment the ML model, and a location at which the ML model is segmented is a second segmentation location that has a correspondence with the one piece of second candidate indication information. The processing unit 1602 is further configured to determine the second target indication information from the second candidate indication information based on the target ML submodel and the correspondence between the second candidate indication information and the second segmentation location.

In a process of interaction between a terminal device and a network device, using an example in which the communication apparatus 1600 is the first network device in FIG. 4, the second network device in FIG. 8, or the second network device in FIG. 11 in the foregoing method embodiments, the communication unit 1603 is configured to obtain third inference information. The third inference information is determined based on all information about a first inference result, the first inference result is an inference result obtained after an operation is performed based on a first machine learning ML submodel, and the first ML submodel is a part of an ML model. The communication unit 1603 is further configured to send a target inference result to a terminal device, where the target inference result is an inference result that is of the ML model and that is determined based on the third inference information. The processing unit 1602 is configured to determine the target inference result based on the third inference information.

In a possible design, when the terminal device accesses the communication apparatus 1600 before the communication apparatus 1600 obtains the third inference information, the third inference information is all information about the first inference result; and the communication unit 1603 is specifically configured to: receive all information about the first inference result from the terminal device. The processing unit 1602 is further configured to determine the target inference result based on all information about the first inference result and a target ML submodel, where input data of the target ML submodel corresponds to output data of the first ML submodel.

In a possible design, the communication unit 1603 is specifically configured to: send the information about the first ML submodel to the terminal device.

In a possible design, the communication unit 1603 is further configured to: receive inference requirement information from the terminal device, where the inference requirement information includes information about a time at which the terminal device obtains the target inference result. The processing unit 1602 is further configured to determine the information about the first ML submodel based on the inference requirement information.

In a possible design, when the terminal device accesses the communication apparatus 1600 in a process of obtaining the third inference information by the communication apparatus 1600, the third inference information is all information about the first inference result; and the communication unit 1603 is specifically configured to: receive first partial information about the first inference result from the terminal device, and receive second partial information about the first inference result from the first network device. The processing unit 1602 is further configured to determine the target inference result based on the first partial information, the second partial information, and a target ML submodel, where input data of the target ML submodel corresponds to output data of the first ML submodel.

In a possible design, when the terminal device accesses the communication apparatus 1600 after the communication apparatus 1600 obtains the third inference information, the third inference information is all information about the first inference result. The communication unit 1603 is specifically configured to: receive all information about the first inference result from the first network device. The processing unit 1602 is further configured to determine the target inference result based on all information about the first inference result and a target ML submodel, where input data of the target ML submodel corresponds to output data of the first ML submodel.

In a possible design, when the terminal device accesses the communication apparatus 1600 from a first network device before the communication apparatus 1600 obtains the third inference information, the third inference information is all information about the first inference result. The communication unit 1603 is specifically configured to: receive all information about the first inference result from the terminal device. The processing unit 1602 is further configured to determine the target inference result based on all information about the first inference result and a target ML submodel, where input data of the target ML submodel corresponds to output data of the first ML submodel.

In a possible design, the third inference information is a second inference result, the second inference result is an inference result that is of a second ML submodel and that is determined based on all the information about the first inference result, and input data of the second ML submodel corresponds to output data of the first ML submodel. The communication unit 1603 is specifically configured to: receive the second inference result from the first network device. The processing unit 1602 is further configured to determine the target inference result based on the second inference result and a target ML submodel, where input data of the target ML submodel corresponds to output data of the second ML submodel.

In a possible design, when the terminal device accesses the communication apparatus 1600 after the communication apparatus 1600 obtains the information about the target ML submodel, the communication unit 1603 is specifically configured to: receive information about the target ML submodel from the first network device.

In a possible design, the information about the target ML submodel includes second target indication information. The communication unit 1603 is further configured to: send second model information to the first network device, where the second model information includes a correspondence between second candidate indication information and a second segmentation location; at least one piece of second candidate indication information and at least one second segmentation location are provided; and one piece of second candidate indication information indicates to segment the ML model, and a location at which the ML model is segmented is a second segmentation location that has a correspondence with the one piece of second candidate indication information; and the second model information is used by the first network device to determine the second target indication information.

In a possible design, the third inference information is the target inference result. The communication unit 1603 is specifically configured to: receive the target inference result from the first network device.

In a possible design, in a process in which the communication apparatus 1600 sends the information about the first ML submodel, the communication unit 1603 is specifically configured to: send the information about the first ML submodel to the terminal device; or send the information about the first ML submodel to the first network device.

In a possible design, the communication unit 1603 is further configured to: receive inference requirement information from the first network device, where the inference requirement information includes information about a time at which the terminal device obtains the target inference result. The processing unit 1602 is further configured to determine the information about the first ML submodel based on the inference requirement information.

In a scenario in which the access network device is implemented as a segmentation architecture, using an example in which the communication apparatus 1600 is the terminal device in FIG. 4 in the foregoing method embodiments, the processing unit 1602 is configured to determine a first inference result based on a first machine learning ML submodel. The first ML submodel is a part of an ML model. The communication unit 1603 is configured to send the first inference result. The communication unit 1603 is further configured to receive a target inference result. The target inference result is an inference result that is of the ML model and that is determined based on the first inference result.

In a possible design, when the communication apparatus 1600 accesses a first DU before determining the first inference result, the communication unit 1603 is specifically configured to: send all information about the first inference result to the first DU, and receive the target inference result from the first DU, where the target inference result is an inference result that is of the ML model and that is determined based on all the information about the first inference result.

In a possible design, the communication unit 1603 is further configured to: receive information about the first ML submodel from the first DU.

In a possible design, the information about the first ML submodel includes first target indication information. The communication unit 1603 is further configured to: receive first model information from the first DU, where the first model information includes a correspondence between first candidate indication information and a first segmentation location; at least one piece of first candidate indication information and at least one first segmentation location are provided; and one piece of first candidate indication information indicates to segment the ML model, and a location at which the ML model is segmented is a first segmentation location that has a correspondence with the one piece of first candidate indication information. The processing unit 1602 is further configured to determine the first ML submodel based on the first target indication information and the correspondence between the first candidate indication information and the first segmentation location.

In a possible design, the communication unit 1603 is further configured to: send inference requirement information to the first DU, where the inference requirement information includes information about a time at which the communication apparatus 1600 obtains the target inference result; and the inference requirement information is for determining the information about the first ML submodel.

In a possible design, when the communication apparatus 1600 accesses a first DU before sending the first inference result, and accesses a second DU in a process in which the communication apparatus 1600 sends the first inference result, the communication unit 1603 is specifically configured to: send first partial information about the first inference result to the first DU, and send second partial information about the first inference result to the second DU. The communication unit 1603 is specifically configured to: receive the target inference result from the second DU, where the target inference result is an inference result that is of the ML model and that is determined based on the first partial information and the second partial information.

In a possible design, when the communication apparatus 1600 accesses a first DU before sending the first inference result, and the communication apparatus 1600 accesses a second DU after sending the first inference result and before receiving the target inference result, the communication unit 1603 is specifically configured to: send all information about the first inference result to the first DU, and receive the target inference result from the second DU, where the target inference result is an inference result that is of the ML model and that is determined based on all the information about the first inference result.

In a possible design, when the communication apparatus 1600 accesses a second DU before sending the first inference result, the communication unit 1603 is specifically configured to: send all information about the first inference result to the second DU, and receive the target inference result from the second DU, where the target inference result is an inference result that is of the ML model and that is determined based on all the information about the first inference result.

In a possible design, when the communication apparatus 1600 accesses a first DU before determining the first inference result, the communication unit 1603 is further configured to: receive information about the first ML submodel from the first DU.

In a possible design, the information about the first ML submodel includes first target indication information. The communication unit 1603 is further configured to: receive first model information from the first DU, where the first model information includes a correspondence between first candidate indication information and a first segmentation location; at least one piece of first candidate indication information and at least one first segmentation location are provided; and one piece of first candidate indication information indicates to segment the ML model, and a location at which the ML model is segmented is a first segmentation location that has a correspondence with the one piece of first candidate indication information. The processing unit 1602 is further configured to determine the first ML submodel based on the first target indication information and the correspondence between the first candidate indication information and the first segmentation location.

In a possible design, the communication unit 1603 is further configured to: send inference requirement information to the first DU, where the inference requirement information includes information about a time at which the communication apparatus 1600 obtains the target inference result; and the inference requirement information is for determining the information about the first ML submodel.

In a possible design, when the communication apparatus 1600 accesses a second DU before determining the first inference result, the communication unit 1603 is specifically configured to: send all information about the first inference result to the second DU, and receive the target inference result from the second DU, where the target inference result is an inference result that is of the ML model and that is determined based on all the information about the first inference result.

In a possible design, in a process of obtaining the information about the first ML submodel by the communication apparatus 1600, the communication unit 1603 is specifically configured to: receive information about the first ML submodel from the first DU.

In a possible design, the information about the first ML submodel includes first target indication information. The communication unit 1603 is further configured to: receive first model information from the first DU, where the first model information includes a correspondence between first candidate indication information and a first segmentation location; at least one piece of first candidate indication information and at least one first segmentation location are provided; and one piece of first candidate indication information indicates to segment the ML model, and a location at which the ML model is segmented is a first segmentation location that has a correspondence with the one piece of first candidate indication information. The processing unit 1602 is further configured to determine the first ML submodel based on the first target indication information and the correspondence between the first candidate indication information and the first segmentation location.

In a possible design, the communication unit 1603 is further configured to: send inference requirement information to the first DU, where the inference requirement information includes information about a time at which the communication apparatus 1600 obtains the target inference result; and the inference requirement information is for determining the information about the first ML submodel.

In a scenario in which the access network device is implemented as a segmentation architecture, using an example in which the communication apparatus 1600 is the first DU in the foregoing method embodiments when the first DU performs the steps of the first network device in FIG. 8 or FIG. 11, the communication unit 1603 is configured to receive first inference information from the terminal device. The first inference information includes all information or partial information of a first inference result, the first inference result is an inference result of a first machine learning ML submodel, and the first ML submodel is a part of an ML model. The communication unit 1603 is further configured to send second inference information to the second DU. The second inference information is for determining a target inference result of the ML model, or the second inference information is the target inference result. The processing unit 1602 is configured to determine the second inference information based on the first inference information.

In a possible design, the processing unit 1602 is further configured to determine information about the first ML submodel. The communication unit 1603 is further configured to send the information about the first ML submodel to the terminal device.

In a possible design, the communication unit 1603 is further configured to receive inference requirement information from the terminal device. The inference requirement information includes an identifier of the ML model and information about a time at which the terminal device obtains the target inference result. The processing unit 1602 is specifically configured to determine the information about the first ML submodel based on the inference requirement information.

In a possible design, the information about the first ML submodel includes first target indication information. The communication unit 1603 is further configured to send first model information to the terminal device. The first model information includes a correspondence between first candidate indication information and a first segmentation location. At least one piece of first candidate indication information and at least one first segmentation location are provided; one piece of first candidate indication information indicates to segment the ML model, and a location at which the ML model is segmented is a first segmentation location that has a correspondence with the one piece of first candidate indication information; and the first model information and the first target indication information are used by the terminal device to determine the first ML submodel.

In a possible design, the first inference information includes all information about the first inference result; and the processing unit 1602 is further configured to determine the target inference result based on all information about the first inference result and the second ML submodel. The second inference information is the target inference result, and input data of the second ML submodel corresponds to output data of the first ML submodel.

In a possible design, the first inference information is the same as the second inference information. The communication unit 1603 is further configured to send information about the target ML submodel to the second DU. Input data of the target ML submodel corresponds to output data of the first ML submodel. The target ML submodel is used by the second DU to determine the target inference result.

In a possible design, the first inference information includes all information about the first inference result; and the processing unit 1602 is further configured to determine a second inference result based on all information about the first inference result and a second ML submodel. The second inference information is the second inference result, and input data of the second ML submodel corresponds to output data of the first ML submodel.

In a possible design, the communication unit 1603 is further configured to send information about the target ML submodel to the second DU. Input data of the target ML submodel corresponds to output data of the second ML submodel. The target ML submodel is used by the second DU to determine the target inference result.

In a possible design, the information about the target ML submodel includes second target indication information. The communication unit 1603 is further configured to receive second model information from the second DU. The second model information includes a correspondence between second candidate indication information and a second segmentation location. At least one piece of second candidate indication information and at least one second segmentation location are provided; and one piece of second candidate indication information indicates to segment the ML model, and a location at which the ML model is segmented is a second segmentation location that has a correspondence with the one piece of second candidate indication information. The processing unit 1602 is further configured to determine the second target indication information from the second candidate indication information based on the target ML submodel and the correspondence between the second candidate indication information and the second segmentation location.

Using an example in which the communication apparatus 1600 is the second DU in the foregoing method embodiments when the second DU performs the steps of the first network device in FIG. 4, the second network device in FIG. 8, or the second network device in FIG. 11, the communication unit 1603 is configured to obtain third inference information. The third inference information is determined based on all information about a first inference result, the first inference result is an inference result obtained after an operation is performed based on a first machine learning ML submodel, and the first ML submodel is a part of an ML model. The communication unit 1603 is further configured to send a target inference result to a terminal device, where the target inference result is an inference result that is of the ML model and that is determined based on the third inference information. The processing unit 1602 is configured to determine the target inference result based on the third inference information.

In a possible design, when the terminal device accesses the communication apparatus 1600 before the communication apparatus 1600 obtains the third inference information, the third inference information is all information about the first inference result; and the communication unit 1603 is specifically configured to: receive all information about the first inference result from the terminal device. The processing unit 1602 is further configured to determine the target inference result based on all information about the first inference result and a target ML submodel, where input data of the target ML submodel corresponds to output data of the first ML submodel.

In a possible design, the communication unit 1603 is specifically configured to: send the information about the first ML submodel to the terminal device.

In a possible design, the communication unit 1603 is further configured to: receive inference requirement information from the terminal device, where the inference requirement information includes information about a time at which the terminal device obtains the target inference result. The processing unit 1602 is further configured to determine the information about the first ML submodel based on the inference requirement information.

In a possible design, when the terminal device accesses the communication apparatus 1600 in a process of obtaining the third inference information by the communication apparatus 1600, the third inference information is all information about the first inference result; and the communication unit 1603 is specifically configured to: receive first partial information about the first inference result from the terminal device, and receive second partial information about the first inference result from the first DU. The processing unit 1602 is further configured to determine the target inference result based on the first partial information, the second partial information, and a target ML submodel, where input data of the target ML submodel corresponds to output data of the first ML submodel.

In a possible design, when the terminal device accesses the communication apparatus 1600 after the communication apparatus 1600 obtains the third inference information, the third inference information is all information about the first inference result. The communication unit 1603 is specifically configured to: receive all information about the first inference result from the first DLT. The processing unit 1602 is further configured to determine the target inference result based on all information about the first inference result and a target ML submodel, where input data of the target ML submodel corresponds to output data of the first ML submodel.

In a possible design, when the terminal device accesses the communication apparatus 1600 from a first network device before the communication apparatus 1600 obtains the third inference information, the third inference information is all information about the first inference result. The communication unit 1603 is specifically configured to: receive all information about the first inference result from the terminal device. The processing unit 1602 is further configured to determine the target inference result based on all information about the first inference result and a target ML submodel, where input data of the target ML submodel corresponds to output data of the first ML submodel.

In a possible design, the third inference information is a second inference result, the second inference result is an inference result that is of a second ML submodel and that is determined based on all the information about the first inference result, and input data of the second ML submodel corresponds to output data of the first ML submodel. The communication unit 1603 is specifically configured to: receive the second inference result from the first DU. The processing unit 1602 is further configured to determine the target inference result based on the second inference result and a target ML submodel, where input data of the target ML submodel corresponds to output data of the second ML submodel.

In a possible design, when the terminal device accesses the communication apparatus 1600 after the communication apparatus 1600 obtains the information about the target ML submodel, the communication unit 1603 is specifically configured to: receive information about the target ML submodel from the first DU.

In a possible design, the information about the target ML submodel includes second target indication information. The communication unit 1603 is further configured to: send second model information to the first DU, where the second model information includes a correspondence between second candidate indication information and a second segmentation location; at least one piece of second candidate indication information and at least one second segmentation location are provided; and one piece of second candidate indication information indicates to segment the ML model, and a location at which the ML model is segmented is a second segmentation location that has a correspondence with the one piece of second candidate indication information; and the second model information is used by the first DU to determine the second target indication information.

In a possible design, the third inference information is the target inference result. The communication unit 1603 is specifically configured to: receive the target inference result from the first DU.

In a possible design, in a process in which the communication apparatus 1600 sends the information about the first ML submodel, the communication unit 1603 is specifically configured to: send the information about the first ML submodel to the first DU.

In a possible design, the communication unit 1603 is further configured to: receive inference requirement information from the first DU, where the inference requirement information includes information about a time at which the terminal device obtains the target inference result. The processing unit 1602 is further configured to determine the information about the first ML submodel based on the inference requirement information.

All related content of the steps in the foregoing method embodiments may be cited in function descriptions of the corresponding functional modules. Details are not described herein again.

It should be understood that the processing unit 1602 in this embodiment of this application may be implemented by a processor or a processor-related circuit component, and the communication unit 1603 may be implemented by a transceiver or a transceiver-related circuit component.

In a possible implementation, an embodiment of this application provides a chip, where the chip includes a logic circuit and an input/output interface. The input/output interface is configured to communicate with a module other than the chip, and the logic circuit is configured to perform other operations different from receiving and sending operations on the terminal device in the foregoing method embodiments.

Using an example in which the chip is implemented as a function of the terminal device in FIG. 4 in the foregoing method embodiments, the input/output interface is configured to output information in S401 and S405 on the terminal device side, the input/output interface is further configured to input information in S403 and S407 on the terminal device side, and/or the input/output interface is further configured to perform other receiving and sending steps on the terminal device side in embodiments of this application. The logic circuit is configured to perform S404 on the terminal device side, and/or the logic circuit is further configured to perform other processing steps on the terminal device side in embodiments of this application.

Using another example in which the chip is implemented as a function of the terminal device in FIG. 8 in the foregoing method embodiments, the input/output interface is configured to output information in S802a and S802c on the terminal device side, the input/output interface is further configured to input information in S804 on the terminal device side, and/or the input/output interface is further configured to perform other receiving and sending steps on the terminal device side in embodiments of this application. The logic circuit is configured to perform other processing steps on the terminal device side.

Using still another example in which the chip is implemented as a function of the terminal device in FIG. 11 in the foregoing method embodiments, the input/output interface is configured to output information in S 1102 on the terminal device side, the input/output interface is further configured to input information in S 1104 on the terminal device side, and/or the input/output interface is further configured to perform other receiving and sending steps on the terminal device side in embodiments of this application. The logic circuit is configured to perform other processing steps on the terminal device side in embodiments of this application.

Using still another example in which the chip is implemented as a function of the terminal device in FIG. 12 in the foregoing method embodiments, the input/output interface is configured to input information in S1203, S1207, and S1208 on the terminal device side, the input/output interface is further configured to output information in S1205 on the terminal device side, and/or the input/output interface is further configured to perform other receiving and sending steps on the terminal device side in embodiments of this application. The logic circuit is configured to perform S1204 on the terminal device side, and/or the logic circuit is further configured to perform other processing steps on the terminal device side in embodiments of this application.

Using an example in which the chip is implemented as a function of the first network device in FIG. 4 in the foregoing method embodiments, the input/output interface is configured to input information in S401 and S405 on the first network device side, the input/output interface is further configured to output information in S403 and S407 on the first network device side, and/or the input/output interface is further configured to perform other receiving and sending steps on the first network device side in embodiments of this application. The logic circuit is configured to perform S402 and S406 on the first network device side, and/or the logic circuit is further configured to perform other processing steps on the first network device side in embodiments of this application.

Using another example in which the chip is implemented as a function of the first network device in FIG. 8 in the foregoing method embodiments, the input/output interface is configured to input information in S802a on the first network device side, the input/output interface is further configured to output information in S801 and S802b on the first network device side, and/or the input/output interface is further configured to perform other receiving and sending steps on the first network device side in embodiments of this application. The logic circuit is configured to perform other processing steps on the first network device side.

Using still another example in which the chip is implemented as a function of the first network device in FIG. 11 in the foregoing method embodiments, the input/output interface is configured to input information in S1102 on the first network device side, the input/output interface is further configured to output information in S1101 and S1103b on the first network device side, and/or the input/output interface is further configured to perform other receiving and sending steps on the first network device side in embodiments of this application. The logic circuit is configured to perform S1103a on the first network device side, and/or the logic circuit is further configured to perform other processing steps on the first network device side in embodiments of this application.

Using still another example in which the chip is implemented as a function of the first network device in FIG. 12 in the foregoing method embodiments, the input/output interface is configured to input information in S1203 on the first network device side, the input/output interface is configured to output information in S1201 and S1203 on the first network device side, and/or the input/output interface is further configured to perform other receiving and sending steps on the first network device side in embodiments of this application. The logic circuit is configured to perform other processing steps on the first network device side in embodiments of this application.

Using still another example in which the chip is implemented as a function of the second network device in FIG. 8 in the foregoing method embodiments, the input/output interface is configured to input information in S801, S802a, and S802b on the second network device side, the input/output interface is further configured to output information in S804 on the second network device side, and/or the input/output interface is further configured to perform other receiving and sending steps on the second network device side in embodiments of this application. The logic circuit is configured to perform S803 on the second network device side, and/or the logic circuit is further configured to perform other processing steps.

Using still another example in which the chip is implemented as a function of the second network device in FIG. 11 in the foregoing method embodiments, the input/output interface is configured to input information in S1101 and S1103b on the second network device side, the input/output interface is further configured to output information in S1104 on the second network device side, and/or the input/output interface is further configured to perform other receiving and sending steps on the second network device side in embodiments of this application. The logic circuit is configured to perform S1103c on the second network device side, and/or the logic circuit is further configured to perform other processing steps on the second network device side in embodiments of this application.

Using still another example in which the chip is implemented as a function of the second network device in FIG. 12 in the foregoing method embodiments, the input/output interface is configured to input information in S1201 and S1205 on the second network device side, the input/output interface is further configured to output information in S1203, S1207, and S1208 on the second network device side, and/or the input/output interface is further configured to perform other receiving and sending steps on the second network device side in embodiments of this application. The logic circuit is configured to perform S1202 and S1206 on the second network device side in embodiments of this application, and/or the logic circuit is further configured to perform other processing steps on the second network device side in embodiments of this application.

Optionally, the communication apparatus 1600 may further include a storage unit 1601, configured to store program code and data of the communication apparatus 1600. The data may include but is not limited to original data, intermediate data, or the like.

The processing unit 1602 may be a processor or a controller, for example, may be a central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof; and may implement or execute various example logical blocks, modules, and circuits described with reference to content disclosed in this application. Alternatively, the processor may be a combination of processors implementing a computing function, for example, a combination of one or more microprocessors, or a combination of the DSP and a microprocessor.

The communication unit 1603 may be a communication interface, a transceiver, a transceiver circuit, or the like. The communication interface is a collective name. During specific implementation, the communication interface may include a plurality of interfaces, for example, may include an interface between a first access network device and a second access network device, and/or another interface.

The storage unit 1601 may be a memory.

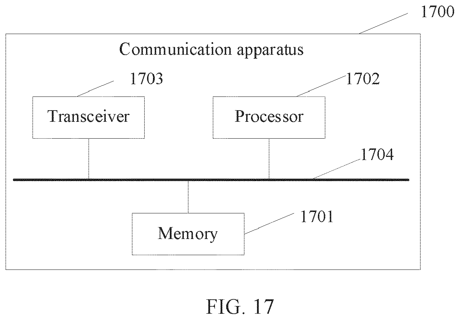

When the processing unit 1602 is a processor, the communication unit 1603 is a communication interface, and the storage unit 1601 is a memory, a communication apparatus 1700 in an embodiment of this application may be shown in FIG. 17.

Refer to FIG. 17. The communication apparatus 1700 includes a processor 1702, a transceiver 1703, and a memory 1701.

The transceiver 1703 may be an independently disposed transmitter, and the transmitter may be configured to send information to another device. Alternatively, the transceiver may be an independently disposed receiver, and is configured to receive information from another device. Alternatively, the transceiver may be a component integrating functions of sending and receiving information. A specific implementation of the transceiver is not limited in embodiments of this application.

Optionally, the communication apparatus 1700 may further include a bus 1704. The transceiver 1703, the processor 1702, and the memory 1701 may be connected to each other by using the bus 1704. The bus 1704 may be a peripheral component interconnect (peripheral component interconnect, PCI) bus, an extended industry standard architecture (extended industry standard architecture, EISA) bus, or the like. The bus 1704 may be classified into an address bus, a data bus, a control bus, and the like. For ease of representation, only one thick line is used to represent the bus in FIG. 17, but this does not mean that there is only one bus or only one type of bus.

A person of ordinary skill in the art may understand that all or some of the foregoing embodiments may be implemented by software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive (solid-state drive, SSD)), or the like.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The units described as separate parts may or may not be physically separate, and parts displayed as units may or may not be physical units, may be located in one position, or may be distributed on a plurality of network devices. Some or all of the units may be selected based on actual requirements to achieve the objectives of the solutions of embodiments.

In addition, function units in embodiments of this application may be integrated into one processing unit, or each of the function units may exist alone physically, or two or more units are integrated into one unit. The integrated unit may be implemented as hardware, or may be implemented as a combination of hardware and a software functional unit.

Based on the foregoing descriptions of the implementations, a person skilled in the art may clearly understand that this application may be implemented by software in addition to necessary universal hardware or by hardware only. In most circumstances, the former is a preferred implementation. Based on such an understanding, the technical solutions in this application essentially or the part contributing to the conventional technology may be implemented in a form of a software product. The computer software product is stored in a readable storage medium, such as a floppy disk, a hard disk or an optical disc of a computer, and includes several instructions for instructing a computer device (which may be a personal computer, a server, a network device, or the like) to perform the methods described in embodiments of this application.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A collaborative inference method, comprising:
determining, by a terminal device, a first inference result based on a first machine learning ML submodel, wherein the first ML submodel is a part of an ML model;
sending, by the terminal device, the first inference result; and
receiving, by the terminal device, a target inference result, wherein the target inference result is an inference result that is of the ML model and that is determined based on the first inference result.

2. The method according to claim 1, wherein when the terminal device accesses a first network device before determining the first inference result,the sending, by the terminal device, the first inference result comprises:
sending, by the terminal device, all information about the first inference result to the first network device; and
the receiving, by the terminal device, a target inference result comprises:
receiving, by the terminal device, the target inference result from the first network device, wherein the target inference result is an inference result that is of the ML model and that is determined based on all the information about the first inference result.

3. The method according to claim 2, further comprising:
receiving, by the terminal device, information about the first ML submodel from the first network device.

4. The method according to claim 3, wherein the information about the first ML submodel comprises first target indication information, and the method further comprises:
receiving, by the terminal device, first model information from the first network device, wherein the first model information comprises a correspondence between first candidate indication information and a first segmentation location; at least one piece of first candidate indication information and at least one first segmentation location are provided; and one piece of first candidate indication information indicates to segment the ML model, and a location at which the ML model is segmented is a first segmentation location that has a correspondence with the one piece of first candidate indication information; and
determining, by the terminal device, the first ML submodel based on the first target indication information and the correspondence between the first candidate indication information and the first segmentation location.

5. The method according to claim 3 or 4, further comprising:
sending, by the terminal device, inference requirement information to the first network device, wherein the inference requirement information comprises information about a time at which the terminal device obtains the target inference result; and the inference requirement information is for determining the information about the first ML submodel.

6. The method according to claim 1, wherein when the terminal device accesses a first network device before sending the first inference result, and accesses a second network device in a process of sending the first inference result by the terminal device,
the sending, by the terminal device, the first inference result comprises:
sending, by the terminal device, first partial information about the first inference result to the first network device; and
sending, by the terminal device, second partial information about the first inference result to the second network device; and
the receiving, by the terminal device, a target inference result comprises:
receiving, by the terminal device, the target inference result from the second network device, wherein the target inference result is an inference result that is of the ML model and that is determined based on the first partial information and the second partial information.

7. The method according to claim 1, wherein when the terminal device accesses a first network device before sending the first inference result, and the terminal device accesses a second network device after sending the first inference result and before receiving the target inference result,
the sending, by the terminal device, the first inference result comprises:
sending, by the terminal device, all information about the first inference result to the first network device; and
the receiving, by the terminal device, a target inference result comprises:
receiving, by the terminal device, the target inference result from the second network device, wherein the target inference result is an inference result that is of the ML model and that is determined based on all the information about the first inference result.

8. The method according to claim 1, wherein when the terminal device accesses a second network device before sending the first inference result,
the sending, by the terminal device, the first inference result comprises:
sending, by the terminal device, all information about the first inference result to the second network device; and
the receiving, by the terminal device, a target inference result comprises:
receiving, by the terminal device, the target inference result from the second network device, wherein the target inference result is an inference result that is of the ML model and that is determined based on all the information about the first inference result.

9. The method according to any one of claims 6 to 8, wherein when the terminal device accesses the first network device before determining the first inference result, the method further comprises:
receiving, by the terminal device, information about the first ML submodel from the first network device.

10. The method according to claim 9, wherein the information about the first ML submodel comprises first target indication information; and the method further comprises:
receiving, by the terminal device, first model information from the first network device, wherein the first model information comprises a correspondence between first candidate indication information and a first segmentation location; at least one piece of first candidate indication information and at least one first segmentation location are provided; and one piece of first candidate indication information indicates to segment the ML model, and a location at which the ML model is segmented is a first segmentation location that has a correspondence with the one piece of first candidate indication information; and
determining, by the terminal device, the first ML submodel based on the first target indication information and the correspondence between the first candidate indication information and the first segmentation location.

11. The method according to claim 9 or 10, further comprising:
sending, by the terminal device, inference requirement information to the first network device, wherein the inference requirement information comprises information about a time at which the terminal device obtains the target inference result; and the inference requirement information is for determining the information about the first ML submodel.

12. The method according to claim 1, wherein when the terminal device accesses a second network device before determining the first inference result,
the sending, by the terminal device, the first inference result comprises:
sending, by the terminal device, all information about the first inference result to the second network device; and
the receiving, by the terminal device, a target inference result comprises:
receiving, by the terminal device, the target inference result from the second network device, wherein the target inference result is an inference result that is of the ML model and that is determined based on all the information about the first inference result.

13. The method according to claim 12, wherein when the terminal device is handed over from a first network device to the second network device, the method further comprises:
receiving, by the terminal device, information about the first ML submodel from the first network device.

14. The method according to claim 13, wherein the information about the first ML submodel comprises first target indication information; and the method further comprises:
receiving, by the terminal device, first model information from the first network device, wherein the first model information comprises a correspondence between first candidate indication information and a first segmentation location; at least one piece of first candidate indication information and at least one first segmentation location are provided; and one piece of first candidate indication information indicates to segment the ML model, and a location at which the ML model is segmented is a first segmentation location that has a correspondence with the one piece of first candidate indication information; and
determining, by the terminal device, the first ML submodel based on the first target indication information and the correspondence between the first candidate indication information and the first segmentation location.

15. The method according to claim 12, wherein when the terminal device accesses the second network device based on a radio resource control RRC connection reestablishment process or an RRC connection resume process, the method further comprises:
receiving, by the terminal device, information about the first ML submodel from the second network device.

16. The method according to claim 15, wherein the information about the first ML submodel comprises first target indication information; and the method further comprises:
receiving, by the terminal device, first model information from the second network device, wherein the first model information comprises a correspondence between first candidate indication information and a first segmentation location; at least one piece of first candidate indication information and at least one first segmentation location are provided; and one piece of first candidate indication information indicates to segment the ML model, and a location at which the ML model is segmented is a first segmentation location that has a correspondence with the one piece of first candidate indication information; and
determining, by the terminal device, the first ML submodel based on the first target indication information and the correspondence between the first candidate indication information and the first segmentation location.

17. The method according to any one of claims 13 to 16, further comprising:
sending, by the terminal device, inference requirement information to the first network device, wherein the inference requirement information comprises information about a time at which the terminal device obtains the target inference result; and the inference requirement information is for determining the information about the first ML submodel, and the first network device is a network device accessed by the terminal device before the terminal device accesses the second network device.

18. The method according to any one of claims 1 to 17, wherein input data of the first ML submodel is data generated by the terminal device.

19. A collaborative inference method, comprising:
receiving, by a first network device, first inference information from a terminal device, wherein the first inference information comprises all information or partial information of a first inference result, the first inference result is an inference result of a first machine learning ML submodel, and the first ML submodel is a part of an ML model; and
sending, by the first network device, second inference information to a second network device, wherein the second inference information is determined based on the first inference information, and the second inference information is for determining a target inference result of the ML model, or the second inference information is the target inference result.

20. The method according to claim 19, further comprising:
determining, by the first network device, information about the first ML submodel; and
sending, by the first network device, the information about the first ML submodel to the terminal device.

21. The method according to claim 20, further comprising:
receiving, by the first network device, inference requirement information from the terminal device, wherein the inference requirement information comprises information about a time at which the terminal device obtains the target inference result; and
the determining, by the first network device, information about the first ML submodel comprises:
determining, by the first network device, the information about the first ML submodel based on the inference requirement information.

22. The method according to claim 20 or 21, wherein the information about the first ML submodel comprises first target indication information; and the method further comprises:
sending, by the first network device, first model information to the terminal device, wherein the first model information comprises a correspondence between first candidate indication information and a first segmentation location; at least one piece of first candidate indication information and at least one first segmentation location are provided; one piece of first candidate indication information indicates to segment the ML model, and a location at which the ML model is segmented is a first segmentation location that has a correspondence with the one piece of first candidate indication information; and the first model information and the first target indication information are used by the terminal device to determine the first ML submodel.

23. The method according to any one of claims 19 to 22, wherein the first inference information comprises all information about the first inference result; and the method further comprises:
determining, by the first network device, the target inference result based on all information about the first inference result and a target ML submodel, wherein the second inference information is the target inference result, and input data of the target ML submodel corresponds to output data of the first ML submodel.

24. The method according to any one of claims 19 to 22, wherein the first inference information comprises all information about the first inference result; and the method further comprises:
determining, by the first network device, a second inference result based on all information about the first inference result and a second ML submodel, wherein the second inference information is the second inference result, and input data of the second ML submodel corresponds to output data of the first ML submodel.

25. The method according to claim 24, further comprising:
sending, by the first network device, information about a target ML submodel to the second network device, wherein
input data of the target ML submodel corresponds to output data of the second ML submodel; and the target ML submodel is used by the second network device to determine the target inference result.

26. The method according to any one of claims 19 to 22, wherein the first inference information is the same as the second inference information; and the method further comprises:
sending, by the first network device, information about a target ML submodel to the second network device, wherein
input data of the target ML submodel corresponds to output data of the first ML submodel; and the target ML submodel is used by the second network device to determine the target inference result.

27. The method according to claim 25 or 26, wherein the information about the target ML submodel comprises second target indication information; and the method further comprises:
receiving, by the first network device, second model information from the second network device, wherein the second model information comprises a correspondence between second candidate indication information and a second segmentation location; at least one piece of second candidate indication information and at least one second segmentation location are provided; and one piece of second candidate indication information indicates to segment the ML model, and a location at which the ML model is segmented is a second segmentation location that has a correspondence with the one piece of second candidate indication information; and
determining, by the first network device, the second target indication information from the second candidate indication information based on the target ML submodel and the correspondence between the second candidate indication information and the second segmentation location.

28. A collaborative inference method, comprising:
obtaining, by a second network device, third inference information, wherein the third inference information is determined based on all information about a first inference result, the first inference result is an inference result obtained after an operation is performed based on a first machine learning ML submodel, and the first ML submodel is a part of an ML model; and
sending, by the second network device, a target inference result to a terminal device, wherein the target inference result is an inference result that is of the ML model and that is determined based on the third inference information.

29. The method according to claim 28, wherein when the terminal device accesses the second network device before the second network device obtains the third inference information, the third inference information is all information about the first inference result; and the obtaining, by a second network device, third inference information comprises:
receiving, by the second network device, all information about the first inference result from the terminal device; and
the method further comprises:
determining, by the second network device, the target inference result based on all information about the first inference result and a target ML submodel, wherein input data of the target ML submodel corresponds to output data of the first ML submodel.

30. The method according to claim 29, wherein the sending, by the second network device, information about the first ML submodel comprises:
sending, by the second network device, information about the first ML submodel to the terminal device.

31. The method according to claim 30, further comprising:
receiving, by the second network device, inference requirement information from the terminal device, wherein the inference requirement information comprises information about a time at which the terminal device obtains the target inference result; and
determining, by the second network device, the information about the first ML submodel based on the inference requirement information.

32. The method according to claim 28, wherein when the terminal device accesses the second network device in a process of obtaining the third inference information by the second network device, the third inference information is all information about the first inference result; and the obtaining, by a second network device, third inference information comprises:
receiving, by the second network device, first partial information about the first inference result from the terminal device; and
receiving, by the second network device, second partial information about the first inference result from a first network device; and
the method further comprises:
determining, by the second network device, the target inference result based on the first partial information, the second partial information, and a target ML submodel, wherein input data of the target ML submodel corresponds to output data of the first ML submodel.

33. The method according to claim 28, wherein when the terminal device accesses the second network device after the second network device obtains the third inference information, the third inference information is all information about the first inference result; and the obtaining, by a second network device, third inference information comprises:
receiving, by the second network device, all information about the first inference result from a first network device; and
the method further comprises:
determining, by the second network device, the target inference result based on all information about the first inference result and a target ML submodel, wherein input data of the target ML submodel corresponds to output data of the first ML submodel.

34. The method according to claim 28, wherein when the terminal device accesses the second network device from a first network device before the second network device obtains the third inference information, the third inference information is all information about the first inference result; and the obtaining, by a second network device, third inference information comprises:
receiving, by the second network device, all information about the first inference result from the terminal device; and
the method further comprises:
determining, by the second network device, the target inference result based on all information about the first inference result and a target ML submodel, wherein input data of the target ML submodel corresponds to output data of the first ML submodel.

35. The method according to claim 28, wherein the third inference information is a second inference result, the second inference result is an inference result that is of a second ML submodel and that is determined based on all the information about the first inference result, and input data of the second ML submodel corresponds to output data of the first ML submodel;
the obtaining, by a second network device, third inference information comprises:
receiving, by the second network device, the second inference result from a first network device; and
the method further comprises:
determining, by the second network device, the target inference result based on the second inference result and a target ML submodel, wherein input data of the target ML submodel corresponds to output data of the second ML submodel.

36. The method according to any one of claims 32 to 35, wherein when the terminal device accesses the second network device after the second network device obtains information about the target ML submodel, that the second network device obtains the information about the target ML submodel comprises:
receiving, by the second network device, the information about the target ML submodel from the first network device.

37. The method according to claim 36, wherein the information about the target ML submodel comprises second target indication information; and the method further comprises:
sending, by the second network device, second model information to the first network device, wherein the second model information comprises a correspondence between second candidate indication information and a second segmentation location; at least one piece of second candidate indication information and at least one second segmentation location are provided; and one piece of second candidate indication information indicates to segment the ML model, and a location at which the ML model is segmented is a second segmentation location that has a correspondence with the one piece of second candidate indication information; and the second model information is used by the first network device to determine the second target indication information.

38. The method according to claim 28, wherein the third inference information is the target inference result; and
the obtaining, by a second network device, third inference information comprises:
receiving, by the second network device, the target inference result from a first network device.

39. The method according to claim 34, further comprising:
sending, by the second network device, information about the first ML submodel to the terminal device; or
sending, by the second network device, information about the first ML submodel to the first network device.

40. The method according to claim 39, further comprising:
receiving, by the second network device, inference requirement information from the first network device, wherein the inference requirement information comprises information about a time at which the terminal device obtains the target inference result; and
determining, by the second network device, the information about the first ML submodel based on the inference requirement information.

41. A communication apparatus, wherein the communication apparatus comprises units configured to perform the steps according to any one of claims 1 to 18;
the communication apparatus comprises units configured to perform the steps according to any one of claims 19 to 27; or
the communication apparatus comprises units configured to perform the steps according to any one of claims 28 to 40.

42. A communication apparatus, comprising a processor and a memory, wherein the processor is coupled to the memory, the memory stores program instructions, and when the program instructions stored in the memory are executed by the processor, the collaborative inference method according to any one of claims 1 to 18 is implemented, the collaborative inference method according to any one of claims 19 to 27 is implemented, or the collaborative inference method according to any one of claims 28 to 40 is implemented.

43. A chip, wherein the chip comprises a logic circuit and an input/output interface, the input/output interface is configured to communicate with a module other than the chip, and the logic circuit is configured to run a computer program or instructions to implement the collaborative inference method according to any one of claims 1 to 18, implement the collaborative inference method according to any one of claims 19 to 27, or implement the collaborative inference method according to any one of claims 28 to 40.

44. A computer-readable storage medium, wherein the computer-readable storage medium stores a program, and when the program is invoked by a processor, the collaborative inference method according to any one of claims 1 to 18 is performed;
the collaborative inference method according to any one of claims 19 to 27 is performed; or
the collaborative inference method according to any one of claims 28 to 40 is performed.
